# EUROPEAN PATENT APPLICATION

(11) **EP 3 763 447 A1**
(43) Date of publication of application: **13.01.2021**
(21) Application number: 20193469.2
(22) Date of filing: 06.07.2018
(51) Int. Cl.: B07B 1/46, B01D 29/01

(54) **INJECTED MOLDED SCREENING APPARATUS AND METHODS**

(30) Priority: 21.12.2017 US 201715851099; 27.03.2018 US 201862648771 P; 27.04.2018 US 201815965195
(62) Divisional of application: 18745796.5
(71) Applicant: Derrick Corporation, Buffalo, NY 14225 (US)
(72) Inventor: WOJCIECHOWSKI, Keith, Lakeview, NY New York 14085 (US)
(74) Representative: Boult Wade Tennant LLP

(57) **Abstract**

Screening assemblies (10), methods for fabricating screening assemblies and methods for screening materials are provided for vibratory screening machines that incorporate the use of injection molded materials. Use of injection molded screen elements (16) provide, inter alia, for: varying screening surface configurations; fast and relatively simple screen assembly fabrication; and a combination of outstanding screen assembly mechanical and electrical properties, including toughness, wear and chemical resistance. Embodiments of the present invention use a thermoplastic injection molded material.

## Description

### CROSS-REFERENCE TO RELATED APPLICATIONS

The present application claims priority to U.S. Patent Application No. 15,965,195, filed April 27, 2018, which claims priority to U.S. Provisional Application No. 62/648,771, filed March 27, 2018, and is also a continuation-in-part of U.S. Patent Application No. 15/851,099, filed December 21, 2017, which is a divisional of U.S. Patent Application No. 15/201,865, filed July 5, 2016, now U.S. Patent No. 9,884,344, which is a continuation of U.S. Patent Application No. 14/268,101, filed May 2, 2014, now U.S. Patent No. 9,409,209, which is a continuation-in-part of U.S. Patent Application No. 13/800,826, filed March 13, 2013, which claims the benefit of U.S. Provisional Patent Application Serial Nos. 61/714,882 filed October 17, 2012 and 61/652,039 filed May 25, 2012, the entire contents of each of which is incorporated herein by reference.

### FIELD

The present disclosure relates generally to material screening. More particularly, the present disclosure relates to screening members, screening assemblies, methods for fabricating screening members and assemblies and methods for screening materials.

### BACKGROUND

Material screening includes the use of vibratory screening machines. Vibratory screening machines provide the capability to excite an installed screen such that materials placed upon the screen may be separated to a desired level. Oversized materials are separated from undersized materials. Over time, screens wear and require replacement. As such, screens are designed to be replaceable.

Replacement screen assemblies must be securely fastened to a vibratory screening machine and are subjected to large vibratory forces. Replacement screens may be attached to a vibratory screening machine by tensioning members, compression members or clamping members.

Replacement screen assemblies are typically made of metal or a thermoset polymer. The material and configuration of the replacement screens are specific to a screening application. For example, due to their relative durability and capacity for fine screening, metal screens are frequently used for wet applications in the oil and gas industry. Traditional thermoset polymer type screens (e.g., molded polyurethane screens), however, are not as durable and would likely not withstand the rough conditions of such wet applications and are frequently utilized in dry applications, such as applications in the mining industry.

Fabricating thermoset polymer type screens is relatively complicated, time consuming and prone to errors. Typical thermoset type polymer screens that are used with vibratory screening machines are fabricated by combining separate liquids (e.g., polyester, polyether and a curative) that chemically react and then allowing the mixture to cure over a period of time in a mold. When fabricating screens with fine openings, e.g., approximately 43 microns to approximately 100 microns, this process can be extremely difficult and time consuming. Indeed, to create fine openings in a screen, the channels in the molds that the liquid travels through have to be very small (e.g., on the order of 43 microns) and all too often the liquid does not reach all the cavities in the mold. As a result, complicated procedures are often implemented that require close attention to pressures and temperatures. Since a relatively large single screen (e.g., two feet by three feet or larger) is made in a mold, one flaw (e.g., a hole, i.e., a place where the liquid did not reach) will ruin the entire screen. Thermoset polymer screens are typically fabricated by molding an entire screen assembly structure as one large screening piece and the screen assembly may have openings ranging from approximately 43 microns to approximately 4000 microns in size. The screening surface of conventional thermoset polymer screens normally have a uniform flat configuration.

Thermoset polymer screens are relatively flexible and are often secured to a vibratory screening machine using tensioning members that pull the side edges of the thermoset polymer screen away from each other and secure a bottom surface of the thermoset polymer screen against a surface of a vibratory screening machine. To prevent deformation when being tensioned, thermoset polymer assemblies may be molded with aramid fibers that run in the tensioning direction (see, e.g., U.S. Patent No. 4,819,809). If a compression force were applied to the side edges of the typical thermoset polymer screens it would buckle or crimp, thereby rendering the screening surface relatively ineffective.

In contrast to thermoset polymer screens, metal screens are rigid and may be compressed or tensioned onto a vibratory screening machine. Metal screen assemblies are often fabricated from multiple metal components. The manufacture of metal screen assemblies typically includes: fabricating a screening material, often three layers of a woven wire mesh; fabricating an apertured metal backing plate; and bonding the screening material to apertured metal backing plate. The layers of wire cloth may be finely woven with openings in the range of approximately 30 microns to approximately 4000 microns. The entire screening surface of conventional metal assemblies is normally a relatively uniform flat configuration or a relatively uniform corrugated configuration.

Critical to screening performance of screen assemblies (thermoset polymer assemblies and metal type assemblies) for vibratory screening machines are the size of the openings in the screening surface, structural stability and durability of the screening surface, structural stability of the entire unit, chemical properties of the components of the unit and ability of the unit to perform in various temperatures and environments. Drawbacks to conventional metal assemblies include lack of structural stability and durability of the screening surface formed by the woven wire mesh layers, blinding (plugging of screening openings by particles) of the screening surface, weight of the overall structure, time and cost associated with the fabrication or purchase of each of the component members, and assembly time and costs. Because wire cloth is often outsourced by screen manufacturers, and is frequently purchased from weavers or wholesalers, quality control can be extremely difficult and there are frequently problems with wire cloth. Flawed wire cloth may result in screen performance problems and constant monitoring and testing is required.

One of the biggest problems with conventional metal assemblies is blinding. A new metal screen may initially have a relatively large open screening area but over time, as the screen is exposed to particles, screening openings plug (i.e., blind) and the open screening area, and effectiveness of the screen itself, is reduced relatively quickly. For example, a 140 mesh screen assembly (having three layers of screen cloth) may have an initial open screening area of 20-24%. As the screen is used, however, the open screening area may be reduced by 50% or more.

Conventional metal screen assemblies also lose large amounts of open screening area because of their construction, which includes adhesives, backing plates, plastic sheets bonding layers of wire cloth together, etc.

Another major problem with conventional metal assemblies is screen life. Conventional metal assemblies don't typically fail because they get worn down but instead fail due to fatigue. That is, the wires of the woven wire cloth often actually break due to the up and down motion they are subject to during vibratory loading.

Drawbacks to conventional thermoset polymer screens also include lack of structural stability and durability. Additional drawbacks include inability to withstand compression type loading and inability to withstand high temperatures (e.g., typically a thermoset polymer type screen will begin to fail or experience performance problems at temperatures above 130°F, especially screens with fine openings, e.g., approximately 43 microns to approximately 100 microns). Further, as discussed above, fabrication is complicated, time consuming and prone to errors. Also, the molds used to fabricate thermoset polymer screens are expensive and any flaw or the slightest damage thereto will ruin the entire mold and require replacement, which may result in costly downtime in the manufacturing process.

Another drawback to both conventional metal and thermoset polymer screens is the limitation of screen surface configurations that are available. Existing screening surfaces are fabricated with relatively uniform opening sizes throughout and a relatively uniform surface configuration throughout, whether the screening surface is flat or undulating.

The conventional polymer type screens referenced in U.S. Provisional Application No. 61/652,039 (also referred to therein as traditional polymer screens, existing polymer screens, typical polymer screens or simply polymer screens) refer to the conventional thermoset polymer screens described in U.S. Provisional Patent Application Serial No. 61/714,882 and the conventional thermoset polymer screens described herein (also referred to herein and in U.S. Provisional Patent Application Serial No. 61/714,882 as traditional thermoset polymer screens, existing thermoset polymer screens, typical thermoset polymer screens or simply thermoset screens). Accordingly, the conventional polymer type screens referenced in U.S. Provisional Application No. 61/652,039 are the same conventional thermoset polymer screens referenced herein, and in U.S. Provisional Patent Application Serial No. 61/714,882, and may be fabricated with extremely small screening openings (as described herein and in U.S. Provisional Patent Application Serial No. 61/714,882) but have all the drawbacks (as described herein and in U.S. Provisional Patent Application Serial No. 61/714,882) regarding conventional thermoset polymer screens, including lack of structural stability and durability, inability to withstand compression type loading, inability to withstand high temperatures and complicated, time consuming, error prone fabrication methods.

There is a need for versatile and improved screening members, screening assemblies, methods for fabricating screening members and assemblies and methods for screening materials for vibratory screening machines that incorporate the use of injection molded materials (e.g., thermoplastics) having improved mechanical and chemical properties.

### SUMMARY

The present disclosure is an improvement over existing screen assemblies and methods for screening and fabricating screen assemblies and parts thereof. The present invention provides extremely versatile and improved screening members, screening assemblies, methods for fabricating screening members and assemblies and methods for screening materials for vibratory screening machines that incorporate the use of injection molded materials having improved properties, including mechanical and chemical properties. In certain embodiments of the present invention a thermoplastic is used as the injection molded material. The present invention is not limited to thermoplastic injection molded materials and in embodiments of the present invention other materials may be used that have similar mechanical and/or chemical properties. In embodiments of the present invention, multiple injection molded screen elements are securely attached to subgrid structures. The subgrids are fastened together to form the screen assembly structure, which has a screening surface including multiple screen elements. Use of injection molded screen elements with the various embodiments described herein provide, inter alia, for: varying screening surface configurations; fast and relatively simple screen assembly fabrication; and a combination of outstanding screen assembly mechanical, chemical and electrical properties, including toughness, wear and chemical resistance.

Embodiments of the present invention include screen assemblies that are configured to have relatively large open screening areas while having structurally stable small screening openings for fine vibratory screening applications. In embodiments of the present invention, the screening openings are very small (e.g., as small as approximately 43 microns) and the screen elements are large enough (e.g., one inch by one inch, one inch by two inches, two inches by three inches, etc.) to make it practical to assemble a complete screen assembly screening surface (e.g., two feet by three feet, three feet by four feet, etc.). Fabricating small screening openings for fine screening applications requires injection molding very small structural members that actually form the screening openings. These structural members are injection molded to be formed integrally with the screen element structure. Importantly, the structural members are small enough (e.g., in certain applications they may be on the order of approximately 43 microns in screening surface width) to provide an effective overall open screening area and form part of the entire screen element structure that is large enough (e.g., two inches by three inches) to make it practical to assemble a relatively large complete screening surface (e.g., two feet by three feet) therefrom.

In one embodiment of the present invention a thermoplastic material is injection molded to form screening elements. Previously thermoplastics have not been used with the fabrication of vibratory screens with fine size openings (e.g., approximately 43 microns to approximately 1000 microns) because it would be extremely difficult, if not impossible, to thermoplastic injection mold a single relatively large vibratory screening structure having fine openings and obtain the open screening area necessary for competitive performance in vibratory screening applications.

According to an embodiment of the present disclosure, a screen assembly is provided that: is structurally stable and can be subjected to various loading conditions, including compression, tensioning and clamping; can withstand large vibrational forces; includes multiple injection molded screen elements that, due to their relatively small size, can be fabricated with extremely small opening sizes (having dimensions as small as approximately 43 microns); eliminates the need for wirecloth; is lightweight; is recyclable; is simple and easy to assemble; can be fabricated in multiple different configurations, including having various screen opening sizes throughout the screen and having various screening surface configurations, e.g., various combinations of flat and undulating sections; and can be fabricated with application-specific materials and nanomaterials. Still further, each screen assembly may be customized to a specific application and can be simply and easily fabricated with various opening sizes and configurations depending on the specifications provided by an end user. Embodiments of the present disclosure may be applied to various applications, including wet and dry applications and may be applied across various industries. The present invention is not limited to the oil and gas industry and the mining industry. Disclosed embodiments may also be utilized in any industry that requires separation of materials using vibratory screenings machines, including pulp and paper, chemical, pharmaceuticals and others.

In an example embodiment of the present invention, a screen assembly is provided that substantially improves screening of materials using a thermoplastic injection molded screen element. Multiple thermoplastic polymer injection molded screen elements are securely attached to subgrid structures. The subgrids are fastened together to form the screen assembly structure, which has a screening surface including multiple screen elements. Each screen element and each subgrid may have different shapes and configurations. Thermoplastic injection molding individual screen elements allows for precise fabrication of screening openings, which may have dimensions as small as approximately 43 microns. The grid framework may be substantially rigid and may provide durability against damage or deformation under the substantial vibratory load burdens it is subjected to when secured to a vibratory screening machine. Moreover, the subgrids, when assembled to form the complete screen assembly, are strong enough not only to withstand the vibratory loading, but also the forces required to secure the screen assembly to the vibratory screening machine, including large compression loads, tension loads and/or clamping loads. Still further, the openings in the subgrids structurally support the screen elements and transfer vibrations from the vibratory screening machine to the elements forming the screening openings thereby optimizing screening performance. The screen elements, subgrids and/or any other component of the screen assembly may include nanomaterials and/or glass fibers that, in addition to other benefits, provide durability and strength.

According to an example embodiment of the present disclosure, a screen assembly is provided having a screen element including a screen element screening surface with a series of screening openings and a subgrid including multiple elongated structural members forming a grid framework having grid openings. The screen element spans at least one of the grid openings and is attached to a top surface of the subgrid. Multiple independent subgrids are secured together to form the screen assembly and the screen assembly has a continuous screen assembly screening surface having multiple screen element screening surfaces. The screen element includes substantially parallel end portions and substantially parallel side edge portions substantially perpendicular to the end portions. The screen element further includes a first screen element support member and a second screen element support member orthogonal to the first screen element support member. The first screen element support member extends between the end portions and is approximately parallel to the side edge portions. The second screen element support member extends between the side edge portions and is approximately parallel to the end portions. The screen element includes a first series reinforcement members substantially parallel to the side edge portions and a second series of reinforcement members substantially parallel to the end portions. The screen element screening surface includes screen surface elements forming the screening openings. The end portions, side edge portions, first and second support members and first and second series of reinforcement members structurally stabilize screen surface elements and screening openings. The screen element is formed as a single thermoplastic injection molded piece.

The screening openings may be rectangular, square, circular, and oval or any other shape. The screen surface elements may run parallel to the end portions and form the screening openings. The screen surface elements may also run perpendicular to the end portions and form the screen openings. Different combinations of rectangular, square, circular and oval screening openings (or other shapes) may be incorporated together and depending on the shape utilized may run parallel and/or perpendicular to the end portions.

The screen surface elements may run parallel to the end portions and may be elongated members forming the screening openings. The screening openings may be elongated slots having a distance of approximately 43 microns to approximately 4000 microns between inner surfaces of adjacent screen surface elements. In certain embodiments, the screen openings may have a distance of approximately 70 microns to approximately 180 microns between inner surfaces of adjacent screen surface elements. In other embodiments, the screening openings may have a distance of approximately 43 microns to approximately 106 microns between inner surfaces of adjacent screen surface elements. In embodiments of the present invention, the screening openings may have a width and a length, the width may be about 0.043 mm to about 4 mm and the length may be about 0.086 mm to about 43 mm. In certain embodiments, the width to length ratio may be approximately 1:2 to approximately 1: 1000.

Multiple subgrids of varying sizes may be combined to form a screen assembly support structure for screen elements. Alternatively, a single subgrid may be thermoplastic injection molded, or otherwise constructed, to form the entire screen assembly support structure for multiple individual screen elements.

In embodiments that use multiple subgrids, a first subgrid may include a first base member having a first fastener that mates with a second fastener of a second base member of a second subgrid, the first and second fasteners securing the first and second subgrids together. The first fastener may be a clip and the second fastener may be a clip aperture, wherein the clip snaps into the clip aperture and securely attaches the first and second subgrids together.

The first and second screen element support members and the screen element end portions may include a screen element attachment arrangement configured to mate with a subgrid attachment arrangement. The subgrid attachment arrangement may include elongated attachment members and the screen element attachment arrangement may include attachment apertures that mate with the elongated attachment members securely attaching the screen element to the subgrid. A portion of the elongated attachment members may be configured to extend through the screen element attachment apertures and slightly above the screen element screening surface. The attachment apertures may include a tapered bore or may simply include an aperture without any tapering. The portion of the elongated attachment members above the screening element screening surface may be melted and may fill the tapered bore, fastening the screen element to the subgrid. Alternatively, the portion of the elongated attachment members that extends through and above the aperture in screening element screening surface may be melted such that it forms a bead on the screening element screening surface and fastens the screen element to the subgrid.

The elongated structural members may include substantially parallel subgrid end members and substantially parallel subgrid side members substantially perpendicular to the subgrid end members. The elongated structural members may further include a first subgrid support member and a second subgrid support member orthogonal to the first subgrid support member. The first subgrid support member may extend between the subgrid end members and may be approximately parallel to the subgrid side members. The second subgrid support member may extend between the subgrid side members and may be approximately parallel to the subgrid end members, and substantially perpendicular to the subgrid edge members.

The grid framework may include a first and a second grid framework forming a first and a second grid opening. The screen elements may include a first and a second screen element. The subgrid may have a ridge portion and a base portion. The first and second grid frameworks may include first and second angular surfaces that peak at the ridge portion and extend downwardly from the peak portion to the base portion. The first and second screen elements may span the first and second angular surfaces, respectively.

According to an example embodiment of the present invention, a screen assembly is provided having a screen element including a screen element screening surface with a series of screening openings and a subgrid including multiple elongated structural members forming a grid framework having grid openings. The screen element spans at least one grid opening and is secured to a top surface of the subgrid. Multiple subgrids are secured together to form the screen assembly and the screen assembly has a continuous screen assembly screening surface comprised of multiple screen element screening surfaces. The screen element is a single thermoplastic injection molded piece.

The screen element may include substantially parallel end portions and substantially parallel side edge portions substantially perpendicular to the end portions. The screen element may further include a first screen element support member and a second screen element support member orthogonal to the first screen element support member. The first screen element support member may extend between the end portions and may be approximately parallel to the side edge portions. The second screen element support member may extend between the side edge portions and may be approximately parallel to the end portions. The screen element may include a first series reinforcement members substantially parallel to the side edge portions and a second series of reinforcement members substantially parallel to the end portions. The screen element may include elongated screen surface elements running parallel to the end portions and forming the screening openings. The end portions, side edge portions, first and second support members, first and second series of reinforcement members may structurally stabilize the screen surface elements and the screening openings.

The first and second series of reinforcement members may have a thickness less than a thickness of the end portions, side edge portions and the first and second screen element support members. The end portions and the side edge portions and the first and second screen element support members may form four rectangular areas. The first series of reinforcement members and the second series of reinforcement members may form multiple rectangular support grids within each of the four rectangular areas. The screening openings may have a width of approximately 43 microns to approximately 4000 microns between inner surfaces of each of the screen surface elements. In certain embodiments, the screening openings may have a width of approximately 70 microns to approximately 180 microns between inner surfaces of each of the screen surface elements. In other embodiments, the screening openings may have a width of approximately 43 microns to approximately 106 microns between inner surfaces of each of the screen surface elements. In embodiments of the present invention, the screening openings may have a width of about 0.043 mm to about 4 mm and length of about 0.086 mm to about 43 mm. In certain embodiments, the width to length ratio may be approximately 1:2 to approximately 1:1000.

The screen elements may be flexible.

The subgrid end members, the subgrid side members and the first and second subgrid support members may form eight rectangular grid openings. A first screen element may span four of the grid openings and a second screen element may span the other four openings.

A central portion of the screening element screening surface may slightly flex when subject to a load. The subgrid may be substantially rigid. The subgrid may also be a single thermoplastic injection molded piece. At least one of the subgrid end members and the subgrid side members may include fasteners configured to mate with fasteners of other subgrids, which fasteners may be clips and clip apertures that snap into place and securely attach the subgrids together.

The subgrid may include: substantially parallel triangular end pieces, triangular middle pieces substantially parallel to the triangular end pieces, a first and second mid support substantially perpendicular to the triangular end pieces and extending between the triangular end pieces, a first and second base support substantially perpendicular to the triangular end pieces and extending the between the triangular end pieces and a central ridge substantially perpendicular to the triangular end pieces and extending the between the triangular end pieces. A first edge of the triangular end pieces, the triangular middle pieces, and the first mid support, the first base support and the central ridge may form a first top surface of the subgrid having a first series of grid openings. A second edge of the triangular end pieces, the triangular middle pieces, and the second mid support, the second base support and the central ridge may form a second top surface of the subgrid having a second series of grid openings. The first top surface may slope down from the central ridge to the first base support and the second top surface may slope down from the central ridge to the second base support. A first and a second screen element may span the first series and second series of grid openings, respectively. The first edges of the triangular end pieces, the triangular middle pieces, the first mid support, the first base support and the central ridge may include a first subgrid attachment arrangement configured to securely mate with a first screen element attachment arrangement of the first screen element. The second edges of the triangular end pieces, the triangular middle pieces, the second mid support, the second base support and the central ridge may include a second subgrid attachment arrangement configured to securely mate with a second screen element attachment arrangement of the second screen element. The first and second subgrid attachment arrangements may include elongated attachment members and the first and second screen element attachment arrangements may include attachment apertures that mate with the elongated attachment members thereby securely attaching the first and second screen elements to the first and second subgrids, respectively. A portion of the elongated attachment members may extend through the screen element attachment apertures and slightly above a first and second screen element screening surface.

The first and second screen elements each may include substantially parallel end portions and substantially parallel side edge portions substantially perpendicular to the end portions. The first and second screen elements may each include a first screen element support member and a second screen element support member orthogonal to the first screen element support member, the first screen element support member extending between the end portions and being approximately parallel to the side edge portions, the second screen element support member extending between the side edge portions and may be approximately parallel to the end portions. The first and second screen elements may each include a first series reinforcement members substantially parallel to the to the side edge portions and a second series of reinforcement members substantially parallel to the end portions. The first and second screen elements may each include elongated screen surface elements running parallel to the end portions and forming the screening openings. The end portions, side edge portions, first and second support members, first and second series of reinforcement members may structurally stabilize screen surface elements and screening openings.

One of the first and second base supports may include fasteners that secure the multiple subgrids together, which fasteners may be clips and clip apertures that snap into place and securely attach subgrids together.

The screen assembly may include a first, a second, a third and a fourth screen element. The first series of grid openings may be eight openings formed by the first edge of the triangular end pieces, the triangular middle pieces, and the first mid support, the first base support and the central ridge. The second series of grid openings may be eight openings formed by the second edge of the triangular end pieces, the triangular middle pieces, the second mid support, the second base support and the central ridge. The first screen element may span four of the grid openings of the first series of grid openings and the second screen element may span the other four openings of the first series of grid openings. The third screen element may span four of the grid openings of the second series of grid openings and the fourth screen element may span the other four openings of the second series of grid openings. A central portion of the first, second, third and fourth screening element screening surfaces may slightly flex when subject to a load. The subgrid may be substantially rigid and may be a single thermoplastic injection molded piece.

According to an example embodiment of the present disclosure, a screen assembly is providing having a screen element including a screen element screening surface with screening openings and a subgrid including a grid framework with grid openings. The screen element spans the grid openings and is attached to a surface of the subgrid. Multiple subgrids are secured together to form the screen assembly and the screen assembly has a continuous screen assembly screening surface that includes multiple screen element screening surfaces. The screen element is a thermoplastic injection molded piece.

The screen assembly may also include a first thermoplastic injection molded screen element and a second thermoplastic injection molded screen element and the grid framework may include a first and second grid framework forming a first grid opening and a second grid opening. The subgrid may include a ridge portion and a base portion, the first and second grid frameworks including first and second angular surfaces that peak at the ridge portion and extend downwardly from the peak portion to the base portion. The first and second screen elements may span the first and second angular surfaces, respectively. The first and second angular surfaces may include a subgrid attachment arrangement configured to securely mate with a screen element attachment arrangement. The subgrid attachment arrangement may include elongated attachment members and the screen element attachment arrangement may include apertures that mate with the elongated attachment members thereby securely attaching the screen elements to the subgrid.

The subgrid may be substantially rigid and may be a single thermoplastic injection molded piece. A section of the base portion may include a first and a second fastener that secure the subgrid to a third and a fourth fastener of another subgrid. The first and third fasteners may be clips and the second and fourth fasteners may be clip apertures. The clips may snap into clip apertures and securely attach the subgrid and then another subgrid together.

The subgrids may form a concave structure and the continuous screen assembly screening surface may be concave. The subgrids may form a flat structure and the continuous screen assembly screening surface may be flat. The subgrids may form a convex structure and the continuous screen assembly screening surface may be convex.

The screen assembly may be configured to form a predetermined concave shape when subjected to a compression force by a compression assembly of a vibratory screening machine against at least one side member of the vibratory screen assembly when placed in the vibratory screening machine. The predetermined concave shape may be determined in accordance with a shape of a surface of the vibratory screening machine. The screen assembly may have a mating surface mating the screen assembly to a surface of the vibratory screening machine, which mating surface may be rubber, metal (e.g., steel, aluminum, etc.), a composite material, a plastic material or any other suitable material. The screen assembly may include a mating surface configured to interface with a mating surface of a vibratory screening machine such that the screen assembly is guided into a fixed position on the vibratory screening machine. The mating surface may be formed in a portion of at least one subgrid. The screen assembly mating surface may be a notch formed in a corner of the screen assembly or a notch formed approximately in the middle of a side edge of the screen assembly. The screen assembly may have an arched surface configured to mate with a concave surface of the vibratory screening machine. The screen assembly may have a substantially rigid structure that does not substantially deflect when secured to the vibratory screening machine. The screen assembly may include a screen assembly mating surface configured such that it forms a predetermined concave shape when subjected to a compression force by a member of a vibratory screening machine. The screen assembly mating surface may be shaped such that it interfaces with a mating surface of the vibratory screening machine such that the screen assembly may be guided into a predetermined location on the vibratory screening machine. The screen assembly may include a load bar attached to an edge surface of the subgrid of the screen assembly. The load bar may be configured to distribute a load across a surface of the screen assembly. The screen assembly may be configured to form a predetermined concave shape when subjected to a compression force by a compression member of a vibratory screening machine against the load bar of the vibratory screen assembly. The screen assembly may have a concave shape and may be configured to deflect and form a predetermined concave shape when subjected to a compression force by a member of a vibratory screening machine.

A first set of the subgrids may be formed into center support frame assemblies having a first fastener arrangement. A second set of the subgrids may be formed into a first end support frame assembly having a second fastener arrangement. A third set of the subgrids may be formed into a second end support frame assembly having a third fastener arrangement. The first, second, and third fastener arrangements may secure the first and second end support frames to the center support assemblies. A side edge surface of the first end support frame assembly may form a first end of the screen assembly. A side edge surface of the second end support frame arrangement may form a second end of the screen assembly. An end surface of each of the first and second end support frame assemblies and center support frame assemblies may cumulatively form a first and a second side surface of the complete screen assembly. The first and second side surfaces of the screen assembly may be substantially parallel and the first and second end surfaces of the screen assembly may be substantially parallel and substantially perpendicular to the side surfaces of the screen assembly. The side surfaces of the screen assembly may include fasteners configured to engage at least one of a binder bar and a load distribution bar. The subgrids may include side surfaces such that when individual subgrids are secured together to form the first and second end support frame assemblies and the center support frame assembly that the first and second end support frame assemblies and the center support frame assembly each form a concave shape. The subgrids may include side surfaces shaped such that when individual subgrids are secured together to form the first and second end support frame assemblies and the center support frame assembly that the first and second end support frame assemblies and the center support frame assembly each form a convex shape.

The screen elements may be affixed to the subgrids by at least one of a mechanical arrangement, an adhesive, heat staking and ultrasonic welding.

According to an example embodiment of the present disclosure, a screen element is provided having: a screen element screening surface with screen surface elements forming a series of screening openings; a pair of substantially parallel end portions; a pair of substantially parallel side edge portions substantially perpendicular to the end portions; a first screen element support member; a second screen element support member orthogonal to the first screen element support member, the first screen element support member extending between the end portions and being approximately parallel to the side edge portions, the second screen element support member extending between the side edge portions and being approximately parallel to the end portions and substantially perpendicular to the side edge portions; a first series of reinforcement members substantially parallel to the side edge portions; and a second series of reinforcement members substantially parallel to the end portions. The screen surface elements run parallel to the end portions. The end portions, side edge portions, first and second support members, first and second series of reinforcement members structurally stabilize screen surface elements and screening openings, and the screen element is a single thermoplastic injection molded piece.

According to an example embodiment of the present disclosure, a screen element is provided having a screen element screening surface with screen surface elements forming a series of screening openings; a pair of substantially parallel end portions; and a pair of substantially parallel side edge portions substantially perpendicular to the end portions. The screen element is a thermoplastic injection molded piece.

The screen element may also have a first screen element support member; a second screen element support member orthogonal to the first screen element support member, the first screen element support member extending between the end portions and being approximately parallel to the side edge portions, the second screen element support member extending between the side edge portions and being approximately parallel to the end portions; a first series of reinforcement members substantially parallel to the side edge portions; and a second series of reinforcement members substantially parallel to the end portions. The screen surface elements may run parallel to the end portions. In certain embodiments, the screen surface elements may also be configured to run perpendicular to the end portions. The end portions, side edge portions, first and second support members, first and second series of reinforcement members may structurally stabilize screen surface elements and screening openings.

The screen element may also have a screen element attachment arrangement molded integrally with the screen element and configured to mate with a subgrid attachment arrangement. Multiple subgrids may form a screen assembly and the screen assembly may have a continuous screen assembly screening surface that includes multiple screen element screening surfaces.

According to an example embodiment of the present disclosure, a method for fabricating a screen assembly for screening materials is provided that includes: determining screen assembly performance specifications for the screen assembly; determining a screening opening requirement for a screen element based on the screen assembly performance specifications, the screen element including a screen element screening surface having screening openings; determining a screen configuration based on the screen assembly performance specifications, the screen configuration including having the screen elements arranged in at least one of flat configuration and a nonflat configuration; injection molding the screen elements with a thermoplastic material; fabricating a subgrid configured to support the screen elements, the subgrid having a grid framework with grid openings wherein at least one screen element spans at least one grid opening and is secured to a top surface of the subgrid, the top surface of each subgrid including at least one of a flat surface and a nonflat surface that receives the screen elements; attaching the screen elements to the subgrids; attaching multiple subgrid assemblies together to form end screen frames and center screen frames; attaching the end screen frames to the center screen frames to form a screen frame structure; attaching a first binder bar to a first end of the screen frame structure; and attaching a second binder bar to a second end of the screen frame structure to form the screen assembly, the screen assembly having a continuous screen assembly screening surface comprised of multiple screen element screening surfaces.

The screen assembly performance specifications may include at least one of dimensions, material requirements, open screening area, cut point, and capacity requirements for a screening application. A handle may be attached to the binder bar. A tag may be attached to the binder bar, which tag may include a performance description of the screen assembly. At least one of the screen element and the subgrid may be a single thermoplastic injection molded piece. The thermoplastic material may include a nanomaterial. The subgrid may include at least one base member having fasteners that mate with fasteners of other base members of other subgrids and secure the subgrids together. The fasteners may be clips and clip apertures that snap into place and securely attach the subgrids together.

According to an example embodiment of the present disclosure, a method for fabricating a screen assembly for screening materials is provided by injection molding a screen element with a thermoplastic material, the screen element including a screen element screening surface having screening openings; fabricating a subgrid that supports the screen element, the subgrid having a grid framework with grid openings, the screen element spanning at least one grid opening; securing the screen element to a top surface of the subgrid; and attaching multiple subgrid assemblies together to form the screen assembly, the screen assembly having a continuous screen assembly screening surface made of multiple screen element screening surfaces. The method may also include attaching a first binder bar to a first end of the screen assembly and attaching a second binder bar to a second end of the screen assembly. The first and second binder bars may bind the subgrids together. The binder bar may be configured to distribute a load across the first and second ends of the screen assembly. The thermoplastic material may include a nanomaterial.

According to an example embodiment of the present disclosure, a method for screening a material is provided by attaching a screen assembly to a vibratory screening machine, the screen assembly including a screen element having a series of screening openings forming a screen element screening surface and a subgrid including multiple elongated structural members forming a grid framework having grid openings. Screen elements span grid openings and are secured to a top surface of the subgrid. Multiple subgrids are secured together to form the screen assembly. The screen assembly has a continuous screen assembly screening surface comprised of multiple screen element screening surfaces. The screen element is a single thermoplastic injection molded piece. The material is screened using the screen assembly.

According to an example embodiment of the present disclosure, a method for screening a material is provided including attaching a screen assembly to a vibratory screening machine and forming a top screening surface of the screen assembly into a concave shape. The screen assembly includes a screen element having a series of screening openings forming a screen element screening surface and a subgrid including multiple elongated structural members forming a grid framework having grid openings. Screen elements span grid openings and are secured to a top surface of the subgrid. Multiple subgrids are secured together to form the screen assembly and the screen assembly has a continuous screen assembly screening surface comprised of multiple screen element screening surfaces. The screen element is a single thermoplastic injection molded piece. The material is screened using the screen assembly.

According to an example embodiment of the present disclosure, a screen assembly is provided, including: a screen element having a first adhesion arrangement; and a subgrid unit having a second adhesion arrangement. The first adhesion arrangement and the second adhesion arrangement may be different materials. At least one of the first adhesion arrangement and the second adhesion arrangement is excitable such that the screen element and the subgrid may be secured together. The screen element is a single thermoplastic injection molded piece.

The first adhesion arrangement may be a plurality of cavity pockets on a bottom surface of the screen element and the second adhesion arrangement may be a plurality of fusion bars a top surface of the subgrid. The screen element is micro molded and has screening openings between approximately 40 microns and approximately 1000 microns. The cavity pockets may be elongated pockets. The fusion bars may have a height slightly larger than a depth of the cavity pockets. The depth of the cavity pockets may be approximately 0.05 inches and the height of the fusion bars is approximately 0.056 inches. The fusion bars may have a width slightly smaller than a width of the cavity pockets.

The screen element may include thermoplastic polyurethane. The subgrid may include nylon. The screen assembly may include additional screen elements and subgrids secured together, wherein multiple subgrids are secured together. The screen element may have a plurality of screening openings being elongated slots with a width and a length, the width of the screening openings being approximately 43 microns to approximately 1000 microns between inner surfaces of each screen surface element. The screen element may be attached to the subgrid via laser welding. A weld between the screen element and the subgrid may include a mixture of materials from the screen element and the subgrid.

According to an example embodiment of the present disclosure, a screen assembly is provided, including: a screen element including a screen element screening surface having a series of screening openings; and a subgrid including multiple elongated structural members forming a grid framework having grid openings. The screen element spans at least one of the grid openings and is attached to a top surface of the subgrid. Multiple independent subgrids are secured together to form the screen assembly and the screen assembly has a continuous screen assembly screening surface having multiple screen element screening surfaces. The screen element includes substantially parallel end portions and substantially parallel side edge portions substantially perpendicular to the end portions. The screen element further includes a first screen element support member and a second screen element support member orthogonal to the first screen element support member, the first screen element support member extending between the end portions and being approximately parallel to the side edge portions, the second screen element support member extending between the side edge portions and being approximately parallel to the end portions. The screen element includes a first series reinforcement members substantially parallel to the side edge portions, a second series of
reinforcement members substantially parallel to the end portions. The screen element screening surface includes screen surface elements forming the screening openings. The end portions, side edge portions, first and second support members, first and second series of reinforcement members structurally stabilize screen surface elements and screening openings. The screen element is a single thermoplastic injection molded piece. The screen element includes a plurality of pocket cavities on a bottom surface of the screen element. The subgrid includes a plurality of fusion bars on the top surface of the subgrid. The plurality of fusion bars are configured to mate with the plurality of pocket cavities.

The screening openings may be elongated slots with a width and a length, the width of the screening openings being approximately 43 microns to approximately 1000 microns between inner surfaces of each screen surface element. The plurality of fusion bars may have a height slightly larger than a depth of the plurality of pocket cavities. The height of the plurality of fusion bars may be approximately 0.056 inches. The depth of the plurality of pocket cavities may be approximately 0.050 inches. Each of plurality of pocket cavities may have a width slightly larger than a width of each of the plurality of fusion bars. The plurality of fusion bars may be configured such that, when melted, a portion of the plurality of fusion bars fills the width of the plurality of pocket cavities. Material of the screen element may be fused with material of the subgrid. The screen element may be configured to allow a laser to pass through the screen element and contact the plurality of fusion bars. The laser may melts a portion of the plurality of fusion bars fusing the screen element to the subgrid.

The subgrid may be a single thermoplastic injection molded piece. The screen element may include a thermoplastic polyurethane material. The thermoplastic polyurethane may be at least one of a poly-ether based thermoplastic polyurethane and a polyester based thermoplastic polyurethane. The subgrid may include a nylon material. The fusion bars may include at least one of a carbon and a graphite material. The subgrid may include a screen element locator arrangement configured to locate a screen element upon the subgrid. The screen element may include a plurality of tapered counter bores on a top surface of the screen element along the side edge portions and the end portions between locator apertures of the locator arrangement. The fusion bars and the pocket cavities may be different materials.

The grid framework may include a first and second grid framework forming a first and a second grid opening, the screen elements including a first and a second screen element. The subgrid may include a ridge portion and a base portion, the first and second grid frameworks include first and second angular surfaces that peak at the ridge portion and extend downwardly from the peak portion to the base portion, wherein the first and second screen elements span the first and second angular surfaces, respectively. The screen assembly may include a secondary support framework spanning at least a portion of each grid opening.

According to an exemplary embodiment of the present invention a screen assembly is provided, including: a screen element including a screen element screening surface having a series of screening openings and a plurality of pocket cavities on a bottom surface of the screen element; and a subgrid including multiple elongated structural members forming a grid framework having grid openings and a plurality of fusion bars on a top surface of the subgrid. The screen element spans at least one grid opening and is secured to the top surface of the subgrid via fusing the plurality of fusion bars to the plurality of pocket cavities. Multiple subgrids are secured together to form the screen assembly and the screen assembly has a continuous screen assembly screening surface comprised of multiple screen element screening surfaces. The screen element is a single thermoplastic injection molded piece. The screen element in configured to allow a laser to pass through the screen element and contact the plurality of fusion bars.

The screening openings may be elongated slots with a width and a length, the width of the screening openings being approximately 43 microns to approximately 1000 microns between inner surfaces of each screen surface element. The screening openings may be elongated slots with a width and a length, the width of the screening openings being approximately 70 microns to approximately 180 microns between inner surfaces of each screen surface element. The screening openings may be elongated slots with a width and a length, the width of the screening openings being approximately 43 microns to approximately 106 microns between inner surfaces of each screen surface element. The screening openings may be elongated slots with a width and a length, the width being about 0.044 mm to about 4 mm and the length being about 0.088 mm to about 60 mm.

The subgrid may include substantially parallel triangular end pieces, triangular middle pieces substantially parallel to the triangular end pieces, a first and second mid support substantially perpendicular to the triangular end pieces and extending between the triangular end pieces, a first and second base support substantially perpendicular to the triangular end pieces and extending between the triangular end pieces and a central ridge substantially perpendicular to the triangular end pieces and extending between the triangular end pieces, a first edge of the triangular end pieces, the triangular middle pieces, the first mid support, the first base support and the central ridge form a first top surface of the subgrid having a first series of grid openings and a second edge of the triangular end pieces, the triangular middle pieces, the second mid support, the second
base support and the central ridge form a second top surface of the subgrid having a second series of grid openings, the first top surface sloping from the central ridge to the first base support, the second top surface sloping from the central ridge to the second base support. A first and a second screen element may span the first series and second series of grid openings, respectively.

In exemplary embodiments of the present invention, a method of fabricating a screen assembly is provided, including: laser welding a screen element of a first material to a subgrid of a second material; and attaching multiple subgrids together to form the screen assembly. The first material and the second material are different materials. The first material and the second material are fused together at laser weld locations.

The screen assembly may have a first adhesion arrangement on a bottom surface of the screen element and the subgrid has a second adhesion arrangement on a top surface of the subgrid. The first adhesion arrangement may be a plurality of pocket cavities and the second adhesion arrangement is a plurality of fusion bars. The plurality of pocket cavities may be configured to mate with the plurality of fusion bars.

The method for fabricating a screen assembly may include locating the screen element upon the subgrid via location apertures in the screen element and location extensions on a top surface of the subgrid. The method for fabricating a screen assembly may include passing a laser through the screen element such that it contacts the plurality of fusion bars. The method for fabricating a screen assembly may include melting a portion of the plurality of fusion bars with the laser. The method for fabricating a screen assembly may include melting a portion of the first material with one of heat produced by the laser and heat transfer from the melted portions of the plurality of fusion bars. The
method for fabricating a screen assembly may include removing the laser such that the melted portion of the first material and the melted portion of the fusion bars mix and return to a solid.

Example embodiments of the present disclosure are described in more detail below with reference to the appended Figures.

### BRIEF DESCRIPTION OF DRAWINGS

Figure 1 is an isometric view of a screen assembly, according to an exemplary embodiment of the present invention.
Figure 1A is an enlarged view of a break out portion of the screen assembly shown in Figure 1.
Figure 1B is a bottom isometric view of the screen assembly shown in Figure 1.
Figure 2 is an isometric top view of a screen element, according to an exemplary embodiment of the present invention.
Figure 2A is a top view of the screen element shown in Figure 2.
Figure 2B is a bottom isometric view of the screen element shown in Figure 2.
Figure 2C is a bottom view of the screen element shown in Figure 2.
Figure 2D is an enlarged top view of a break out portion of the screen element shown in Figure 2.
Figure 3 is a top isometric view of an end subgrid, according to an exemplary embodiment of the present invention.
Figure 3A is a bottom isometric view of the end subgrid shown in Figure 3.
Figure 4 is a top isometric view of a center subgrid, according to an exemplary embodiment of the present invention.
Figure 4A is a bottom isometric view of the center subgrid shown in Figure 4.
Figure 5 is a top isometric view of a binder bar, according to an exemplary embodiment of the present invention.
Figure 5A is a bottom isometric view of the binder bar shown in Figure 5.
Figure 6 is an isometric view of a screen subassembly, according to an exemplary embodiment of the present invention.
Figure 6A is an exploded view of the subassembly shown in Figure 6.
Figure 7 is a top view of the screen assembly shown in Figure 1.
Figure 7A is an enlarged cross-section of Section A-A of the screen assembly shown in Figure 7.
Figure 8 is a top isometric view of a screen assembly partially covered with screen elements, according to an exemplary embodiment of the present invention.
Figure 9 is an exploded isometric view of the screen assembly shown in Figure 1.
Figure 10 is an exploded isometric view of an end subgrid showing screen elements prior to attachment to the end subgrid, according to an exemplary embodiment of the present invention.
Figure 10A is an isometric view of the end subgrid shown in Figure 10 having the screen elements attached thereto.
Figure 10B is a top view of the end subgrid shown in Figure 10A.
Figure 10C is a cross-section of Section B-B of the end subgrid shown in Figure 10A.
Figure 11 is an exploded isometric view of a center subgrid showing screen elements prior to attachment to the center subgrid, according to an exemplary embodiment of the present invention.
Figure 11A is an isometric view of the center subgrid shown in Figure 11 having the screen elements attached thereto.
Figure 12 is an isometric view of a vibratory screening machine having screen assemblies with concave screening surfaces installed thereon, according to an exemplary embodiment of the present invention.
Figure 12A is an enlarged isometric view of the discharge end of the vibratory screening machine shown in Figure 12.
Figure 12B is a front view of the vibratory screening machine shown in Figure 12.
Figure 13 is an isometric view of a vibratory screening machine with a single screening surface having screen assemblies with concave screening surfaces installed thereon, according to an exemplary embodiment of the present invention.
Figure 13A is a front view of the vibratory screening machine shown in Figure 13.
Figure 14 is a front view of a vibratory screening machine having two separate concave screening surfaces with preformed screen assemblies installed upon the vibratory screening machine, according to an exemplary embodiment of the present invention.
Figure 15 is a front view of a vibratory screening machine having a single screening surface with a preformed screen assembly installed upon the vibratory screening machine, according to an exemplary embodiment of the present invention.
Figure 16 is an isometric view of an end support frame subassembly, according to an exemplary embodiment of the present invention.
Figure 16A is an exploded isometric view of the end support frame subassembly shown in Figure 16.
Figure 17 is an isometric view of a center support frame subassembly, according to an exemplary embodiment of the present invention.
Figure 17A is an exploded isometric view of the center support frame subassembly shown in Figure 17.
Figure 18 is an exploded isometric view of a screen assembly, according to an exemplary embodiment of the present invention.
Figure 19 is a top isometric view of a flat screen assembly, according to an exemplary embodiment of the present invention.
Figure 20 is a top isometric view of a convex screen assembly, according to an exemplary embodiment of the present invention.
Figure 21 is an isometric view of a screen assembly having pyramidal shaped subgrids, according to an exemplary embodiment of the present invention.
Figure 21A is an enlarged view of section D of the screen assembly shown in Figure 21.
Figure 22 is a top isometric view of a pyramidal shaped end subgrid, according to an exemplary embodiment of the present invention.
Figure 22A is a bottom isometric view of the pyramidal shaped end subgrid shown in Figure 22.
Figure 23 is a top isometric view of a pyramidal shaped center subgrid, according to an exemplary embodiment of the present invention.
Figure 23A is a bottom isometric view of the pyramidal shaped center subgrid shown in Figure 23.
Figure 24 is an isometric view of a pyramidal shaped subassembly, according to an exemplary embodiment of the present invention.
Figure 24A is an exploded isometric view of the pyramidal shaped subassembly shown in Figure 24.
Figure 24B is an exploded isometric view of a pyramidal shaped end subgrid showing screen elements prior to attachment to the pyramidal shaped end subgrid.
Figure 24C is an isometric view of the pyramidal shaped end subgrid shown in Figure 24B having the screen elements attached thereto.
Figure 24D is an exploded isometric view of a pyramidal shaped center subgrid showing screen elements prior to attachment to the pyramidal shaped center subgrid, according to an exemplary embodiment of the present invention.
Figure 24E is an isometric view of the pyramidal shaped center subgrid shown in Figure 24D having the screen elements attached thereto.
Figure 25 is a top view of a screen assembly having pyramidal shaped subgrids, according to an exemplary embodiment of the present invention.
Figure 25A is a cross-section view of Section C-C of the screen assembly shown in Figure 25.
Figure 25B is an enlarged view of Section C-C shown in Figure 25A.
Figure 26 is an exploded isometric view of a screen assembly having pyramidal shaped and flat subassemblies, according to an exemplary embodiment of the present invention.
Figure 27 is an isometric view of a vibratory screening machine with two screening surfaces having assemblies with concave screening surfaces installed thereon wherein the screen assemblies include pyramidal shaped and flat subassemblies, according to an exemplary embodiment of the present invention.
Figure 28 is a top isometric view of a screen assembly having pyramidal shaped and flat subgrids without screen elements, according to an exemplary embodiment of the present invention.
Figure 29 is a top isometric view of the screen assembly shown in Figure 28 where the subgrids are partially covered with screen elements.
Figure 30 is a front view of a vibratory screening machine with two screening surfaces having assemblies with concave screening surfaces installed thereon where the screen assemblies include pyramidal shaped and flat subgrids, according to an exemplary embodiment of the present invention.
Figure 31 is a front view of a vibratory screening machine with a single screen surface having an assembly with a concave screening surface installed thereon where the screen assembly includes pyramidal shaped and flat subgrids, according to an exemplary embodiment of the present invention.
Figure 32 is a front view of a vibratory screening machine with two screening surfaces having preformed screen assemblies with flat screening surfaces installed thereon where the screen assemblies include pyramidal shaped and flat subgrids, according to an exemplary embodiment of the present invention.
Figure 33 is a front view of a vibratory screening machine with a single screening surface having a preformed screen assembly with a flat screening surface installed thereon where the screen assembly includes pyramidal shaped and flat subgrids, according to an exemplary embodiment of the present invention.
Figure 34 is an isometric view of the end subgrid shown in Figure 3 having a single screen element partially attached thereto, according to an exemplary embodiment of the present invention.
Figure 35 is an enlarged view of break out Section E of the end subgrid shown in Figure 34.
Figure 36 is an isometric view of a screen assembly having pyramidal shaped subgrids in a portion of the screen assembly, according to an exemplary embodiment of the present invention.
Figure 37 is a flow chart of a screen assembly fabrication, according to an exemplary embodiment of the present invention.
Figure 38 is a flow chart of a screen assembly fabrication, according to an exemplary embodiment of the present invention.
Figure 39 an isometric view of a vibratory screening machine having a single screen assembly with a flat screening surface installed thereon with a portion of the vibratory machine cut away showing the screen assembly, according to an exemplary embodiment of the present invention.
Figure 40 is an isometric top view of an individual screen element, according to an exemplary embodiment of the present invention.
Figure 40A is an isometric top view of a screen element pyramid, according to an exemplary embodiment of the present invention.
Figure 40B is an isometric top view of four of the screen element pyramids shown in Figure 40A.
Figure 40C is an isometric top view of an inverted screen element pyramid, according to an exemplary embodiment of the present invention.
Figure 40D is a front view of the screen element shown in Figure 40C.
Figure 40E is an isometric top view of a screen element structure, according to an exemplary embodiment of the present invention.
Figure 40F is a front view of the screen element structure shown in Figure 40E.
Figures 41 to 43 are front cross-sectional profile views of screen elements, according to exemplary embodiments of the present invention.
Figure 44 is an isometric top view of a prescreening structure with prescreen assemblies according to an exemplary embodiment of the present invention.
Figure 44A is an isometric top view of the prescreen assembly shown in Figure 44, according to an exemplary embodiment of the present invention.
Figure 45 is a top view of a screen element above a portion of a subgrid, according to an exemplary embodiment of the present invention.
Figure 45A is an exploded side view of cross section A-A showing the screen element
   above the portion of the subgrid of Figure 45.
Figure 45B is a side view of cross section A-A of the screen element and the portion of the subgrid of Figure 45 prior to attachment of the screen element to the subgrid, according to an exemplary embodiment of the present invention.
Figure 45C is an enlarged view of section A of Figure 45B.
Figure 45D is a side view of cross section A-A of the screen element and the portion of the subgrid of Figure 45 after attachment of the screen element to the subgrid, according to an exemplary embodiment of the present invention.
Figure 45E is an enlarged view of section B of Figure 45D.
Figure 46 is side cross section view of a portion of a screen element and a portion of a subgrid, according to an exemplary embodiment of the present invention.
Figure 47 is a top isometric view of a portion of a screen assembly, according to an exemplary embodiment of the present invention.
Figure 48 is an isometric top view of a screen element, according to an exemplary embodiment of the present invention.
Figure 48A is a top view of the screen element shown in Figure 48.
Figure 48B is a bottom isometric view of the screen element shown in Figure 48.
Figure 48C is a bottom view of the screen element shown in Figure 48.
Figure 49 is a top isometric view of an end subgrid, according to an exemplary embodiment of the present invention.
Figure 49A is a bottom isometric view of the end subgrid shown in Figure 49.
Figure 50 is a top isometric view of a center subgrid, according to an exemplary embodiment of the present invention.
Figure 50A is a bottom isometric view of the center subgrid shown in Figure 50.
Figure 51 is an exploded isometric view of an end subgrid showing screen elements prior to attachment to the end subgrid, according to an exemplary embodiment of the present invention.
Figure 51A is an isometric view of the end subgrid shown in Figure 51 having the screen elements attached thereto.
Figure 52 is an exploded isometric view of a center subgrid showing screen elements prior to attachment to the center subgrid, according to an exemplary embodiment of the present invention.
Figure 52A is an isometric view of the center subgrid shown in Figure 52 having the screen elements attached thereto.
Figure 53 is a top isometric view of a pyramidal shaped end subgrid, according to an exemplary embodiment of the present invention.
Figure 53A is a bottom isometric view of the pyramidal shaped end subgrid shown in Figure 53.
Figure 54 is a top isometric view of a pyramidal shaped center subgrid, according to an exemplary embodiment of the present invention.
Figure 54A is a bottom isometric view of the pyramidal shaped center subgrid shown in Figure 54.
Figure 55 is an exploded isometric view of a pyramidal shaped end subgrid showing screen elements prior to attachment to the pyramidal shaped end subgrid, according to an exemplary embodiment of the present invention.
Figure 55A is an isometric view of the pyramidal shaped end subgrid shown in Figure 55 having the screen elements attached thereto.
Figure 56 is an exploded isometric view of a pyramidal shaped center subgrid showing screen elements prior to attachment to the pyramidal shaped center subgrid, according to an exemplary embodiment of the present invention.
Figure 56A is an isometric view of the pyramidal shaped center subgrid shown in Figure 56 having the screen elements attached thereto.
Figure 57 is an isometric view of the end subgrid shown in Figure 50 having a single screen element partially attached thereto, according to an exemplary embodiment of the present invention.
Figure 57A is an enlarged view of section A of the end subgrid shown in Figure 57.
Figure 58 is a top isometric view of a portion of a screen assembly, according to an exemplary embodiment.
Figure 59 is a top isometric view of an end subgrid, according to an exemplary embodiment.
Figure 59A is a bottom isometric view of the end subgrid shown in Figure 59.
Figure 60 is a top isometric view of a center subgrid, according to an exemplary embodiment.
Figure 60A is a bottom isometric view of the center subgrid shown in Figure 60.
Figure 61 is an exploded isometric view of an end subgrid showing screen elements prior to attachment to the end subgrid, according to an exemplary embodiment.
Figure 61A is an isometric view of the end subgrid shown in Figure 61 having the screen elements attached thereto, according to an exemplary embodiment.
Figure 62 is an exploded isometric view of a center subgrid showing screen elements prior to attachment to the center subgrid, according to an exemplary embodiment.
Figure 62A is an isometric view of the center subgrid shown in Figure 62 having the screen elements attached thereto, according to an exemplary embodiment.
Figure 63 is a top isometric view of a pyramidal shaped end subgrid, according to an exemplary embodiment.
Figure 63A is a bottom isometric view of the pyramidal shaped end subgrid shown in Figure 63.
Figure 63B illustrates an isometric view of clip **42** of Figures 3 and 3A, according to an embodiment.
Figure 63C illustrates an isometric view of clip **142** of Figures 59 - 62A, according to an embodiment.
Figure 63D illustrates an isometric view of clip **242** of Figures 63 and 63A, according to an embodiment.
Figure 64 is a top isometric view of an end subgrid, according to an exemplary embodiment.
Figure 64A is a bottom isometric view of the end subgrid shown in Figure 64.
Figure 65 is a top isometric view of a center subgrid, according to an exemplary embodiment.
Figure 65A is a bottom isometric view of the center subgrid shown in Figure 65.
Figure 66 is an isometric top view of a screen element, according to an exemplary embodiment of the present invention.
Figure 66A is a top view of the screen element shown in Figure 66.
Figure 66B is a bottom isometric view of the screen element shown in Figure 66.
Figure 66C is a bottom view of the screen element shown in Figure 66.
Figure 67 is an exploded isometric view of an end subgrid showing a screen element prior to attachment to the end subgrid, according to an exemplary embodiment.
Figure 67A is an isometric view of the end subgrid shown in Figure 67 having the screen element attached thereto, according to an exemplary embodiment.
Figure 68 is an exploded isometric view of a center subgrid showing a screen element prior to attachment to the center subgrid, according to an exemplary embodiment.
Figure 68A is an isometric view of the center subgrid shown in Figure 68 having the screen element attached thereto, according to an exemplary embodiment.
Figure 69 is an isometric view of a screen assembly having pyramidal shaped subgrids, according to an exemplary embodiment of the present invention.
Figure 69A is an enlarged view of section D of the screen assembly shown in Figure 69.
Figure 70 is a reproduction of Figure 66C, illustrating a bottom view of a screen element, for comparison with the screen element of Figure 70A.
Figure 70A is a bottom view of a screen element having smaller features than the screen element of Figures 70 and 66.
Figure 71 is a reproduction of Figure 65, illustrating a top isometric view of a center subgrid, for comparison with the center subgrid of Figure 71A.
Figure 71A is a side isometric view of a center subgrid, according to an embodiment.
Figure 71B is an enlarged view of region "A" of Figure 71A, according to an embodiment.
Figure 71C is a top down view of the center subgrid of Figure 71A, according to an embodiment.
Figure 71D is a side view of the center subgrid of Figure 71A, according to an embodiment.
Figure 71E illustrates features of a screen element in comparison with support features of an end subgrid, according to an embodiment.
Figure 71F illustrates features of a further screen element in comparison with support features of a further end subgrid, according to an embodiment.
Figure 72 illustrates a pyramidal shaped end subgrid similar to the pyramidal shaped end subgrid of Figure 63, for comparison with the pyramidal shaped end subgrid of Figure 72A.
Figure 72A illustrates a pyramidal shaped end subgrid having a higher linear density of structural features than the 72, according to an embodiment.
Figure 72B illustrates features of a screen element in comparison with support features of a pyramidal shaped end subgrid, according to an embodiment.
Figure 72C illustrates features of a further screen element in comparison with support features of a further pyramidal shaped end subgrid, according to an embodiment.
Figure 73 illustrates a top-down view of a screen element, previously illustrated in Figure 70A, 71F, and 72C, in which a first cross section direction A - A and a second cross section direction C - C is defined, according to an embodiment.
Figure 73A illustrates a first cross section, defined by the first cross section direction A - A of Figure 73, according to an embodiment.
Figure 73B illustrates an enlarged view of the first cross section illustrated in Figure 73A, according to an embodiment.
Figure 73C illustrates a second cross section of the screen element of Figure 73 defined by the second cross section direction C - C of Figure 73, according to an embodiment.
Figure 73D illustrates an enlarged view of the second cross section illustrated in Figure 73C, according to an embodiment.
Figure 74 illustrates a top-down view of the center screen subassembly similar to center screen subassembly of Figure 68A, in which a cross section direction A - A is defined, according to an embodiment.
Figure 74A illustrates a side view of the center screen subassembly of Figure 74, according to an embodiment.
Figure 74B illustrates a cross section, defined by the cross section direction A - A of Figure 74, according to an embodiment.
Figure 74C illustrates a first enlarged view of a first portion of the cross section of center screen subassembly of Figure 74B, according to an embodiment.
Figure 74D illustrates a second enlarged view of a second portion of the cross section of center screen subassembly of Figure 74C, according to an embodiment.
Figure 75 illustrates screen subassemblies that have been attached to rectangular regions formed by a grid framework formed by first and second pluralities of rails, according to an embodiment.
Figure 76 illustrates screen elements directly attached to a plate structure without the need to first attach the screen elements to subgrids, according to an embodiment.
Figure 76A illustrates screen elements configured to be directly attached to a punched plate, according to an embodiment.
Figure 76B illustrates screen elements configured to be directly attached to a corrugated punched plate, according to an embodiment.
Figure 76C illustrates a frame having pockets to accommodate screen elements, according to an embodiment.
Figure 77A illustrates an embodiment fusion bar that may serve as a location member, according to an embodiment.
Figure 77B illustrates an embodiment cavity pocket that may serve as a location aperture, according to an embodiment.
Figure 77C illustrates alignment of the fusion bar of Figure 77A with the cavity pocket of Figure 77B.

### DETAILED DESCRIPTION

Like reference characters denote like parts in several drawings.

Embodiments of the present invention provide a screen assembly that includes injection molded screen elements that are mated to a subgrid. Multiple subgrids are securely fastened to each other to form the vibratory screen assembly, which has a continuous screening surface and is configured for use on a vibratory screening machine. The entire screen assembly structure is configured to withstand rigorous loading conditions encountered when mounted and operated on a vibratory screening machine. Injection molded screen elements provide for many advantages in screen assembly manufacturing and vibratory screening applications. In certain embodiments of the present invention, screen elements are injection molded using a thermoplastic material. In certain embodiments of the present invention, screen elements may have a first adhesion arrangement configured to mate with a second adhesion arrangement on a subgrid. The first and second adhesion arrangements may include different materials and may be configured such that screen elements may be fused to the subgrid via laser welding. The first adhesion arrangement may be a plurality of pocket cavities and the second adhesion arrangement may be a plurality of fusion bars, which may be configured to melt when subjected to a laser. Screen elements may include a thermoplastic polyurethane, which may be polyester based or poly-ether based. Embodiments of the present invention include screen elements secured to subgrids via a hardened mixture of separate materials. Embodiments of the present invention include methods of fabricating a screen assembly by fusing screen elements to subgrids via laser welding and attaching multiple subgrids together to form the screen assembly.

Embodiments of the present invention provide injection molded screen elements that are of a practical size and configuration for manufacture of vibratory screen assemblies and for use in vibratory screening applications. Several important considerations have been taken into account in the configuration of individual screen elements. Screen elements are provided that: are of an optimal size (large enough for efficient assembly of a complete screen assembly structure yet small enough to injection mold (micromold in certain embodiments) extremely small structures forming screening openings while avoiding freezing (i.e., material hardening in a mold before completely filling the mold)); have optimal open screening area (the structures forming the openings and supporting the openings are of a minimal size to increase the overall open area used for screening while maintaining, in certain embodiments, very small screening openings necessary to properly separate materials to a specified standard); have durability and strength, can operate in a variety of temperature ranges; are chemically resistant; are structural stable; are highly versatile in screen assembly manufacturing processes; and are configurable in customizable configurations for specific applications.

Embodiments of the present invention provide screen elements that are fabricated using extremely precise injection molding. The larger the screen element the easier it is to assemble a complete vibratory screening assembly. Simply put, the fewer pieces there are to put together, the easier the system will be to put together. However, the larger the screen element the more difficult it is to injection mold extremely small structures, i.e. the structures forming the screening openings. It is important to minimize the size of the structures forming the screening openings so as to maximize the number of screening openings on an individual screen element and thereby optimize the open screening area for the screening element and thus the overall screen assembly. In certain embodiments, screen elements are provided that are large enough (e.g., one inch by one inch, one inch by two inches, two inches by three inches, etc.) to make it practical to assemble a complete screen assembly screening surface (e.g., two feet by three feet, three feet by four feet, etc.). The relatively "small size" (e.g., one inch by one inch, one inch by two inches, two inches by three inches, etc.) is fairly large when micromolding extremely small structural members (e.g., structural members as small as 43 microns). The larger the size of the overall screen element and the smaller the size of the individual structural members forming the screening openings the more prone the injection molding process is to errors such as freezing. Thus, the size of the screen elements must be practical for screen assembly manufacture while at the same time small enough to eliminate problems such as freezing when micromolding extremely small structures. Sizes of screening elements may vary based on the material being injection molded, the size of the screening openings required and the overall open screening area desired.

Open screening area is a critical feature of vibratory screen assemblies. The average usable open screening area (i.e., actual open area after taking into account the structural steel of support members and bonding materials) for traditional 100 mesh to 200 mesh wire screen assemblies may be in the range of 16%. Specific embodiments of the present invention (e.g., screening assemblies with constructions described herein and having 100 mesh to 200 mesh screen openings) provide screen assemblies in the same range having a similar actual open screening areas. Traditional screens, however, blind fairly quickly in the field which results in the actual opening screening area being reduced fairly quickly. It is not uncommon for traditional metal screens to blind within the first 24 hours of use and to have the actual open screening area reduced by 50%. Traditional wire assemblies also frequently fail as a result of wires being subjected to vibratory forces which place bending loads of the wires. Injection molded screen assemblies, according to embodiments of the present invention, in contrast, are not subject to extensive blinding (thereby maintaining a relatively constant actual open screening area) and rarely fail because of the structural stability and configuration of the screen assembly, including the screen elements and subgrid structures. In fact, screen assemblies according to embodiments of the present invention have extremely long lives and may last for long periods of time under heaving loading. Screen assemblies according to the present invention have been tested for months under rigorous conditions without failure or blinding whereas traditional wire assemblies were tested under the same conditions and blinded and failed within days. As more fully discussed herein, traditional thermoset type assemblies could not be used in such applications.

In embodiments of the present invention a thermoplastic is used to injection mold screen elements. As opposed to thermoset type polymers, which frequently include liquid materials that chemically react and cure under temperature, use of thermoplastics is often simpler and may be provided, e.g., by melting a homogeneous material (often in the form of solid pellets) and then injection molding the melted material. Not only are the physical properties of thermoplastics optimal for vibratory screening applications but the use of thermoplastic liquids provides for easier manufacturing processes, especially when micromolding parts as described herein. The use of thermoplastic materials in the present invention provides for excellent flexure and bending fatigue strength and is ideal for parts subjected to intermittent heavy loading or constant heavy loading as is encountered with vibratory screens used on vibratory screening machines. Because vibratory screening machines are subject to motion, the low coefficient of friction of the thermoplastic injection molded materials provides for optimal wear characteristics. Indeed, the wear resistance of certain thermoplastics is superior to many metals. Further, use of thermoplastics as described herein provides an optimal material when making "snap-fits" due to its toughness and elongation characteristics. The use of thermoplastics in embodiments of the present invention also provides for resistance to stress cracking, aging and extreme weathering. The heat deflection temperature of thermoplastics is in the range of 200°F. With the addition of glass fibers, this will increase to approximately 250°F to approximately 300°F or greater and increase rigidity, as measured by Flexural Modulus, from approximately 400,000 PSI to over approximately 1,000,000 PSI. All of these properties are ideal for the environment encountered when using vibratory screens on vibratory screening machines under the demanding conditions encounter in the field.

Embodiments of the present invention may incorporate various materials into subgrid units and/or the screen elements depending on the desired properties of the embodiments. Thermoplastic polyurethane (TPU) may be incorporated into embodiments of the present invention (e.g., screen elements), providing elasticity, transparency, and resistance to oil, grease, and abrasion. TPU also has high shear strength. These properties of TPU are beneficial when applied to embodiments of the present invention, which are subjected to high vibratory forces, abrasive materials and high load demands. Different types of TPU may be incorporated into embodiments depending on the material being screened. For example, polyester-based TPUs may be incorporated into screen assemblies used for oil and/or gas screening because the esters provide superior abrasion resistance, oil resistance, mechanical integrity, chemical resistance and adhesion strength. Poly-ether based TPUs may be incorporated into mining applications where hydrolysis resistance (a property of ether based TPUs) is important. Para-phenylene disocyanate (PPDI) may be incorporated into embodiments of the present invention. PPDI may provide high performance properties in a variety of screening applications. Materials for embodiments of the present invention may be selected or determined based upon a variety of factors, including performance properties of each material and costs associated with using the materials.

In embodiments of the present invention, materials for a screen element may be selected to have high temperature tolerance, chemical resistance, hydrolytic resistance, and/or abrasion resistance. Screen elements may incorporate materials, such as TPUs, providing the screen elements with a clear appearance. Clear screen elements may allow for efficient laser transmission through the screen elements for laser welding purposes. Subgrid materials may be different than the screen element material. In embodiments of the present invention, subgrids may be nylon. Subgrids may incorporate carbon or graphite. Different materials between screen elements and subgrids may be secured to each other via laser welding, which may provide a much stronger adhesion between the screen elements and the subgrids than alternative attachment methods. The stronger attachment of the screen element to the subgrid provides improved performance of the screen assemblies when subjected to the high vibratory forces of vibratory screening machines and the abrasive forces that occur on the surfaces of the screen elements during screening of materials.

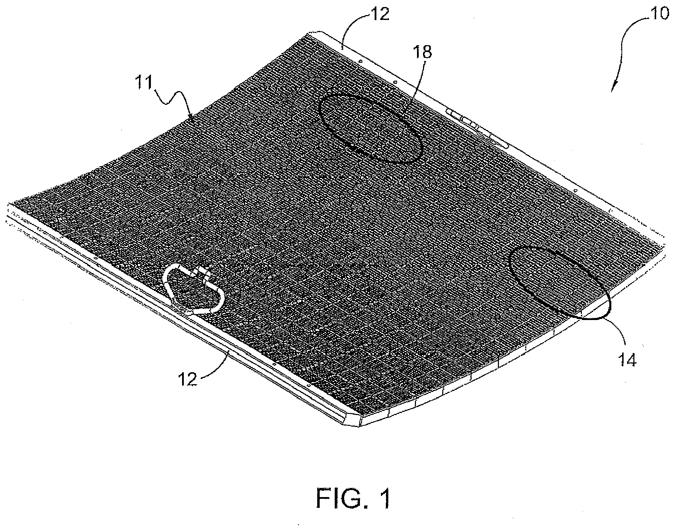

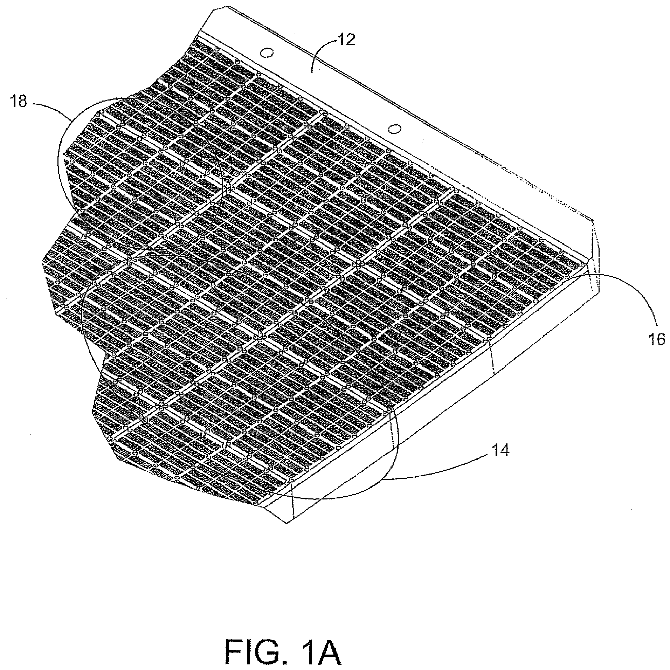

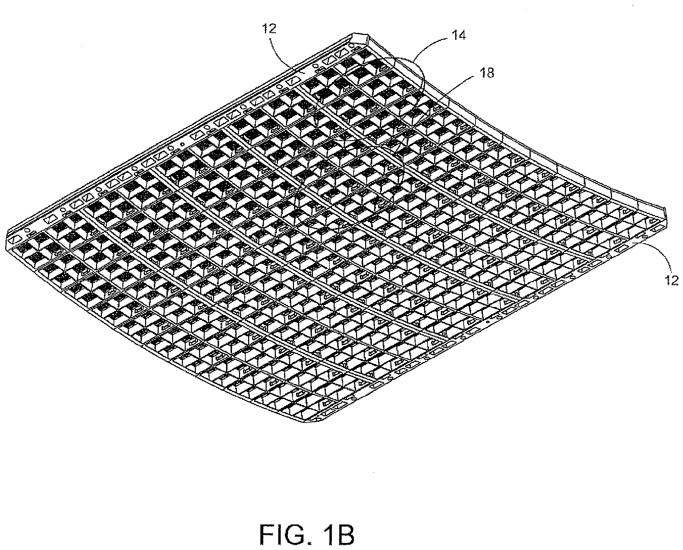

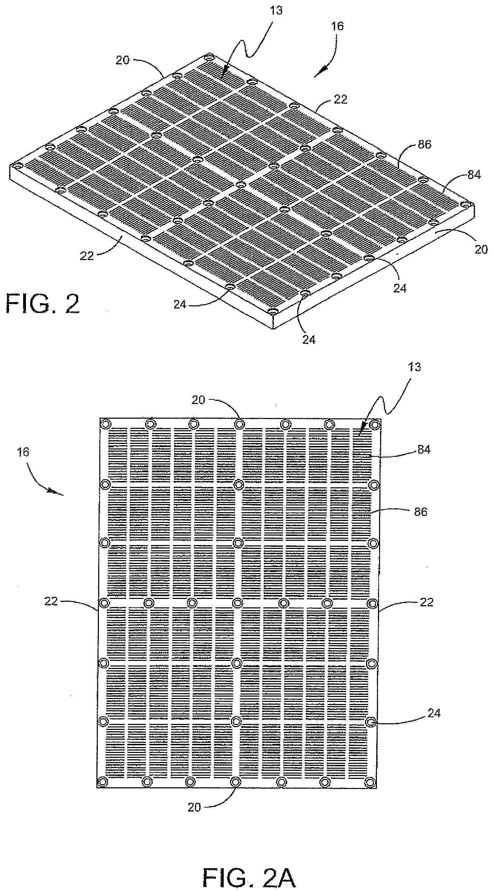

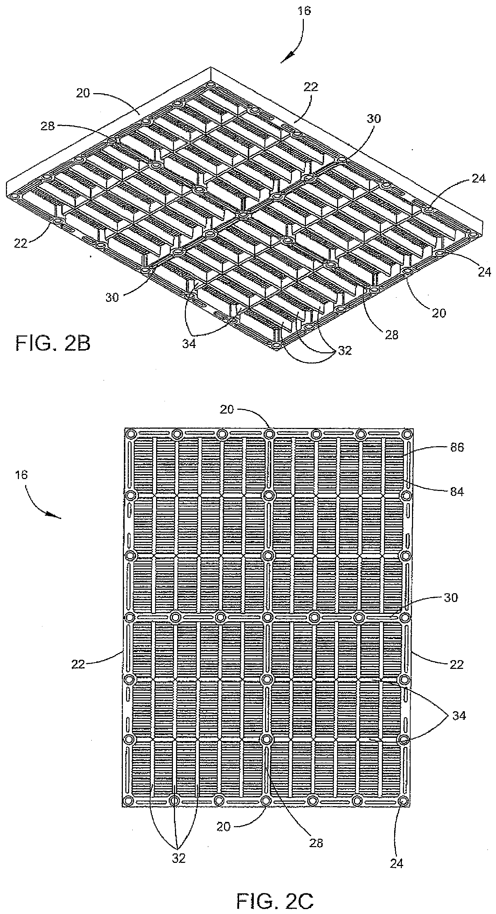

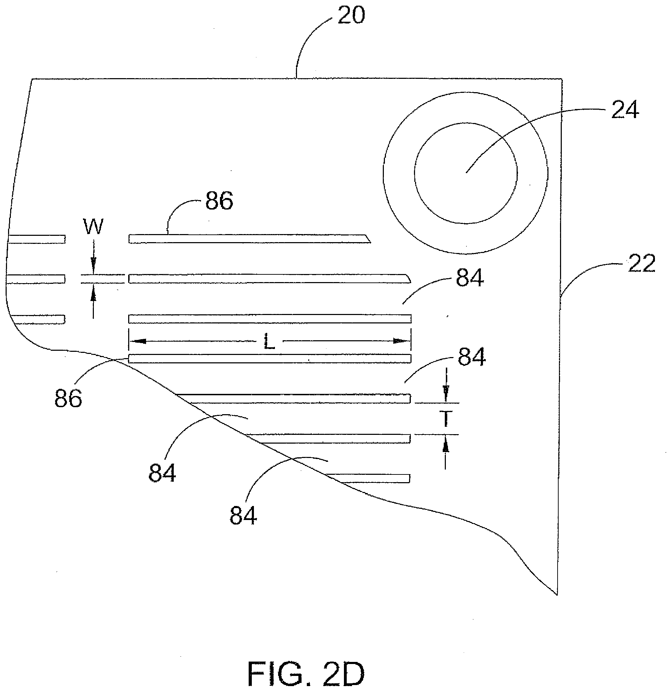

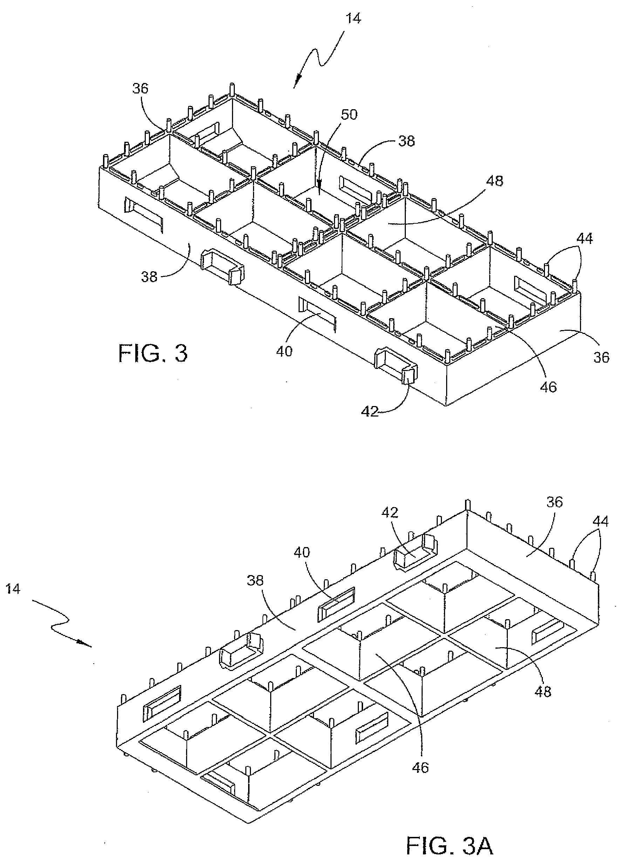

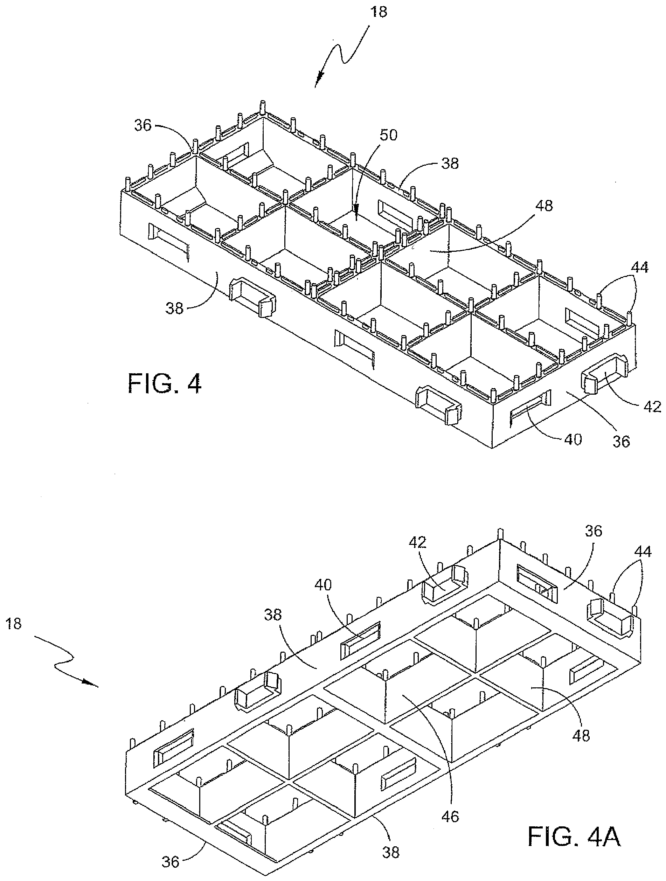

Figure 1 illustrates a screen assembly **10** for use with vibratory screening machines. Screen assembly **10** is shown having multiple screen elements **16** (See, e.g., Figures 2 and 2A-2D) mounted on subgrid structures. The subgrid structures include multiple independent end subgrid units **14** (See, e.g., Figure 3) and multiple independent center subgrid units **18** (See, e.g., Figure 4) that are secured together to form a grid framework having grid openings **50**. Each screen element **16** spans four grid openings **50**. Although screen element **16** is shown as a unit covering four grid openings, screen elements may be provided in larger or smaller sized units. For example, a screen element may be provided that is approximately one-fourth the size of screen element **16** such that it would span a single grid opening **50**. Alternatively, a screen element may be provided that is approximately twice the size of screen element **16** such that it would span all eight grid openings of subgrid **14** or **18**. Subgrids may also be provided in different sizes. For example, subgrid units may be provided that have two grid openings per unit or one large subgrid may be provided for the overall structure, i.e., a single subgrid structure for the entire screen assembly. In Figure 1, multiple independent subgrids **14** and **18** are secured together to form the screen assembly **10**. Screen assembly **10** has a continuous screen assembly screening surface **11** that includes multiple screen element screening surfaces **13**. Each screen element **16** is a single thermoplastic injection molded piece.

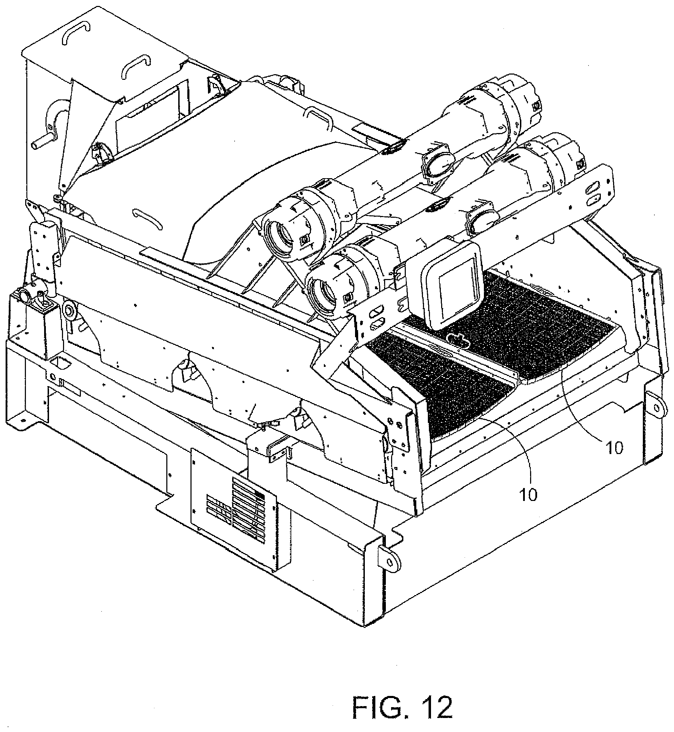

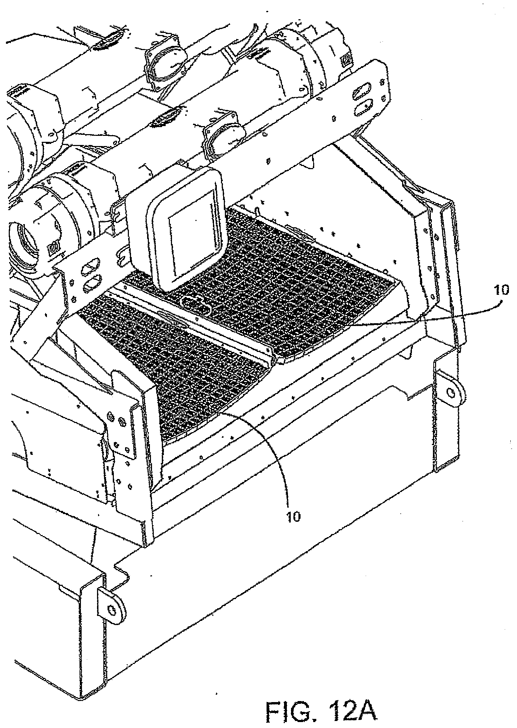

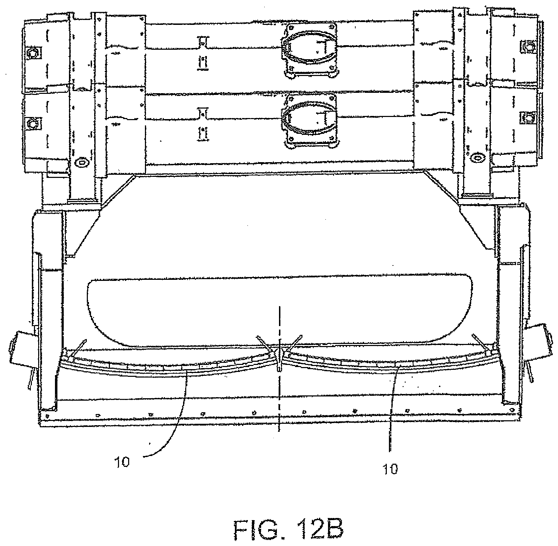

Figure 1A is an enlarged view of a portion of the screen assembly **10** having multiple end subgrids **14** and center subgrids **18**. As discussed below, the end subgrids **14** and center subgrids **18** may be secured together to form the screen assembly. Screen elements **16** are shown attached to the end subgrids **14** and center subgrids **18.** The size of the screen assembly may be altered by attaching more or less subgrids together to form the screen assembly. When installed in a vibratory screening machine, material may be fed onto the screen assembly **10**. See, e.g., Figures 12, 12A, 12B, 13, 13A, 14, and 15. Material smaller than the screen openings of the screen element **16**, passes through the openings in screening element **16** and through the grid openings **50** thereby separating the material from that which is too big to pass through the screen openings of the screen elements **16**.

Figure 1B shows a bottom view of the screen assembly **10** such that the grid openings **50** may be seen below the screen elements. Binder bars **12** are attached to sides of the grid framework. Binder bars **12** may be attached to lock subassemblies together creating the grid framework. Binder bars **12** may include fasteners that attach to fasteners on side members **38** of subgrid units (**14** and **18**) or fasteners on base member **64** of pyramidal subgrid units (**58** and **60**). Binder bars **12** may be provided to increase the stability of the grid framework and may distribute compression loads if the screen assembly is mounted to a vibratory screening machine using compression, e.g., using compression assemblies as described in U.S. Patent No. 7,578,394 and U.S. Patent Application No. 12/460,200 (now U.S. Patent No. 8,443,984). Binder bars may also be provided that include U-shaped members or finger receiving apertures, for undermount or overmount tensioning onto a vibratory screening machine, e.g., see mounting structures described in U.S. Patent Nos. 5,332,101 and 6,669,027. The screen elements and subgrids are securely attached together, as described herein, such that, even under tensioning, the screen assembly screening surface and screen assembly maintain their structural integrity.

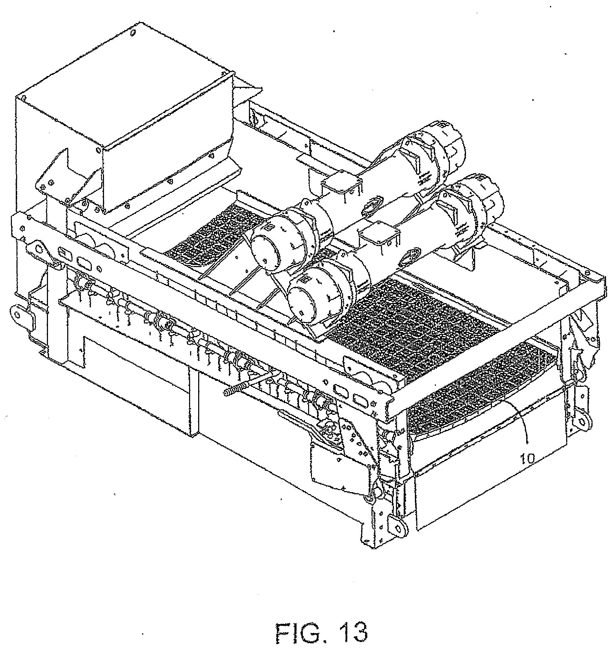

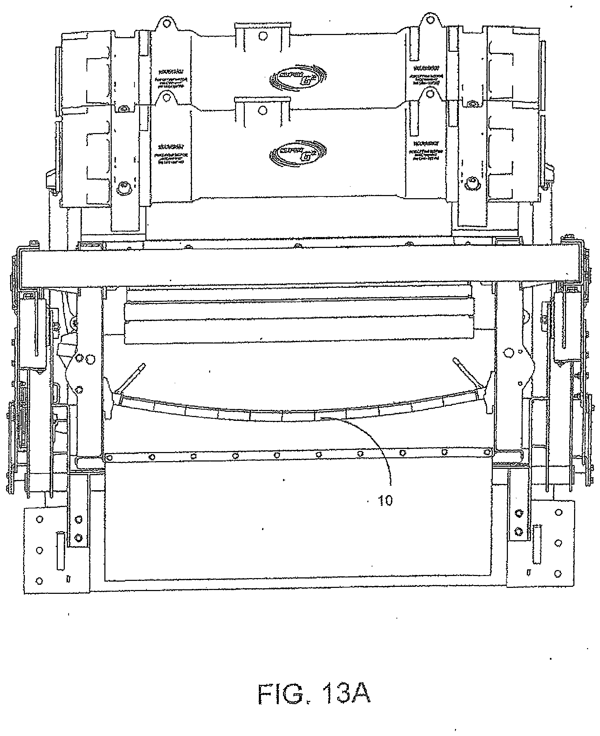

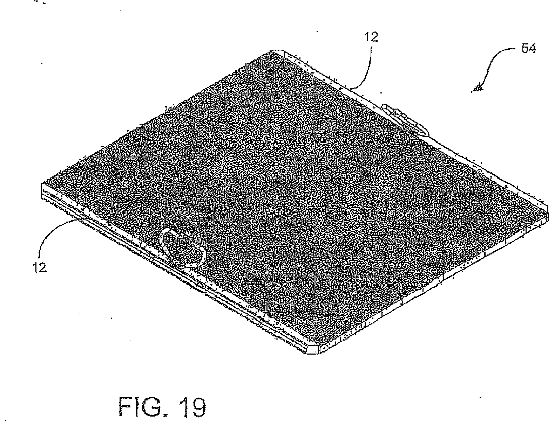

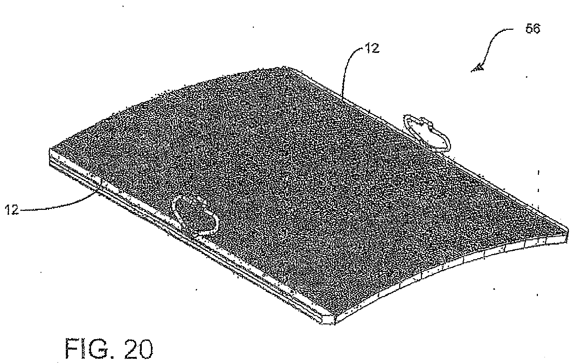

The screen assembly shown in Figure 1 is slightly concave, i.e., the bottom and top surfaces of the screen assembly have a slight curvature. Subgrids **14** and **18** are fabricated such that when they are assembled together this predetermined curvature is achieved. Alternatively, a screen assembly may be flat or convex (see, e.g., Figures 19 and 20). As shown in Figures 12, 12A, 13, and 13A, screen assembly **10** may be installed upon a vibratory screening machine having one or more screening surfaces. In one embodiment, screen assembly **10** may be installed upon a vibratory screening machine by placing screen assembly **10** on the vibratory screening machine such that the binder bars contact end or side members of the vibratory screening machine. Compression force is then applied to binder bar **12**. Binder bars **12** distribute the load from the compression force to the screen assembly. The screen assembly **10** may be configured such that it flexes and deforms into a predetermined concave shape when compression force is applied to binder bar **12**. The amount of deformation and range of concavity may vary according to use, compression forced applied, and shape of the bed support of the vibratory screening machine. Compressing screen assembly **10** into a concave shape when installed in a vibratory screening machine provides many benefits, e.g., easy and simple installation and removal, capturing and centering of materials to be screened, etc. Further benefits are enumerated in U.S. Patent No. 7,578,394. Centering of material streams on screen assembly **10** prevents the material from exiting the screening surface and potentially contaminating previously segregated materials and/or creating maintenance concerns. For larger material flow volumes, screen assembly **10** may be placed in greater compression, thereby increasing the amount of arc of the screen assembly **10**. The greater the amount of arc in screen assembly **10** allows for greater retaining capability of material by screen assembly **10** and prevention of over spilling of material off edges of the screen assembly **10**. Screen assembly **10** may also be configured to deform into a convex shape under compression or remain substantially flat under compression or clamping. Incorporating binder bars **12** into the screen assembly **10** allows for a compression load from a vibratory screening machine to be distributed across the screen assembly **10**. Screen assembly **10** may include guide notches in the binder bars **12** to help guide the screen assembly **10** into place when installed upon a vibratory screening machine having guides. Alternatively, the screen assembly may be installed upon a vibratory screening machine without binder bars **12**. In the alternative embodiment, guide notches may be included in subgrid units. U.S. Patent Application No. 12/460,200 (now U.S. Patent No. 8,443,984) is incorporated herein by reference and any embodiments disclosed therein may be incorporated into embodiments of the present invention described herein.

Figure 2 shows a screen element **16** having substantially parallel screen element end portions **20** and substantially parallel screen element side portions **22** that are substantially perpendicular to the screen element end portions **20**. The screen element screening surface **13** includes surface elements **84** running parallel to the screen element end portions **20** and forming screening openings **86**. See Figure 2D. Surface elements **84** have a thickness **T**, which may vary depending on the screening application and configuration of the screening openings **86**. **T** may be, e.g., approximately 43 microns to approximately 100 microns depending on the open screening area desired and the width **W** of screening openings **86**. The screening openings **86** are elongated slots having a length **L** and a width **W**, which may be varied for a chosen configuration. The width may be a distance of approximately 43 microns to approximately 2000 microns between inner surfaces of each screen surface element **84**. The screening openings are not required to be rectangular but may be thermoplastic injection molded to any shape suitable to a particular screening application, including approximately square, circular and/or oval. For increased stability, the screen surface elements **84** may include integral fiber materials which may run substantially parallel to end portions **20**. The fiber may be an aramid fiber (or individual filaments thereof), a naturally occurring fiber or other material having a relatively high tensile strength. U.S. Patent No. 4,819,809 and U.S. Patent Application No. 12/763,046 (now U.S. Patent No. 8,584,866) are incorporated herein by reference and, as appropriate, the embodiments disclosed therein may be incorporated into the screen assemblies disclosed herein.

The screen element **16** may include attachment apertures **24** configured such that elongated attachment members **44** of a subgrid may pass through the attachment apertures **24**. The attachment apertures **24** may include a tapered bore that may be filled when a portion of the elongated attachment member **44** above the screening element screening surface is melted fastening screen element **16** to the subgrid. Alternatively, the attachment apertures **24** may be configured without a tapered bore allowing formation of a bead on the screening element screening surface when a portion of an elongated attachment member **44** above a screening element screening surface is melted fastening the screen element to the subgrid. Screen element **16** may be a single thermoplastic injection molded piece. Screen element **16** may also be multiple thermoplastic injection molded pieces, each configured to span one or more grid openings. Utilizing small thermoplastic injection molded screen elements **16**, which are attached to a grid framework as described herein, provides for substantial advantages over prior screen assemblies. Thermoplastic injection molding screen elements **16** allow for screening openings **86** to have widths **W** as small as approximately 43 microns. This allows for precise and effective screening. Arranging the screen elements **16** on subgrids, which may also be thermoplastic injection molded, allows for easy construction of complete screen assemblies with very fine screening openings. Arranging the screen elements **16** on subgrids also allows for substantial variations in overall size and/or configuration of the screen assembly **10**, which may be varied by including more or less subgrids or subgrids having different shapes. Moreover, a screen assembly may be constructed having a variety of screening opening sizes or a gradient of screening opening sizes simply by incorporating screen elements **16** with the different size screening openings onto subgrids and joining the subgrids in the desired configuration.

Figure 2B and Figure 2C show a bottom of the screen element **16** having a first screen element support member **28** extending between the end portions **20** and being substantially perpendicular to the end portions **20**. FIG 2B also shows a second screen element support member **30** orthogonal to the first screen element support member **28** extending between the side edge portions **22** being approximately parallel to the end portions **20** and substantially perpendicular to the side portions **22**. The screen element may further include a first series reinforcement members **32** substantially parallel to the side edge portions **22** and a second series of reinforcement members **34** substantially parallel to the end portions **20**. The end portions **20**, the side edge portions **22**, the first screen element support member **28**, the second screen element support member **30**, the first series reinforcement members **32**, and the second series of reinforcement members **34** structurally stabilize the screen surface elements **84** and screening openings **86** during different loadings, including distribution of a compression force and/or vibratory loading conditions.

Figure 3 and Figure 3A illustrate an end subgrid **14** unit. The end subgrid unit **14** includes parallel subgrid end members **36** and parallel subgrid side members **38** substantially perpendicular to the subgrid end members **36**. The end subgrid unit **14** has fasteners along one subgrid end member **36** and along the subgrid side members **38**. The fasteners may be clips **42** and clip apertures **40** such that multiple subgrid units **14** may be securely attached together. The subgrid units may be secured together along their respective side members **38** by passing the clip **42** into the clip aperture **40** until extended members of the clip **42** extend beyond clip aperture **40** and subgrid side member **38**. As the clip **42** is pushed into the clip aperture **40**, the clip's extended members will be forced together until a clipping portion of each extended member is beyond the subgrid side member **38** allowing the clipping portions to engage an interior portion of the subgrid side member **38**. When the clipping portions are engaged into the clip aperture, subgrid side members of two independent subgrids will be side by side and secured together. The subgrids may be separated by applying a force to the clip's extended members such that the extended members are moved together allowing for the clipping portions to pass out of the clip aperture. Alternatively, the clips **42** and clip apertures **40** may be used to secure subgrid end member **36** to a subgrid end member of another subgrid, such as a center subgrid (Fig. 4). The end subgrid may have a subgrid end member **36** that does not have any fasteners. Although the fasteners shown in drawings are clips and clip apertures, alternative fasters and alternative forms of clips and apertures may be used, including other mechanical arrangements, adhesives, etc.

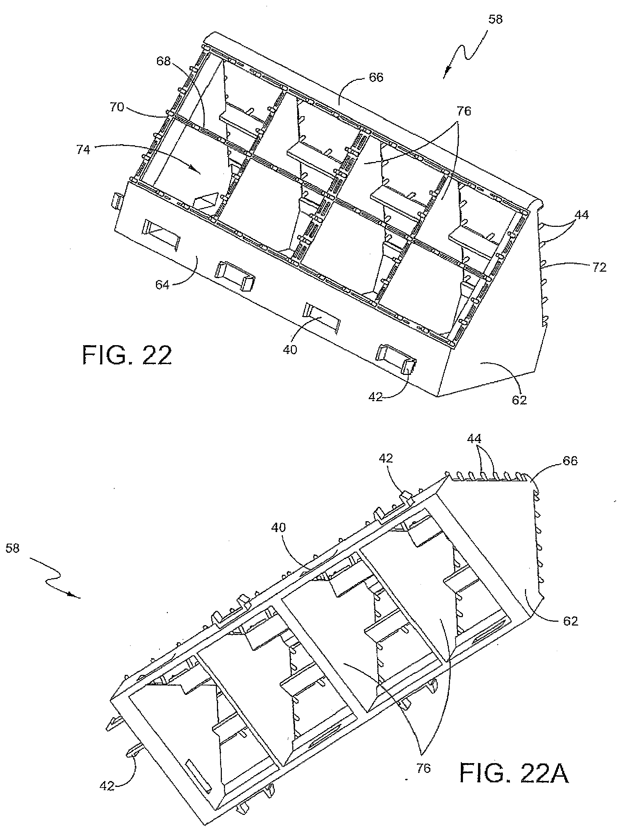

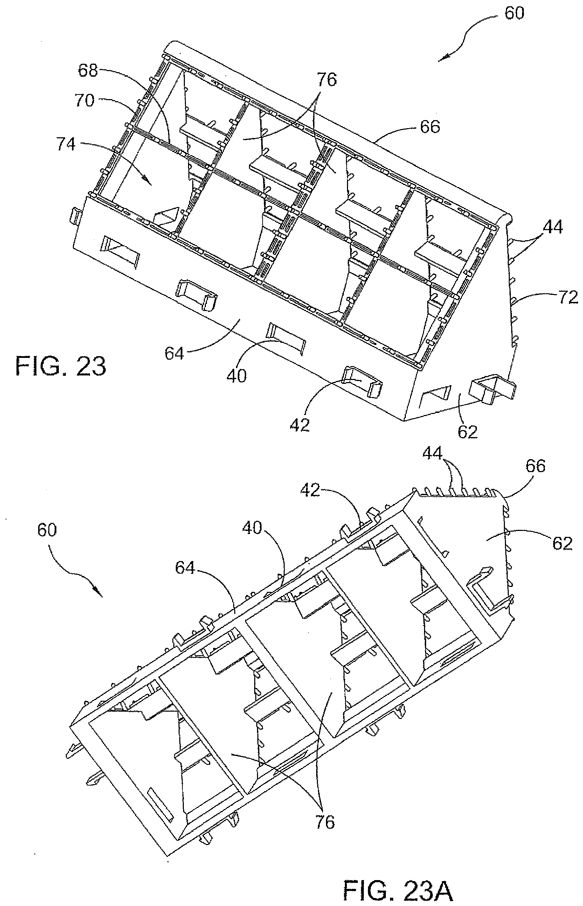

Constructing the grid framework from subgrids, which may be substantially rigid, creates a strong and durable grid framework and screen assembly **10**. Screen assembly **10** is constructed so that it can withstand heavy loading without damage to the screening surface and supporting structure. For example, the pyramidal shaped grid frameworks shown in Figures 22 and 23 provide a very strong pyramid base framework that supports individual screen elements capable of very fine screening, having screening openings as small as 43 microns. Unlike the pyramidal screen assembly embodiment of the present invention described herein, existing corrugated or pyramid type wire mesh screen assemblies are highly susceptible to damage and/or deformation under heavy loading. Thus, unlike current screens, the present invention provides for screen assemblies having very small and very precise screening openings while simultaneously providing substantial structural stability and resistance to damage thereby maintaining precision screening under a variety of load burdens. Constructing the grid framework from subgrids also allows for substantial variation in the size, shape, and/or configuration of the screen assembly by simply altering the number and/or type of subgrids used to construct the grid framework.

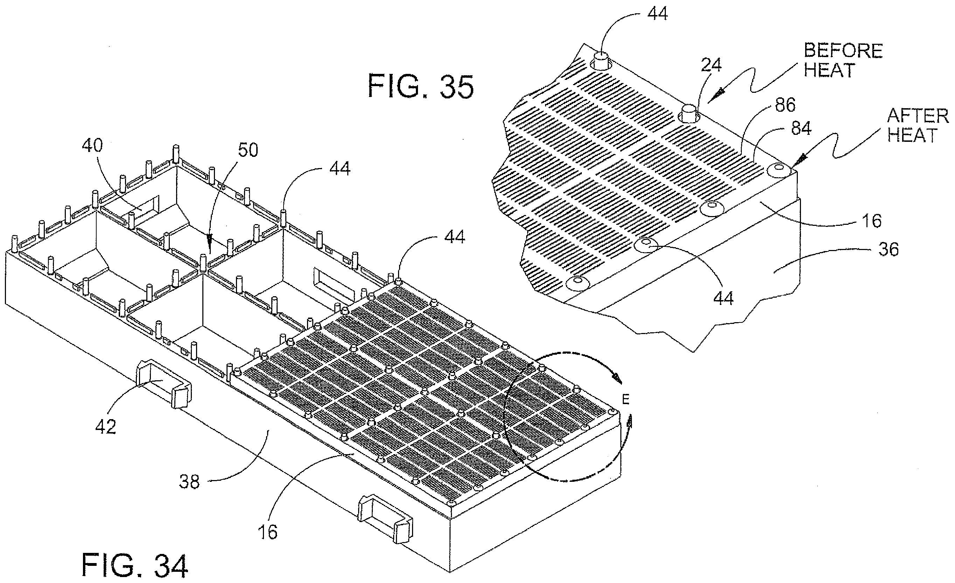

End subgrid unit **14** includes a first subgrid support member **46** running parallel to subgrid side members **38** and a second subgrid support member **48** orthogonal to the first subgrid support member **46** and perpendicular to the subgrid side members **38**. Elongated attachment members **44** may be configured such that they mate with the screen element attachment apertures **24**. Screen element **16** may be secured to the subgrid **14** via mating the elongated attachment members **44** with screen element attachment apertures **24**. A portion of elongated attachment member **44** may extend slightly above the screen element screening surface when the screen element **16** is attached to the end subgrid **14**. The screen element attachment apertures **24** may include a tapered bore such that a portion of the elongated attachment members **44** extending above the screen element screening surface may be melted and fill the tapered bore. Alternatively, screen element attachment apertures **24** may be without a tapered bore and the portion of the elongated attachment members extending above the screening surface of the screening element **16** may be configured to form a bead on the screening surface when melted. See Figures 34 and 35. Once attached, the screen element **16** will span at least one grid opening **50**. Materials passing through the screening openings **86** will pass through grid opening **50**. The arrangement of elongated attachment members **44** and the corresponding arrangement of screen element attachment apertures **24** provide a guide for attachment of screen elements **16** to subgrids simplifying assembly of subgrids. The elongated attachment members **44** pass through the screen element attachment apertures **24** guiding the screen element into correct placement on the surface of the subgrid. Attachment via elongated attachment members **44** and screen element attachment apertures **24** further provides a secure attachment to the subgrid and strengthens the screening surface of the screen assembly **10**.

Figure 4 shows a center subgrid **18**. As shown in Figure 1 and Figure 1A, the center subgrid **18** may be incorporated into a screen assembly. The center subgrid **18** has clips **42** and clip apertures **40** on both subgrid end members **36**. The end subgrid **14** has clips **42** and clip apertures **40** on only one of two subgrid end members **36**. Center subgrids **18** may be secured to other subgrids on each of its subgrid end members and subgrid side members.

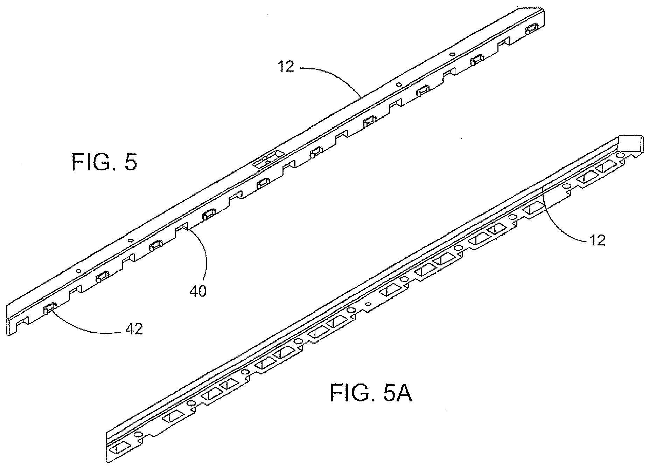

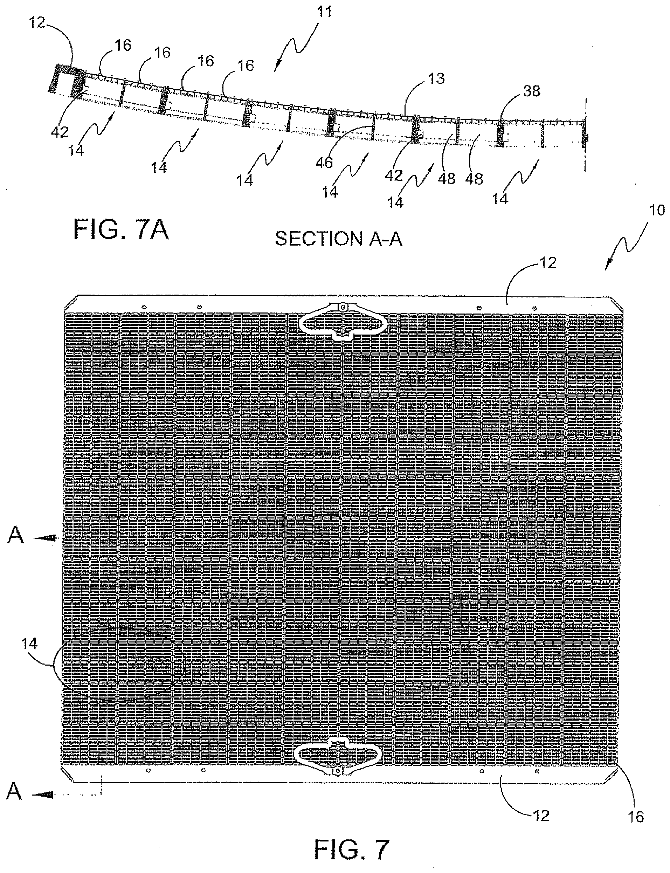

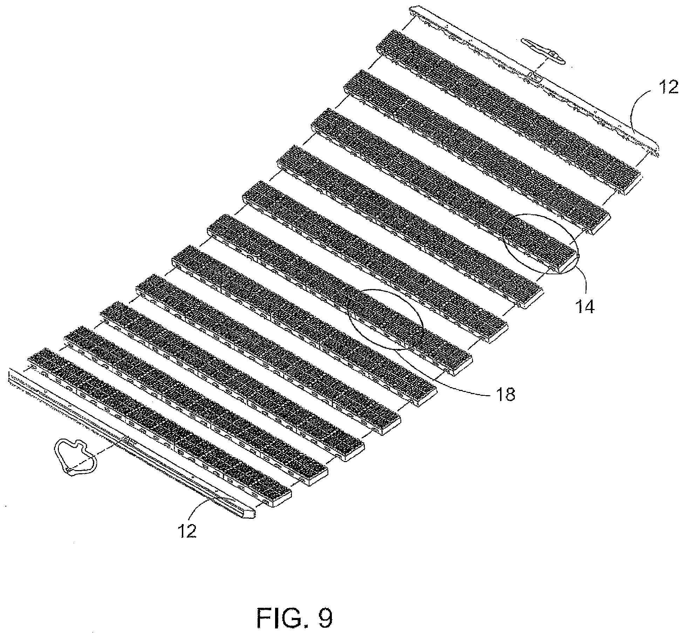

Figure 5 shows a top view of binder bar **12**. Figure 5A shows a bottom view of binder bar **12**. Binder bars **12** include clips **42** and clip apertures **40** such that binder bar **12** may be clipped to a side of an assembly of screen panels (see Figure 9). As with subgrids, fasteners on the binder bar **12** are shown as clips and clip apertures but other fasteners may be utilized to engage fasteners of the subgrids. Handles may be attached to binder bars **12** (see, e.g., Figure 7) which may simplify transportation and installation of a screen assembly. Tags and/or labels may also be attached to binder bars. As discussed above, binder bars **12** may increase the stability of the grid framework and may distribute compression loads of a vibratory screening machine if the screen assembly is placed under compression as shown in U.S. Patent No. 7,578,394 and U.S. Patent Application No. 12/460,200 (now U.S. Patent No. 8,443,984).

The screening members, screening assemblies and parts thereof, including connecting members/fasteners as described herein, may include nanomaterial dispersed therein for improved strength, durability and other benefits associated with the use of a particular nanomaterial or combination of different nanomaterials. Any suitable nanomaterial may be used, including, but not limited to nanotubes, nanofibers and/or elastomeric nanocomposites. The nanomaterial may be dispersed in the screening members and screening assemblies and parts thereof in varying percentages, depending on the desired properties of the end product. For example, specific percentages may be incorporated to increase member strength or to make a screening surface wear resistant. Use of a thermoplastic injection molded material having nanomaterials dispersed therein may provide for increased strength while using less material. Thus, structural members, include subgrid framework supports and screen element supporting members may be made smaller and stronger and/or lighter. This is particularly beneficial when fabricating relatively small individual components that are built into a complete screen assembly. Also, instead of producing individual subgrids that clip together, one large grid structure having nanomaterials dispersed therein, may be fabricated that is relatively light and strong. Individual screen elements, with or without nanomaterials, may then be attached to the single complete grid framework structure. Use of nanomaterials in a screen element will provide increased strength while reducing the weight and size of the element. This may be especially helpful when injection molding screen elements having extremely small openings as the openings are supported by the surrounding materials/members. Another advantage to incorporating nanomaterials into the screen elements is an improved screening surface that is durable and resistant to wear. Screen surfaces tend to wear out through heavy use and exposure to abrasive materials and use of a thermoplastic and/or a thermoplastic having abrasive resistant nanomaterials, provides for a screening surface with a long life.

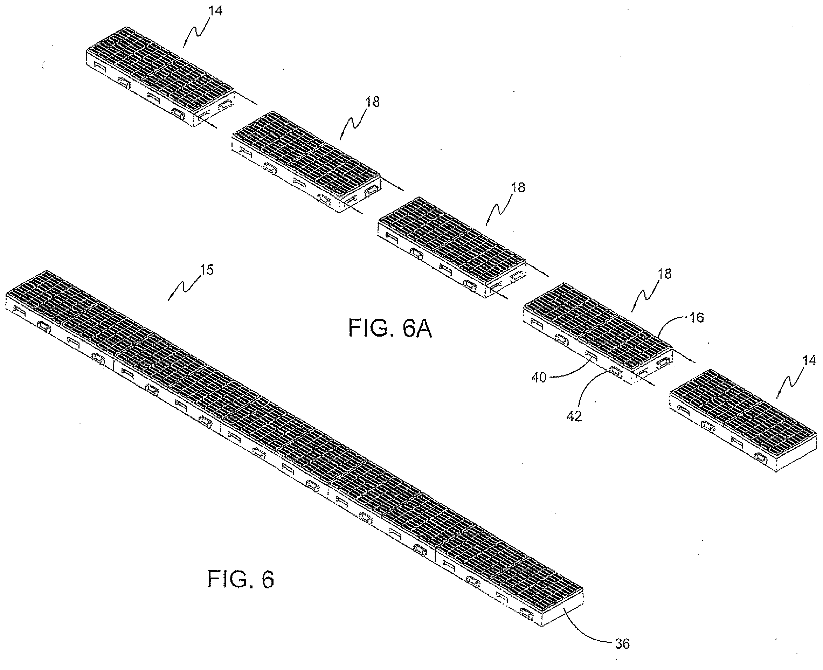

Figure 6 shows a subassembly **15** of a row of subgrid units. Figure 6A is an exploded view of the subassembly in Figure 6 showing individual subgrids and direction of attachment to each other. The subassembly includes two end subgrid units **14** and three center subgrid units **18**. The end subgrid units **14** form the ends of the subassembly while the center subgrid units **18** are used to join the two end subgrid units **14** via connections between the clips **42** and clip apertures **40**. The subgrid units shown in Figure 6 are shown with attached screen elements **16**. By fabricating the screen assembly from subgrids and into the subassembly, each subgrid may be constructed to a chosen specification and the screen assembly may be constructed from multiple subgrids in a configuration required for the screening application. The screen assembly may be quickly and simply assembled and will have precise screening capabilities and substantial stability under load pressures. Because of the structure configuration of the grid framework and screen elements 16, the configuration of multiple individual screen elements forming the screening surface of the screen assembly **10** and the fact that the screen elements **16** are thermoplastic injection molded, the openings in screen elements **16** are relatively stable and maintain their opening sizes for optimal screening under various loading conditions, including compression loads and concavity deflections and tensioning.

Figure 7 shows a screen assembly **10** with binder bars **12** having handles attached to the binder bars **12**. The screen assembly is made up of multiple subgrid units secured to each other. The subgrid units have screen elements 16 attached to their top surfaces. Figure 7A is a cross-section of Section A-A of Figure 7 showing individual subgrids secured to screen elements forming a screening surface. As reflected in Figure 7A, the subgrids may have subgrid support members **48** configured such that screen assembly has a slightly concave shape when the subgrid support members **48** are fastened to each other via clips **42** and clip apertures **40**. Because the screen assembly is constructed with a slightly concave shape it may be configured to deform to a desired concavity upon application of a compression load without having to guide the screen assembly into a concave shape. Alternatively, the subgrids may be configured to create a slightly convex screen assembly or a substantially flat screen assembly.

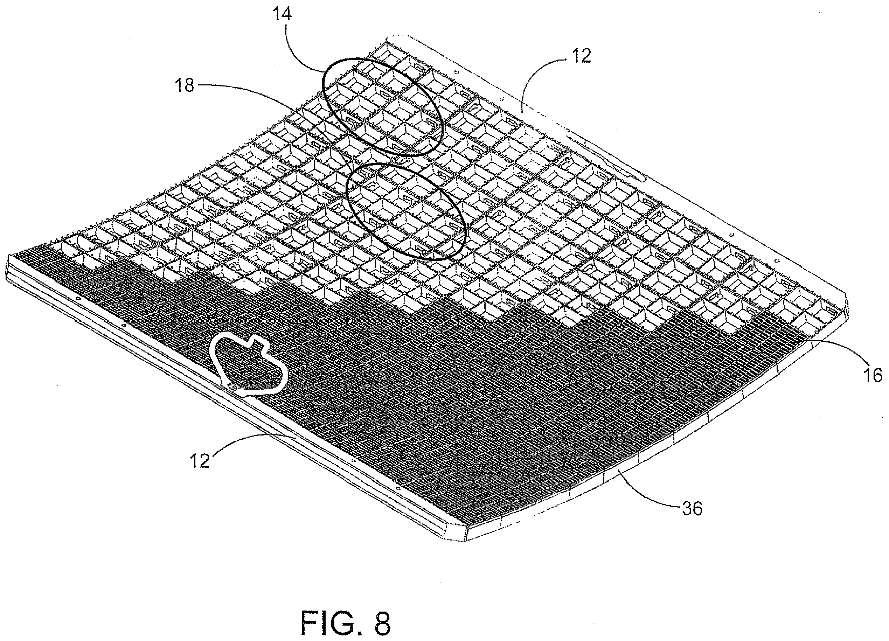

Figure 8 is a top isometric view of a screen assembly partially covered with screen elements **16**. This figure shows end subgrid units **14** and center subgrid units **18** secured to form a screen assembly. The screening surface may be completed by attaching screen elements **16** to the uncovered subgrid units shown in the figure. Screen elements **16** may be attached to individual subgrids prior to construction of the grid framework or attached to subgrids after subgrids have been fastened to each other into the grid framework.

Figure 9 is an exploded isometric view of the screen assembly shown in Figure 1. This figure shows eleven subassemblies being secured to each other via clips and clip apertures along subgrid end members of subgrid units in each subassembly. Each subassembly has two end subgrid units **14** and three center subgrid units **18**. Binder bars **12** are clipped at each side of the assembly. Different size screen assemblies may be created using different numbers of subassemblies or different numbers of center subgrid units in each subassembly. An assembled screen assembly has a continuous screen assembly screening surface made up of multiple screen element screening surfaces.

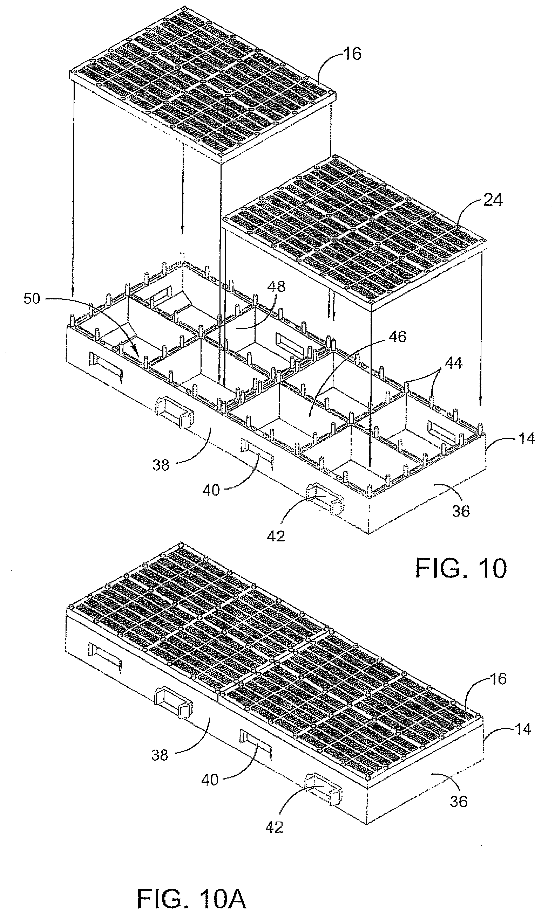

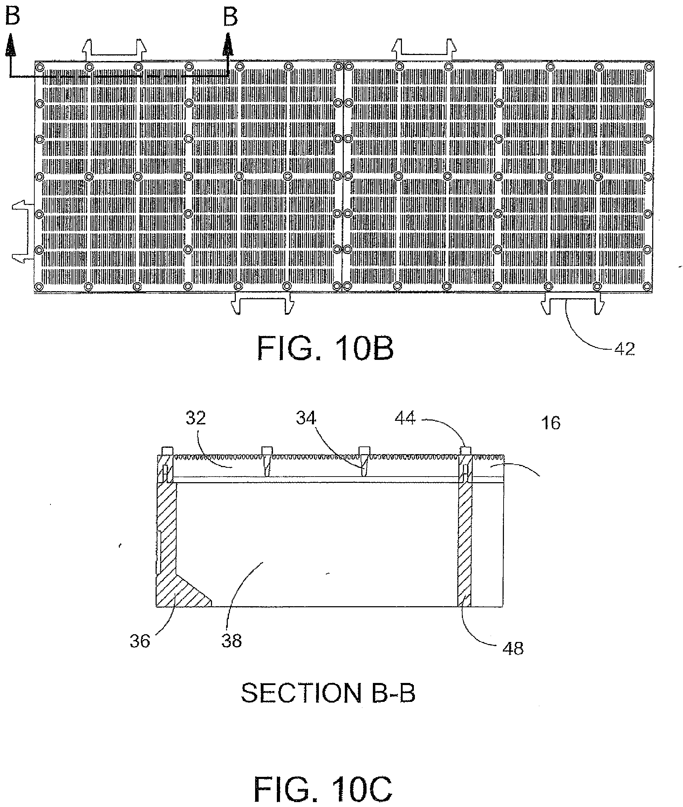

Figures 10 and 10A illustrate attachment of screen elements **16** to end subgrid unit **14**, according to an exemplary embodiment of the present invention. Screen elements **16** may be aligned with end subgrid unit **14** via the elongated attachment members **44** and the screen element attachment apertures **24** such that the elongated **20** attachment members **44** pass through the screen element attachment apertures **24** and extend slightly beyond the screen element screening surface. The elongated attachment members **44** may be melted to fill the tapered bores of the screen element attachment apertures **24** or, alternatively, to form beads upon the screen element screening surface, securing the screen element **16** to the subgrid unit **14**. Attachment via elongated attachment members **44** and screen element attachment apertures **24** is only one embodiment of the present invention. Alternatively, screen element **16** may be secured to end subgrid unit **14** via adhesive, fasteners and fastener apertures, laser welding, etc. Although shown having two screen elements for each subgrid, the present invention includes alternate configurations of one screen element per subgrid, multiple screen elements per subgrid, one screen element per subgrid opening, or having a single screen element cover multiple subgrids. The end subgrid **14** may be substantially rigid and may be formed as a single thermoplastic injection molded piece.

Figure 10B is a top view of the end subgrid unit shown in Figure 10A with screen elements **16** secured to the end subgrid. Figure 10C is an enlarged cross-section of Section B-B of the end subgrid unit in Figure 10B. Screen element **16** is placed upon the end subgrid unit such that elongated attachment member **44** passes through the attachment aperture and beyond a screening surface of the screen element. The portion of the elongated attachment member **44** passing through the attachment aperture and beyond the screening surface of the screen element may be melted to attach the screen element **16** to the end subgrid unit as described above.

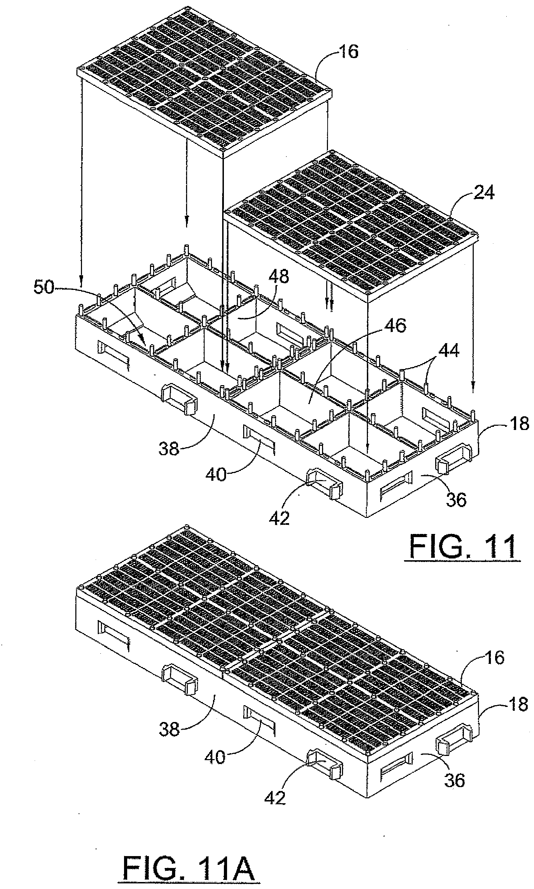

Figure 11 and Figure 11A illustrate attachment of screen elements **16** to center subgrid unit **18**, according to an exemplary embodiment of the present invention. Screen elements **16** may be aligned with center subgrid unit **18** via the elongated attachment members **44** and the screen element attachment apertures **24** such that the elongated attachment members **44** pass through the screen element attachment apertures **24** and extend slightly beyond the screen element screening surface. The elongated attachment members **44** may be melted to fill the tapered bores of the screen element attachment apertures **24** or, alternatively, to form beads upon the screen element screening surface, securing the screen element **16** to center subgrid unit **18**. Attachment via elongated attachment members **44** and screen element attachment apertures **24** is only one embodiment of the present invention. Alternatively, screen element **16** may be secured to center subgrid unit **14** via adhesive, fasteners and fastener apertures, etc. Although shown having two screen elements for each subgrid, the present invention includes alternate configurations of one screen element per subgrid, one screen element per subgrid opening, multiple screen elements per subgrid, or having a single screen element cover multiple subgrid units. The center subgrid unit **18** may be substantially rigid and may be a single thermoplastic injection molded piece.

Figures 12 and 12A show screen assemblies **10** installed on a vibratory screening machine having two screening surfaces. The vibratory screening machine may have compression assemblies on side members of the vibratory screening machine, as shown in U.S. Patent No. 7,578,394. A compression force may be applied to a binder bar or a side member of the screen assembly such that the screen assembly deflects downward into a concave shape. A bottom side of the screen assembly may mate with a screen assembly mating surface of the vibratory screening machine as shown in U.S. Patent No. 7,578,394 and U.S. Patent Application No. 12/460,200 (now U.S. Patent No. 8,443,984). The vibratory screening machine may include a center wall member configured to receive a binder bar of a side member of the screen assembly opposite of the side member of the screen assembly receiving compression. The center wall member may be angled such that a compression force against the screen assembly deflects the screen assembly downward. The screen assembly may be installed in the vibratory screening machine such that it is configured to receive material for screening. The screen assembly may include guide notches configured to mate with guides of the vibratory screening machine such that the screen assembly may be guided into place during installation and may include guide assembly configurations as shown in U.S. Patent Application No. 12/460,200 (now U.S. Patent No. 8,443,984).

Figure 12B is a front view of the vibratory screening machine shown in Figure 12. Figure 12B shows screen assemblies **10** installed upon the vibratory screening machine with compression applied to deflect the screen assemblies downward into a concave shape. Alternatively, the screen assembly may be preformed in a predetermined concave shape without compression force.

Figures 13 and 13A show installations of screen assembly **10** in a vibratory screening machine having a single screening surface. The vibratory screening machine may have a compression assembly on a side member of the vibratory screening machine. Screen assembly **10** may be placed into the vibratory screening machine as shown. A compression force may be applied to a binder bar or side member of the screen assembly such that the screen assembly deflects downward into a concave shape. A bottom side of the screen assembly may mate with a screen assembly mating surface of the vibratory screening machine as shown in U.S. Patent No. 7,578,394 and U.S. Patent Application No. 12/460,200 (now U.S. Patent No. 8,443,984). The vibratory screening machine may include a side member wall opposite of the compression assembly configured to receive a binder bar or a side member of the screen assembly. The side member wall may be angled such that a compression force against the screen assembly deflects the screen assembly downward. The screen assembly may be installed in the vibratory screening machine such that it is configured to receive material for screening. The screen assembly may include guide notches configured to mate with guides of the vibratory screening machine such that the screen assembly may be guided into place during installation.

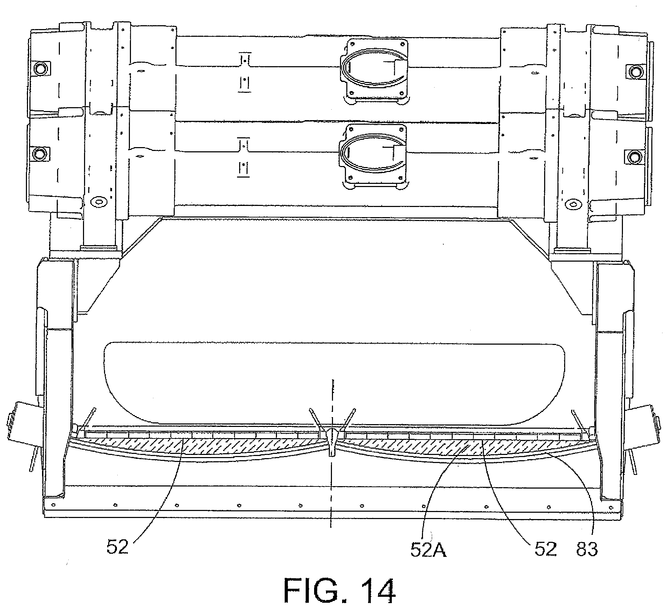

Figure 14 is a front view of screen assemblies **52** installed upon a vibratory screening machine having two screening surfaces, according to an exemplary embodiment of the present invention. Screen assembly **52** is an alternate embodiment where the screen assembly has been preformed to fit into the vibratory screening machine without applying a load to the screen assembly, i.e., screen assembly **52** includes a bottom portion **52A** that is formed such that it mates with a bed **83** of the vibratory screening machine. The bottom portion **52A** may be formed integrally with screen assembly **52** or maybe a separate piece. Screen assembly **52** includes similar features as screen assembly **10,** including subgrids and screen elements but also includes bottom portion **52A** that allows it to fit onto bed **83** without being compressed into a concave shape. A screening surface of screen assembly **52** may be substantially flat, concave or convex. Screen assembly **52** may be held into place by applying a compression force to a side member of screen assembly **52.** A bottom portion of screen assembly **52** may be preformed to mate with any type of mating surface of a vibratory screening machine.

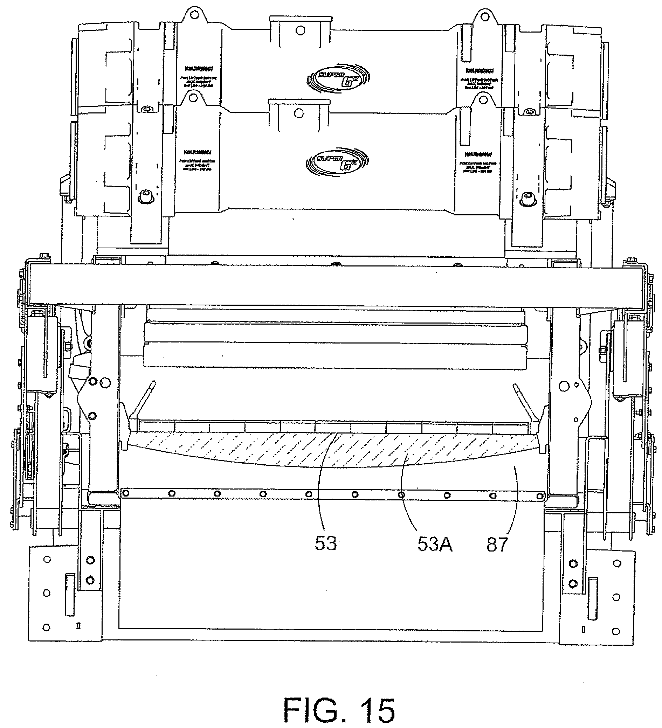

Figure 15 is a front view of screen assembly **53** installed upon a vibratory screening machine having a single screening surface, according to an exemplary embodiment of the present invention. Screen assembly **53** has similar features of screen assembly **52** described above, including a bottom portion **53A** that is formed such that it mates with a bed **87** of the vibratory screening machine.

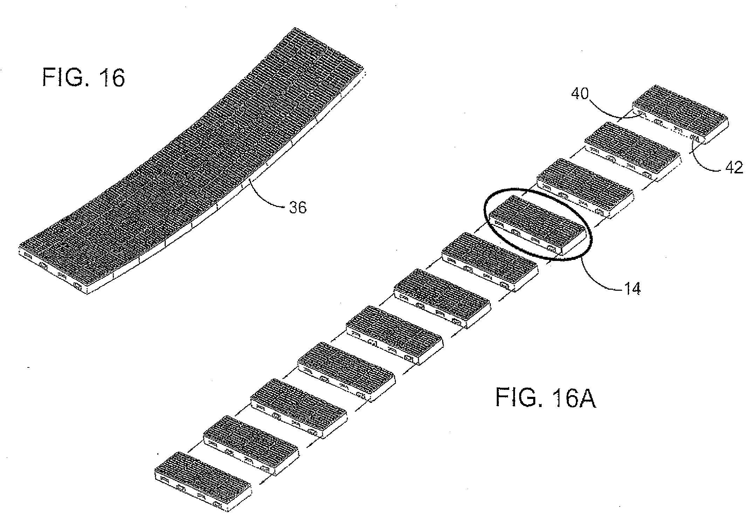

Figure 16 shows an end support frame subassembly and Figure 16A shows an exploded view of the end support frame subassembly shown in Figure 16. The end support frame subassembly shown in Figure 16 incorporates eleven end subgrid units **14.** Alternate configurations having more or less end subgrid units may be utilized. The end subgrid units **14** are secured to each other via clips **42** and clip apertures **40** along side members of the end subgrid units **14.** Figure 16A shows attachment of individual end subgrid units such that the end support frame subassembly is created. As shown, the end support frame subassembly is covered in screen elements **16.** Alternatively, the end support frame subassembly may be constructed from end subgrids prior to attachment of screen elements or partially from pre-covered subgrid units and partially from uncovered subgrid units.

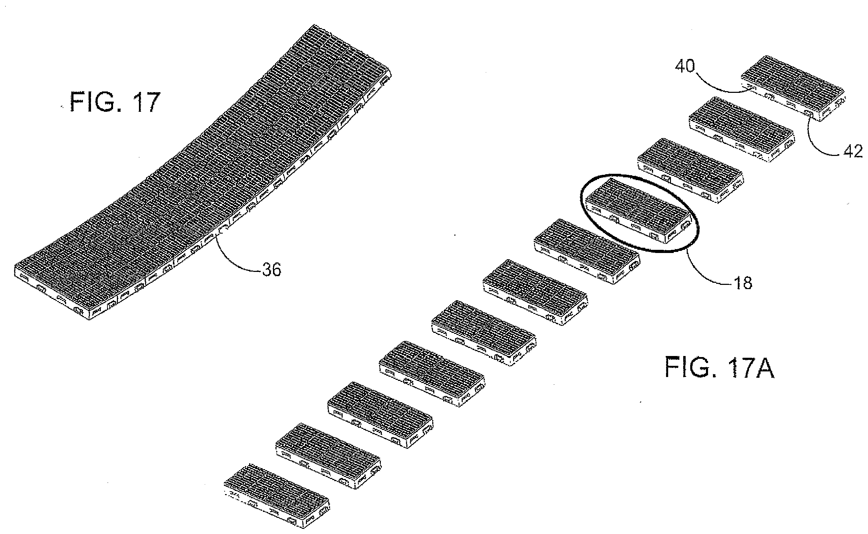

Figure 17 shows a center support frame assembly and Figure 17A shows an exploded view of the center support frame subassembly shown in Figure 17. The center support frame assembly shown in Figure 17 incorporates eleven center subgrid units **18.** Alternate configurations having more or less center subgrid units may be utilized. The center subgrid units **18** are secured to each other via clips **42** and clip apertures **40** along side members of the center subgrid units **18.** Figure 17A shows attachment of individual center subgrid units such that the center support frame subassembly is created. As shown, the center support frame subassembly is covered in screen elements **16.** Alternatively, the center support frame subassembly may be constructed from center subgrids prior to attachment of screen elements or partially from pre-covered subgrid units and partially from uncovered subgrid units.

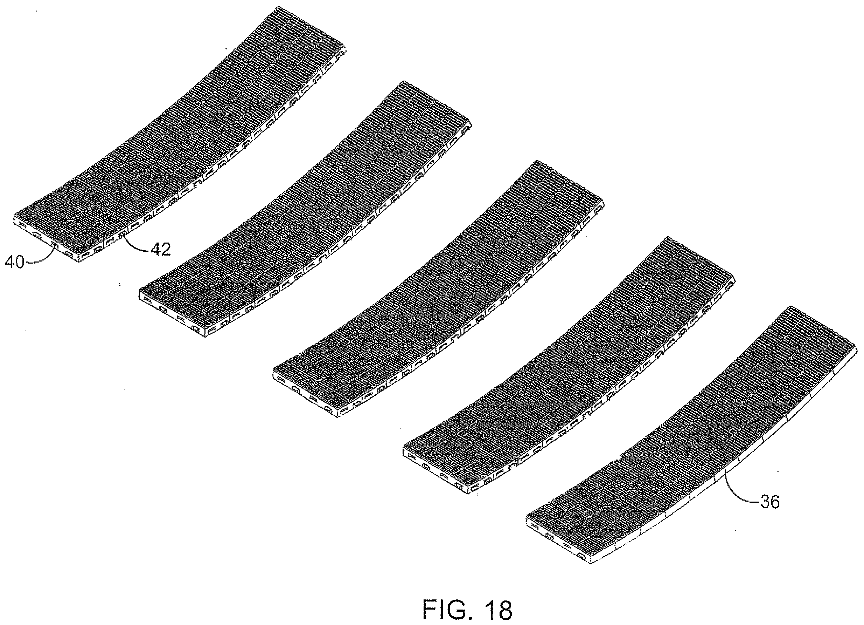

Figure 18 shows an exploded view of a screen assembly having three center support frame subassemblies and two end support frame subassemblies. The support frame assemblies are secured to each other via the clips **42** and clip apertures **40** on the subgrid end members. Each center subgrid unit is attached to two other subgrid units via end members. End members **36** of end subgrid units having no clips **42** or clip apertures **40** form the end edges of the screen assembly. The screen assembly may be made with more or less center support frames subassemblies or larger or smaller frame subassemblies. Binder bars may be added to side edges of the screen assembly. As shown, the screen assembly has screen elements installed upon the subgrid units prior to assembly. Alternatively, screen elements **16** may be installed after all or a portion of assembly.

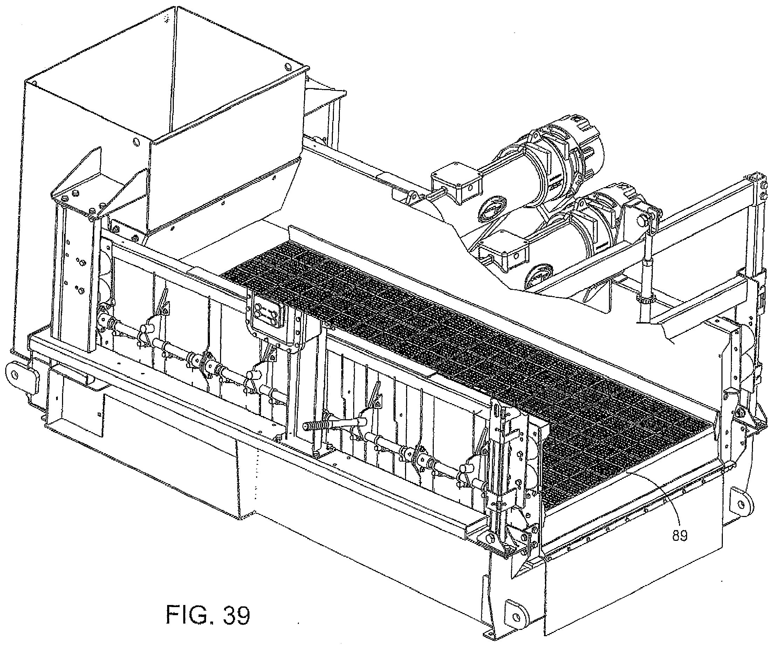

Figure 19 illustrates an alternative embodiment of the present disclosure where screen assembly **54** is substantially flat. Screen assembly **54** may be flexible such that it can be deformed into a concave or convex shape or may be substantially rigid. Screen assembly **54** may be used with a flat screening surface. See Figure 39. As shown, screen assembly **54** has binder bars **12** attached to side portions of the screen assembly **54.** Screen assembly **54** may be configured with the various embodiments of the grid structures and screen elements described herein.

Figure 20 illustrates an alternative embodiment of the present disclosure wherein screen assembly **56** is convex. Screen assembly **56** may be flexible such that it can be deformed into a more convex shape or may be substantially rigid. As shown, screen assembly **56** has binder bars **12** attached to side portions of the screen assembly. Screen assembly **56** may be configured with the various embodiments of the grid structures and screen elements described herein.

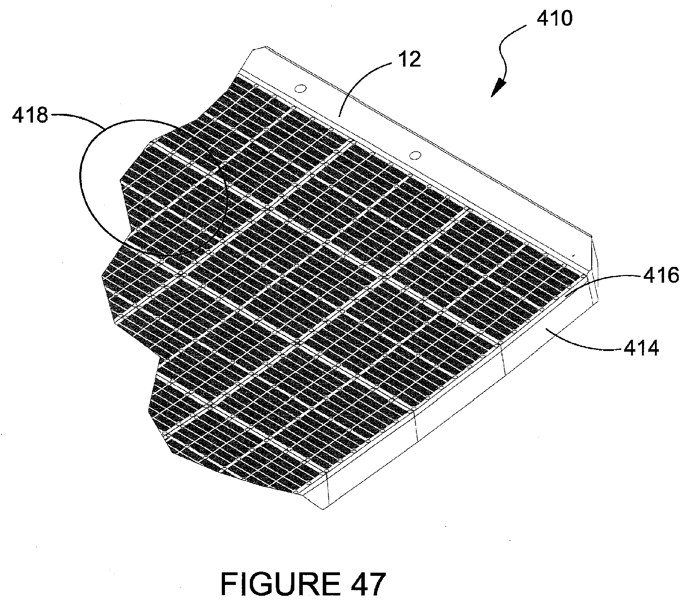

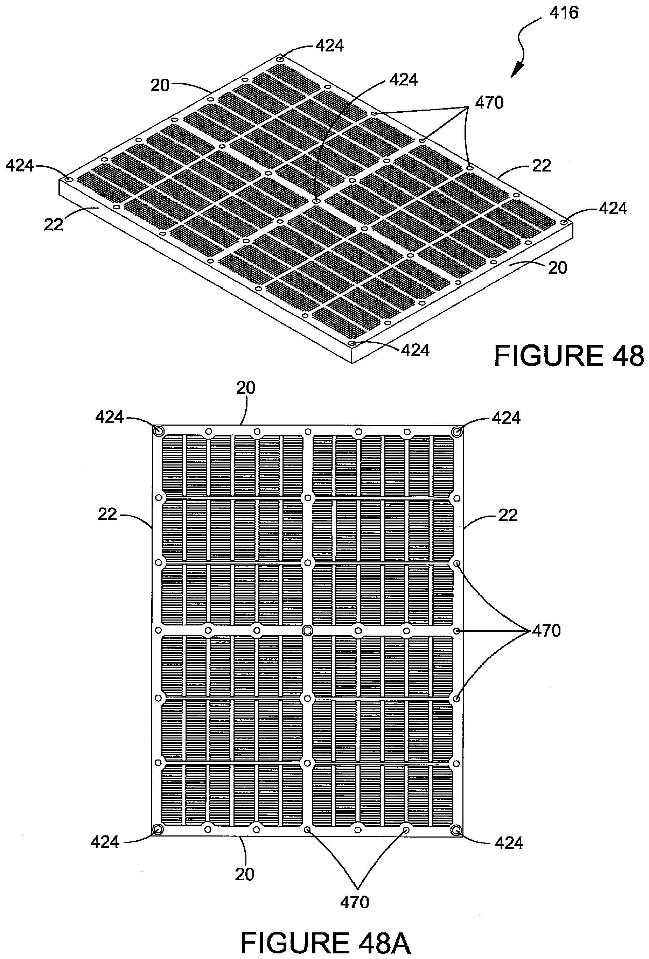

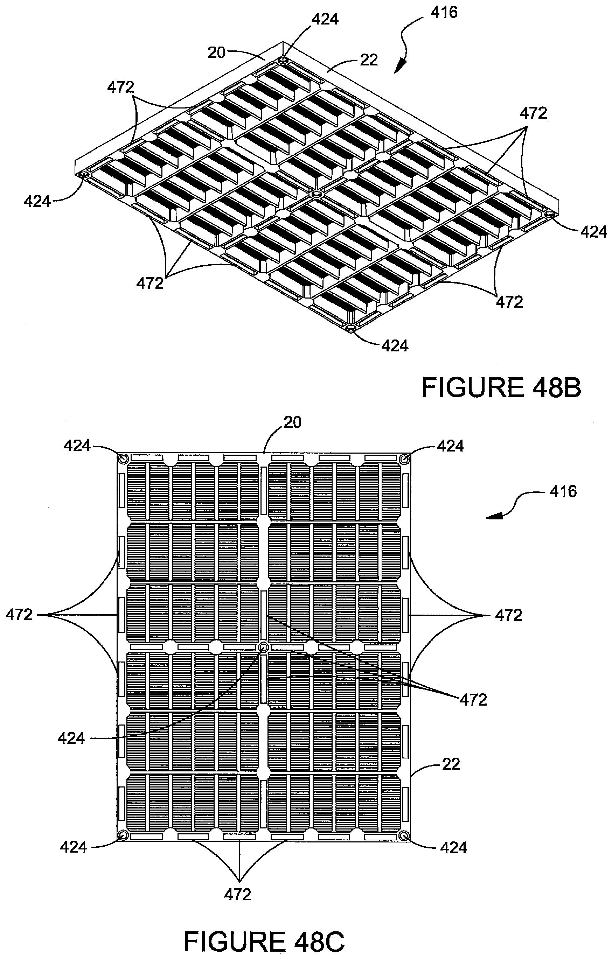

In alternative embodiments of the present disclosure, screen assembly **410** is provided having screen elements **416,** center subgrid units **418,** and end subgrid units **414.** See, e.g., Figure 47. Screen element **416** may be thermoplastic injection molded and may include all of the features of screen element **16** provided above. Screen element **416** may be incorporated into any of the screen assemblies disclosed herein (e.g., screen assemblies **10** and **52-54,** illustrated in Figures 1, 14, 15, and 19, respectively) and is interchangeable with screen element **16.** Screen element **416** may include location apertures **424,** which may be located at a center of screen element **416** and at 10 each of the four corners of screen element **416.** See, e.g., Figures 48 and 48A. More or less location apertures **424** may be provided on screen element **416** and multiple configurations may be provided. The location apertures **424** may be substantially the same as attachment apertures **24** and may be utilized to locate the screen element **416** on a subgrid. Alternatively, screen element **416** may be located without location apertures **424.** Screen element **416** may include a plurality of tapered counter bores **470,** which may facilitate extraction of screen element **416** from a mold, which mold may have injector pins configured to push the screen element out of the mold. See, e.g., Figures 48 and 48A.

On a bottom side of screen element **416,** a first adhesion arrangement may be incorporated, which may be a plurality of extensions, cavities or a combination of extensions and cavities. The first adhesion arrangement of screen element **416** may be configured to mate with a complementary second adhesion arrangement on a top surface of a subgrid unit. For example, in Figures 48B and 48C a plurality of cavity pockets **472** are provided. The plurality of cavity pockets **472** may be arranged along end portions **20** and side portions **22** between the location apertures **424.** Additional cavity pockets **272** may be arranged along all or a portion of first support screen element member **28** and along all or a portion of second screen element support member **30.** Although shown as elongated cavities, cavity pockets **472** may have a variety of configurations, sizes, and depths. Moreover, the first adhesion arrangement on screen element **416** may be extensions rather than cavities. The first adhesion arrangement of screen element **416** may be configured to mate with a complimentary second adhesion arrangement on a subgrid unit such that a portion of screen element **416** overlaps at least a portion the subgrid unit regardless of whether the screen element **416** or the subgrid unit has extensions or cavities.

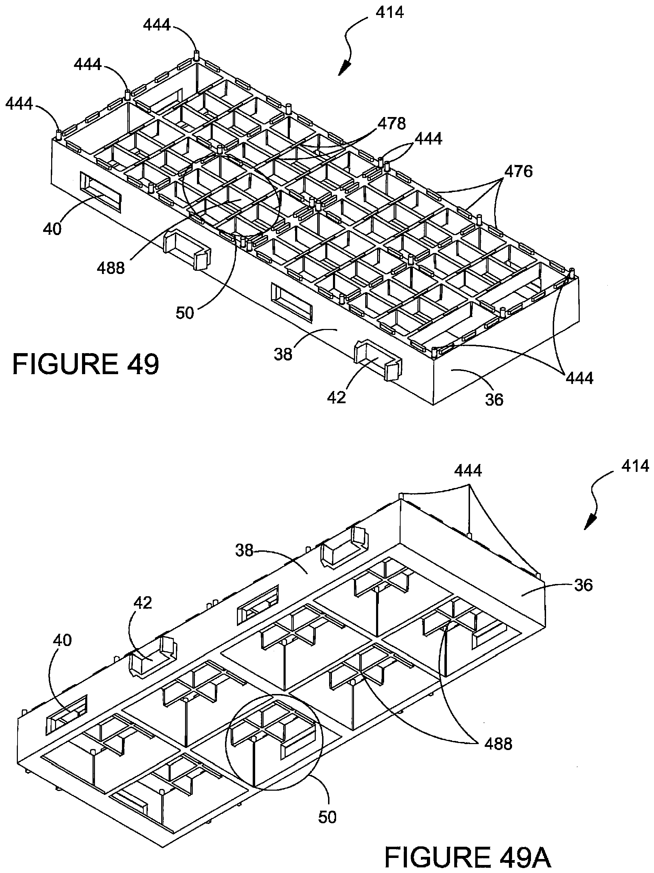

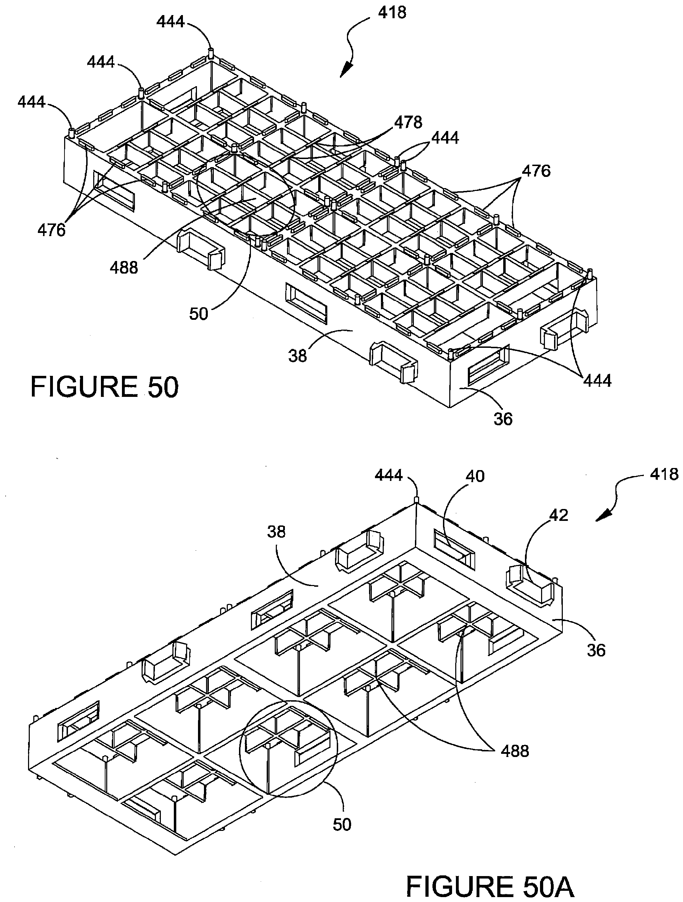

End subgrid unit **414** and center subgrid unit **418** may be incorporated into screen assembly **410.** See, e.g., Figures 49, 49A, 50, and 50A. End subgrid unit **414** and center subgrid unit **418** may be thermoplastic injection molded and may include all of the features of end subgrid unit **14** and center subgrid unit **18** discussed above. End subgrid unit **414** and center subgrid unit **418** may be interchangeably used wherever end subgrid unit **14** and center subgrid unit **18** are indicated. End subgrid unit **414** and center subgrid unit **418** may have a plurality elongated location members **444,** which may be substantially the same as attachment members **44.** The arrangement of location members **444** may correspond to the location apertures **424** of screen elements **416** such that screen elements **416** may be located onto end subgrid unit **414** and center subgrid unit **418** for attachment.

End subgrid unit **414** and center subgrid unit **418** may include a second adhesion arrangement on a top surface of each of end subgrid unit **414** and center subgrid unit **418,** which second adhesion arrangement may be complimentary to the first adhesion arrangement of screen element **416** such that the screen element may be mated to a subgrid unit via the mating of the first and second adhesion arrangements. In one embodiment of the present invention, the second adhesion arrangement may be a plurality of fusion bars **476** arranged along a top surface of subgrid side members **38** and subgrid end members **36.** End subgrid unit **414** and center subgrid unit **418** may also include a plurality of fusion bars **478,** which may be shortened fusion bars having heights less than heights of fusion bars **476,** arranged along a top surface of first subgrid support member **46** and second subgrid support member **48.** See, e.g., Figures 49 to 50A. Although shown as elongated extensions, fusion bars **476** (and **478**) may be various shapes and sizes and may be arranged in a variety of configurations. Alternatively, the second adhesion arrangement may be cavities, pockets, or similar and may be configured to receive extensions from a screen element. The second adhesion arrangement could include both extensions and cavities.

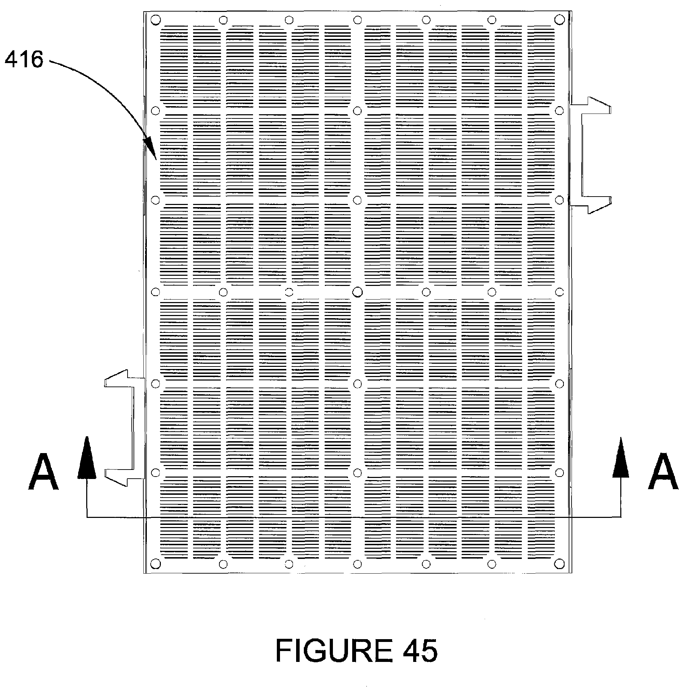

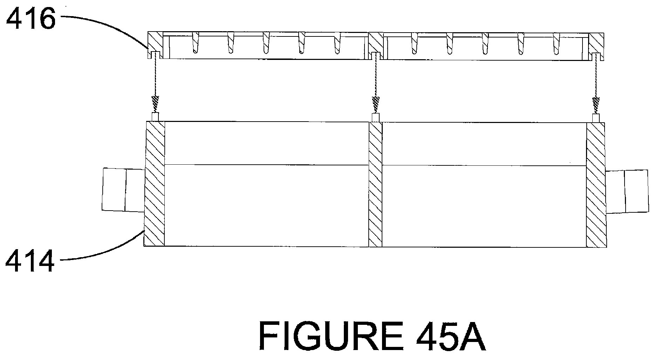

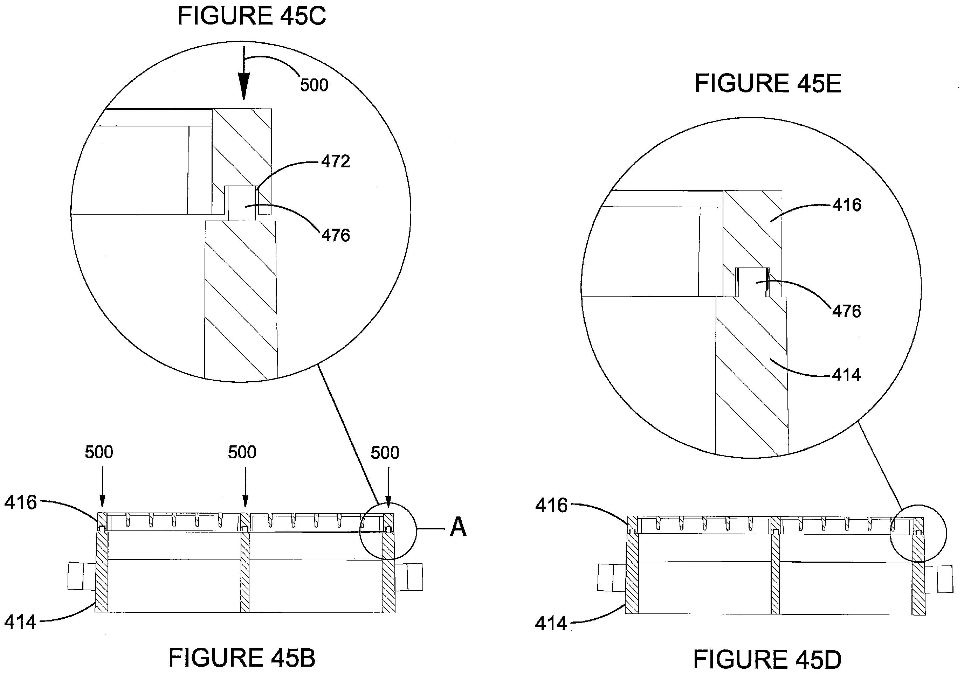

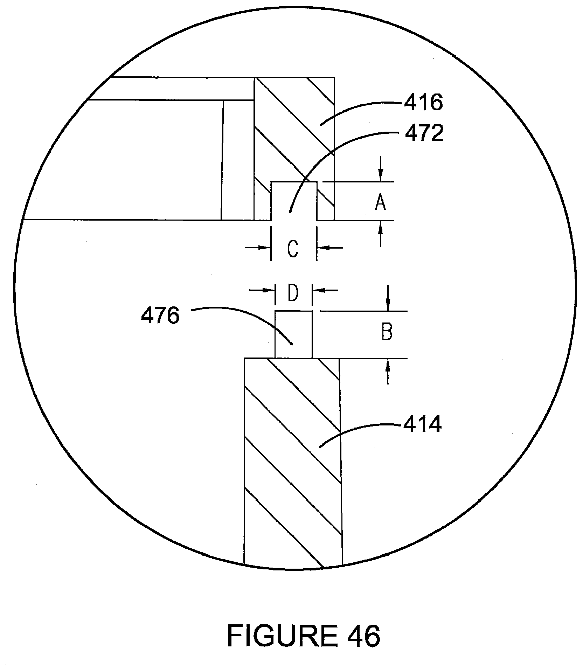

Each of the plurality of cavity pockets **472** is configured to receive fusion bars **476** and shorted fusion bars **478** arranged on subgrids (**414**, **418, 458,** and **460**). See, e.g., Figures 45A to 45E and 46. As shown in Figures 45B to 45E, fusion bars **476** fit within the plurality of cavity pockets **472** when screen element **416** is placed upon a subgrid. Cavity pockets **472** may have a width C that is slightly larger than width D of fusion bar **476.** Cavity pocket **472** may have a depth A that is slightly smaller than a height B of fusion bar **476.** See, e.g., Figure 47. Height B of fusion bar **476** may be approximately 0.056 inches. Prior to melting of fusion bars **476,** screen element **416** may rest upon fusion bars **476** without contacting the rest of a subgrid. Screen element **416** and the subgrids may be bonded together via laser welding. Bonding may be accomplished through chemical bonding between the cavity pockets **472** and the fusion bars (**476** or **478**) or melting portions of the materials of each component such that the components harden together. In one embodiment, when screen element **416** is located on a subgrid, fusion bar **476** (or shortened fusion bar **478**) may be melted, allowing for a melted portion of the fusion bar **476** to fill all or a portion of width C of the cavity pocket **472.** In certain embodiments approximately 0.006 inches of fusion bar **476** may be melted and allowed to fill all or a portion of the width of cavity pocket **472.** Melting of fusion bar **476** may be performed via laser welding, which may secure screen element **416** to a subgrid. A laser **500** may be configured and controlled to reach a specific depth of fusion bar **476.**

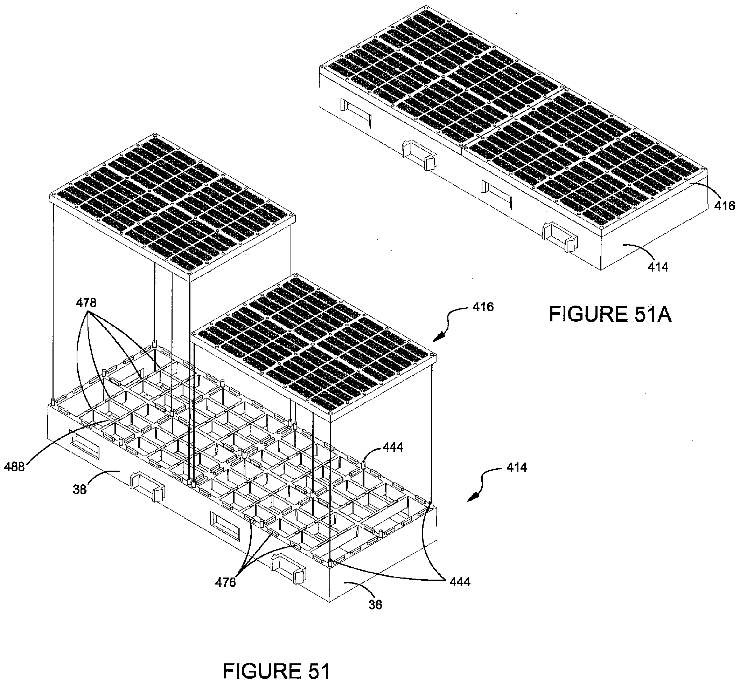

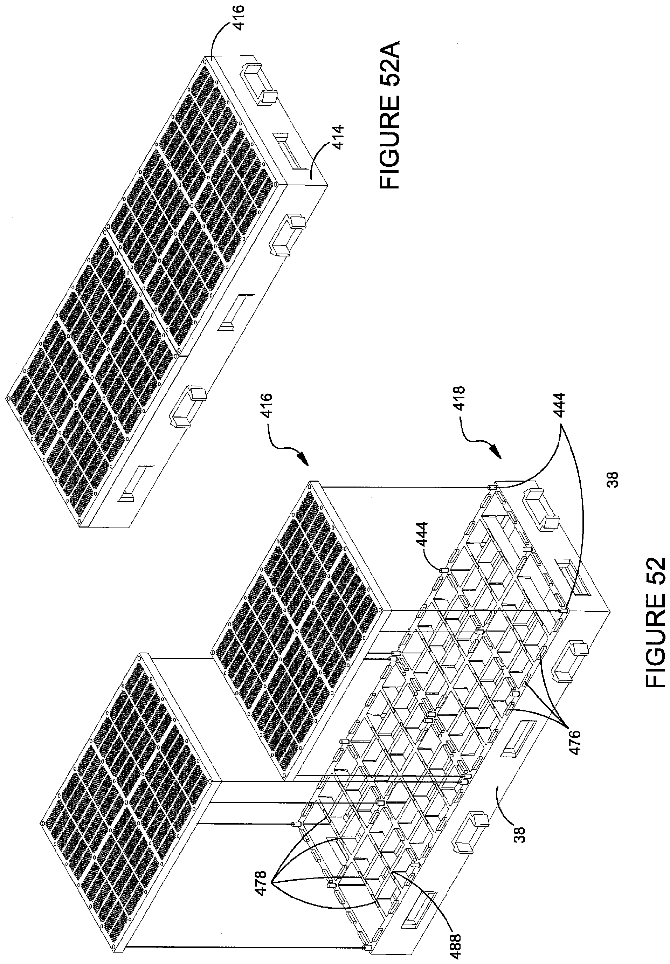

Fusion bars **476** (or shortened fusion bars **478**) may include carbon, graphite or other materials configured to respond to a specific laser wavelength. The fusion bars may be further configured to correspond to a laser to be used for laser welding. Fusion bars may have specific lengths to correspond to a laser **500.** Although shown as elongated protrusions, other shapes and/or designs may be incorporated for fusion bars subject to the requirements of a chosen laser. In embodiments having fusion bars on subgrids, screen elements **416** typically do not include carbon or graphite. Screen element **416** and the fusion bars may be made of different materials such that a selected laser **500** may travel through screen element **416** without melting screen element **416** and contact the fusion bars. See, e.g., Figures 45B and C. Screen element **416** may be made of a TPU or similar material having performance properties desired for a screening application. Screen element **416** may be substantially clear. Subgrids (**414** and **418**) may be made from nylon or similar materials. The fusion bars may have a higher melting point than the material of screen element **416** such that, when the fusion bars are melted, a portion of the screen element **416** also melts, which may be accomplished by heat transfer from the melted portion of fusion bar **476** that contacts screen element **416** in the cavity pocket **472.** In this way, screen element **416** is welded to a subgrid. See, e.g., Figures 51, 51A, 52, and 52A.

Laser welding is typically performed by focusing a laser beam toward a seam or area to transform material from a solid to a liquid, and after removal of the laser beam, the material return to a solid. Laser welding is a type of fusion welding and can be performed through conduction or penetration. Conduction welding relies upon conductivity of the material being welded to generate heat and melt the material. Laser welding of screen element **416** to a subgrid having fusion bars provides for laser welding of two different materials together. Typically, this cannot be accomplished with laser welding; however, applying the laser **500** through the screen element **416** to the fusion bars, which have conductive properties to generate heat upon the application of the selected laser **500**, cause the fusion bars (**476** or **478**) to melt. Similarly, the heat produced by the conduction and/or from the melted fusion bar material causes a portion of the screen element to melt. The two liquid materials combine and create a strong solid attachment between the subgrid and the screen element when the laser is removed and the combined materials return to a solid. By forming laser welded bonds between the screen element and the subgrids, the attachment between the components is very strong, which is essential for components of screen assemblies used in vibratory screening machines. The screen assemblies can be subjected to vibratory forces in excess of 8 Gs, abrasive materials and chemicals, and very high load requirements. Therefore, screen assemblies must be very strong and durable. Embodiments of the present invention provide screen assemblies made from multiple parts secured together. Creating screen assemblies from smaller subparts allows for micro injection molding of screen elements with very small openings, e.g. having a thickness of approximately 43 microns to approximately 100 microns. The strength of the laser welding adds overall strength to the screen assemblies, allowing for the benefits of micro injection molding the screen elements while maintaining durable screen assemblies. Laser welding also provides a more efficient attachment procedure than other attachment procedures such as heat staking. In certain embodiments, laser welding may be accomplished in approximately 8 to 10 seconds where heat staking involving other embodiments may require approximately 1.5 minutes.

End subgrid unit **414** (or **14**) and center subgrid unit **418** (or **18**) may include secondary support framework **488** spanning across grid openings **50.** Secondary support framework **488** may span all or only a portion of a grid opening **50.** Secondary support framework **488** increases the strength and durability of end subgrid unit **414** (or **14**) and center subgrid unit **418** (or **18**). Secondary support framework **488** increases the overall strength of screen assembly **410** allowing it to withstand vibratory forces in excess of 8 Gs.

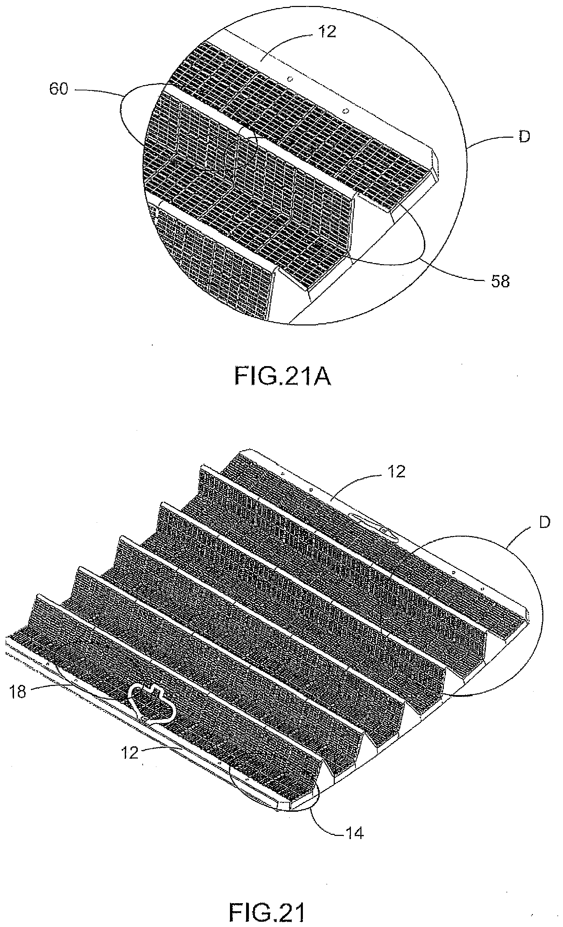

Figures 21 and 21A show an alternative embodiment of the present disclosure incorporating pyramidal shaped subgrid units. A screen assembly is shown with binder bars **12** attached. The screen assembly incorporates center and end subgrid units **14** and **18** (or **414** and **418**) and center and end pyramidal shaped subgrid units **58** and **60** (or **458** and **460**). By incorporating the pyramidal shaped subgrid units **58** and **60** into the screen assembly, an increased screening surface may be achieved. Additionally, material being screened may be controlled and directed. The screen assembly may be concave, convex, or flat. The screen assembly may be flexible and may be deformed into a concave or convex shape upon the application of a compression force. The screen assembly may include guide notches capable of mating with guide mating surfaces on a vibratory screening machine. Different configurations of subgrid units and pyramid subgrid units may be employed which may increase or decrease an amount of screening surface area and flow characteristics of the material being processed. Unlike mesh screens or similar technology, which may incorporate corrugations or other manipulations to increase surface area, the screen assembly shown is supported by the grid framework, which may be substantially rigid and capable of withstanding substantial loads without damage or destruction. Under heavy material flows, traditional screen assemblies with corrugated screening surfaces are frequently flattened or damaged by the weight of the material, thereby impacting the performance and reducing the screening surface area of such screen assemblies. The screen assemblies disclosed herein are difficult to damage because of the strength of the grid framework, and the benefits of increased surface area provided by incorporating pyramidal shaped subgrids may be maintained under substantial loads.

A pyramidal shaped end subgrid **58** is illustrated in Figure 22 and Figure 22A. Pyramidal shaped end subgrid **58** includes a first and a second grid framework forming first and second sloped surface grid openings **74.** Pyramidal shaped end subgrid **58** includes a ridge portion **66,** subgrid side members/base members **64,** and first and second angular surfaces **70** and **72,** respectively, that peak at ridge portion **66** and extend downwardly to side member **64.** Pyramidal shaped subgrids **58** and **60** have triangular end members **62** and triangular middle support members **76.** Angles shown for first and second angular surface **70** and **72** are exemplary only. Different angles may be employed to increase or decrease surface area of screening surface. Pyramidal shaped end subgrid **58** has fasteners along side members **64** and at least one triangle end member **62.** The fasteners may be clips **42** and clip apertures **40** such that multiple subgrid units **58** may be secured together. Alternatively, the clips **42** and clip apertures **40** may be used to secure pyramidal shaped end subgrid **58** to end subgrid **14,** center subgrid **18,** or pyramidal shaped center subgrid **60.** Elongated attachment members **44** may be configured on first and second sloped surfaces **70** and **72** such that they mate with the screen element attachment apertures **24.** Screen element **16** may be secured to pyramidal shaped end subgrid **58** via mating elongated attachment members **44** with the screen element attachment apertures **24.** A portion of the elongated attachment member **44** may extend slightly above the screen element screening surface when the screen element **16** is attached to pyramidal shaped end subgrid **58.** The screen element attachment apertures **24** may include a tapered bore such that a portion of the elongated attachment members **44** extending above the screen element screening surface may be melted and fill the tapered bore. Alternatively, the screen element attachment apertures **24** may be without a tapered bore and the portion of the elongated attachment members extending above the screening surface of the screening element **16** may be melted to form a bead on the screening surface. Once attached, screen element **16** may span first **74** and second sloped grid openings. Materials passing through the screening openings **86** will pass through the first **74** and second grid openings.

A pyramidal shaped center subgrid **60** is illustrated in Figure 23 and Figure 23A. Pyramidal shaped center subgrid **60** includes a first and a second grid framework forming a first and second sloped surface grid opening, **74.** Pyramidal shaped center subgrid **60** includes a ridge portion **66,** a subgrid side members/base members **64,** and first and second angular surfaces **70** and **72** that peak at the ridge portion **66** and extend downwardly to the side member **64.** Pyramidal shaped center subgrid **60** has triangular end members **62** and triangular middle members **76.** Angles shown for first and second angular surface **70** and **72** are exemplary only. Different angles may be employed to increase or decrease surface area of screening surface. The pyramidal shaped center subgrid **60** has fasteners along side members **64** and both triangle end members **62.** The fasters may be clips **42** and clip apertures **40** such that multiple pyramidal shaped center subgrids **60** may be secured together. Alternatively, the clips **42** and clip apertures **40** may be used to secure pyramidal shaped center subgrid **60** to end subgrid **14,** center subgrid **18,** or pyramidal shaped end subgrid **58.** Elongated attachment members **44** may be configured on first and second sloped surfaces **70** and **72** such that they mate with the screen element attachment apertures **24.** Screen element **16** may be secured to pyramidal shaped center subgrid **60** via mating elongated attachment members **44** with the screen element attachment apertures **24.** A portion of the elongated attachment member **44** may extend slightly above the screen element screening surface when the screen element **16** is attached to pyramidal shaped center subgrid **60.** The screen element attachment apertures **24** may include a tapered bore such that the portion of the elongated attachment members **44** extending above the screen element screening surface may be melted and fill the tapered bore. Alternatively, the screen element attachment apertures **24** may be without a tapered bore and the portion of the elongated attachment members extending above the screening surface of the screening element **16** may be melted to form a bead on the screening surface. Once attached, screen element **16** will span sloped grid opening **74.** Materials passing through the screening openings **86** will pass through the grid opening **74.** While pyramid and flat shaped grid structures are shown, it will be appreciated that various shaped subgrids and corresponding screen elements may be fabricated in accordance with the present disclosure.

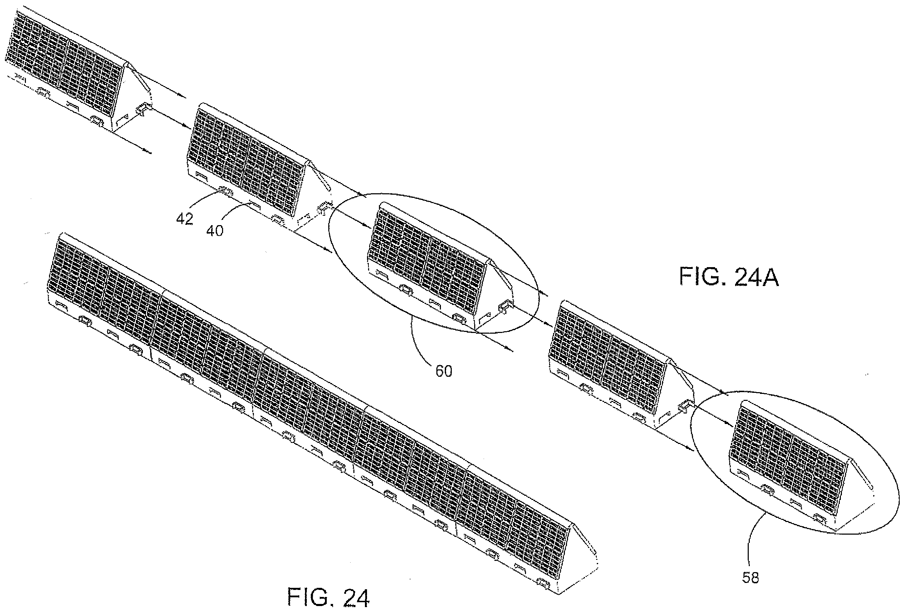

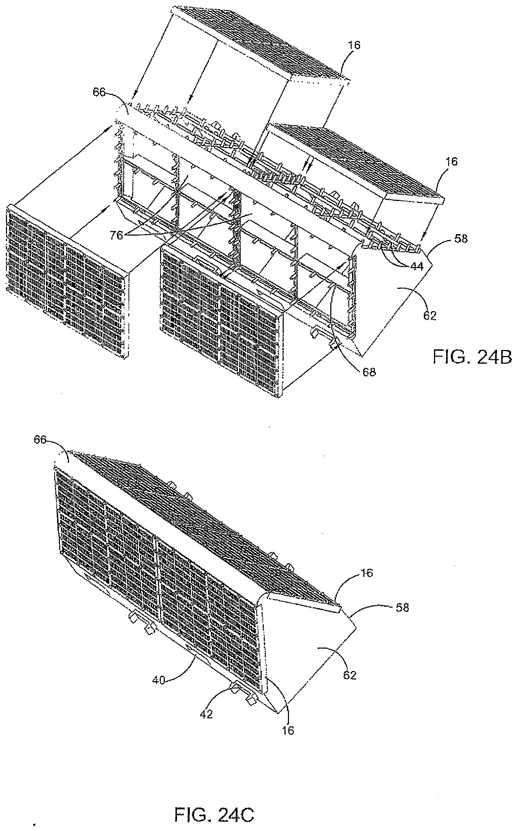

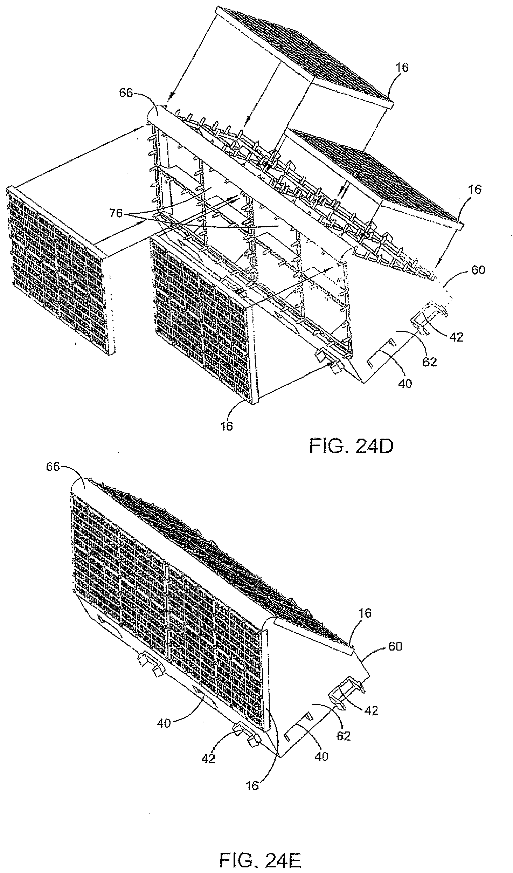

Figure 24 shows a subassembly of a row of pyramidal shaped subgrid units. Figure 24A is an exploded view of the subassembly in Figure 24 showing the individual pyramidal shaped subgrids and direction of attachment. The subassembly includes two pyramidal shaped end subgrids **58** and three pyramidal shaped center subgrids **60.** The pyramidal shaped end subgrids **58** form ends of the subassembly while pyramidal shaped center subgrids **60** are used to join the two end subgrids **58** via connections between the clips **42** and clip apertures **40.** The pyramidal subgrids shown in Figure 24 are shown with attached screen elements **16.** Alternatively, the subassembly may be constructed from subgrids prior to attachment of screen elements or partially from pre-covered pyramidal shaped subgrid units and partially from uncovered pyramidal shaped subgrid units.

Figures 24B and 24C illustrate attachment of screen elements **16** to pyramidal shaped end subgrid **58,** according to an exemplary embodiment of the present invention. Screen elements **16** may be aligned with pyramidal shaped end subgrid **58** via elongated attachment members **44** and screen element attachment apertures **24** such that the elongated attachment members **44** pass through the screen element attachment apertures **24** may extend slightly beyond the screen element screening surface. The portion of elongated attachment members **44** extending beyond screen element screening surface may be melted to fill tapered bores of the screen element attachment apertures **24** or, alternatively, to form beads upon the screen element screening surface, securing the screen element **16** to pyramidal shaped subgrid **58.** Attachment via elongated attachment members **44** and screen element attachment apertures **24** is only one embodiment of the present invention. Alternatively, screen element **16** may be secured to pyramidal shaped end subgrid **58** via adhesive, fasteners and fastener apertures, etc. Although shown having four screen elements for each pyramidal shaped end subgrid **58,** the present invention includes alternate configurations of two screen elements per pyramidal shaped end subgrid **58,** multiple screen elements per pyramidal shaped end subgrid **58,** or having a single screen element cover a sloped surface of multiple pyramidal shaped subgrid units. Pyramidal shaped end subgrid **58** may be substantially rigid and may be a single thermoplastic injection molded piece.

Figures 24D and 24E illustrate attachment of screen elements **16** to pyramidal shaped center subgrid **60,** according to an exemplary embodiment of the present invention. Screen elements **16** may be aligned with pyramidal shaped center subgrid **60** via elongated attachment members **44** and screen element attachment apertures **24** such that the elongated attachment members **44** may pass through the screen element attachment apertures **24** and may extend slightly beyond the screen element screening surface. The portion of the elongated attachment members **44** extending beyond screen element screening surface may be melted to fill tapered bores of the screen element attachment apertures **24** or, alternatively, to form beads upon the screen element screening surface, securing the screen element **16** to pyramidal shaped subgrid unit **60.** Attachment via elongated attachment members **44** and screen element attachment apertures **24** is only one embodiment of the present invention. Alternatively, screen element **16** may be secured to pyramidal shaped center subgrid **60** via adhesive, fasteners and fastener apertures, etc. Although shown having four screen elements for each pyramidal shaped center subgrid **60,** the present invention includes alternate configurations of two screen elements per pyramidal shaped center subgrid **60,** multiple screen elements per pyramidal shaped center subgrid **60,** or having a single screen element cover a sloped surface of multiple pyramidal shaped subgrids. Pyramidal shaped center subgrid **60** may be substantially rigid and may be a single thermoplastic injection molded piece. While pyramid and flat shaped grid structures are shown, it will be appreciated that various shaped subgrids and corresponding screen elements may be fabricated in accordance with the present disclosure.

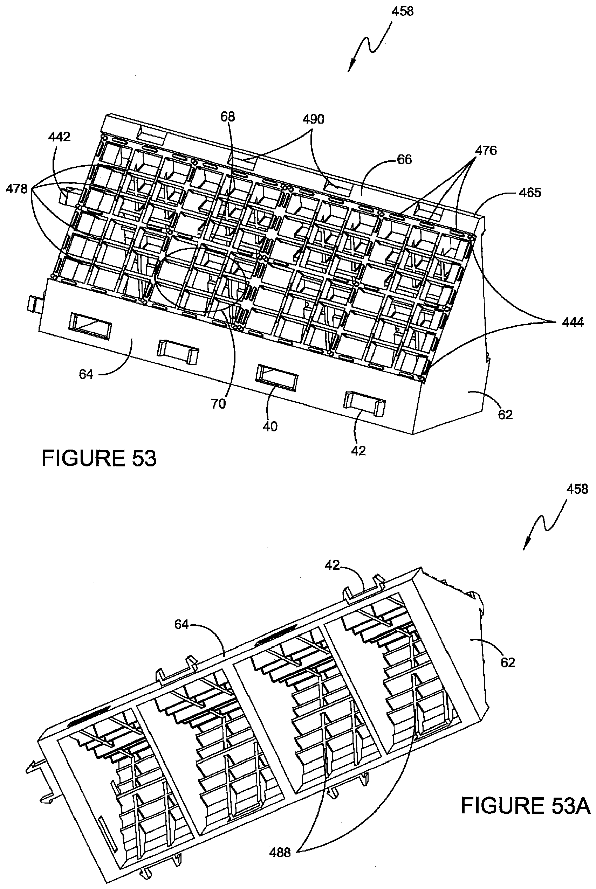

Figures 53 to 56A show end and center pyramidal shaped subgrids **458** and **460,** respectively, according to exemplary embodiments of the present disclosure. End and center pyramidal shaped subgrids **458** and **460** may be thermoplastic injection molded and may have all of the features of end and center pyramidal shaped subgrids **58** and **60** discussed herein above. As with end subgrid unit **414** and center subgrid unit **418,** end and center pyramidal shaped subgrids **458** and **460** may have location members **444** corresponding to the location apertures **424** of screen element **416** such that screen elements **416** may be located onto end and center pyramidal shaped subgrids **458** and **460** for attachment. End and center pyramidal shaped subgrids **458** and **460** may have second adhesion arrangements such as a plurality of fusion bars **476** and shorted fusion bars **478.** The second adhesion arrangements may be configured to mate with complimentary first adhesion arrangements on screen elements **416** such as a plurality of pocket cavities. Screen elements **416** may be laser welded to the pyramidal subgrids. End and center pyramidal shaped subgrids **458** and **460** may include secondary support framework **488** spanning across grid openings **74.** Secondary support framework **488** may span all or only a portion of a grid opening **74.** Secondary support framework **488** increases the strength and durability of end and center pyramidal shaped subgrids **458** and **460.** End and center pyramidal shaped subgrids **458** and **460** may include a flattened ridge portion **465** and may have fixture locators **490** in ridge **66.** See, e.g., Figure 53. Flattened ridge portion **465** may allow for easier molding than rounded or pointed embodiments and may allow for easier release and/or extraction of the subgrids from molds. Embodiments may include one or more fixture locators **490** which may be utilized in alignment and/or assembly during laser welding. Fixtures may engage subgrids at fixture locators **490** allowing for alignment of laser welding. Flattened ridge portion **465** may provide easier engagement of the fixture locators **490.**

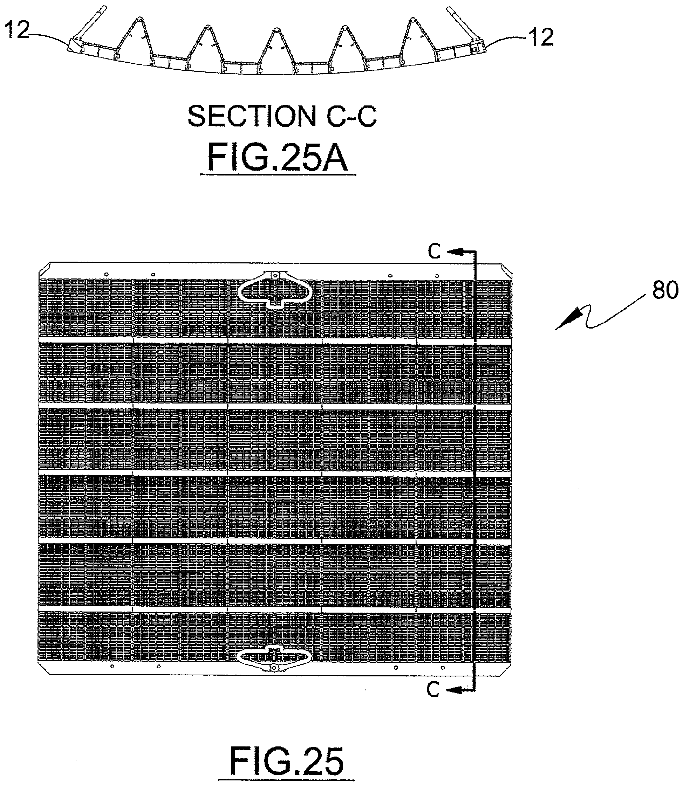

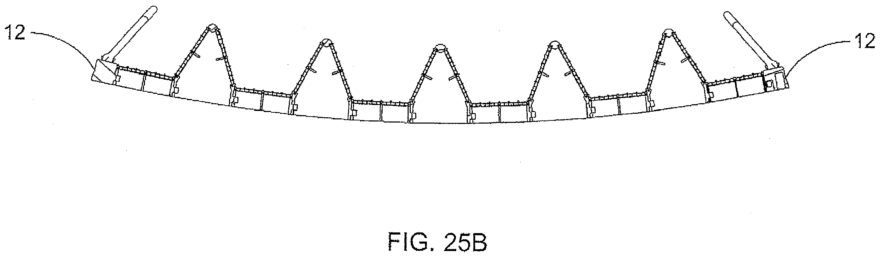

Figure 25 is a top view of a screen assembly **80** having pyramidal shaped subgrids, which may be any of subgrids 14, 18, 414, and 418. As shown, the screen assembly 80 is formed from screen subassemblies attached to each other alternating from flat subassemblies to pyramidal shaped subassemblies. Alternatively, pyramidal shaped subassemblies may be attached to each other or less or more pyramidal shaped subassemblies may be used. Figure 25A is a cross-section of Section C-C of the screen assembly shown in Figure 25. As shown, the screen assembly has five rows of pyramidal shaped subgrid units and six rows of flat subgrids, with the rows of flat subgrid units in between each row of the pyramidal shaped subgrids. Binder bars **12** are attached to the screen assembly. Any combination of flat subgrid rows and pyramidal shaped subgrid rows may be utilized. Figure 25B is a larger view of the cross-section shown in Figure 25A. In Figure 25B, attachment of each subgrid to another subgrid and/or binder bar **12** is visible via clips and clip apertures.

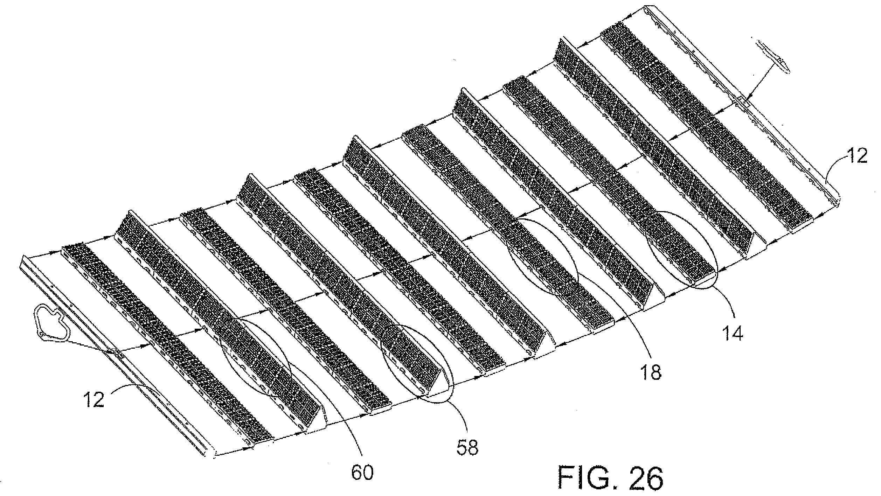

Figure 26 is an exploded isometric view of a screen assembly having pyramidal shaped subgrid units. This figure shows eleven subassemblies being secured to each other via clips and clip apertures along subgrid side members of subgrid units in each subassembly. Each flat subassembly has two end subgrids (**14** or **414**) and three center subgrids (**18** or **418**). Each pyramidal shaped subassembly has two pyramidal shaped end subgrids (**58** or **458**) and three pyramidal shaped center subgrids (**60** or **460**). Binder bars **12** are fastened at each end of the assembly. Different size screen assemblies may be created using different numbers of subassemblies or different numbers of center subgrid units. Screening surface area may be increased by incorporating more pyramidal shaped subassemblies or decreased by incorporating more flat assemblies. An assembled screen assembly has a continuous screen assembly screening surface made up of multiple screen element screening surfaces.

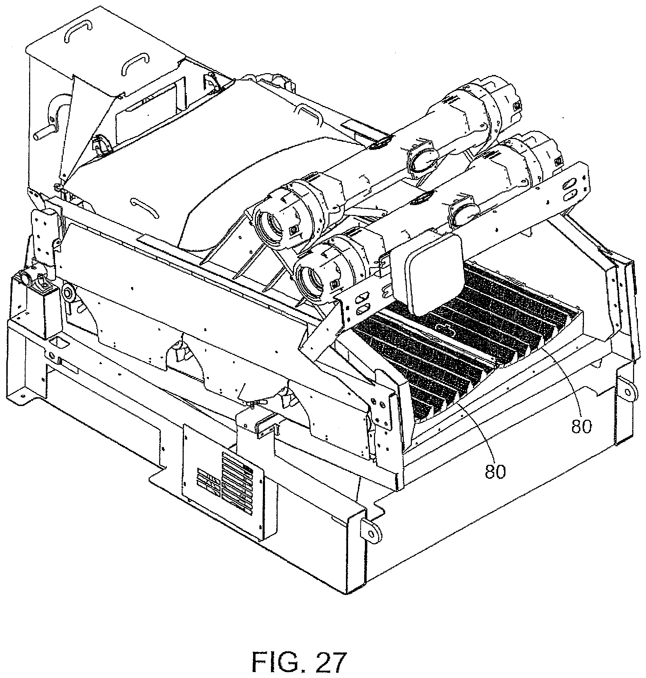

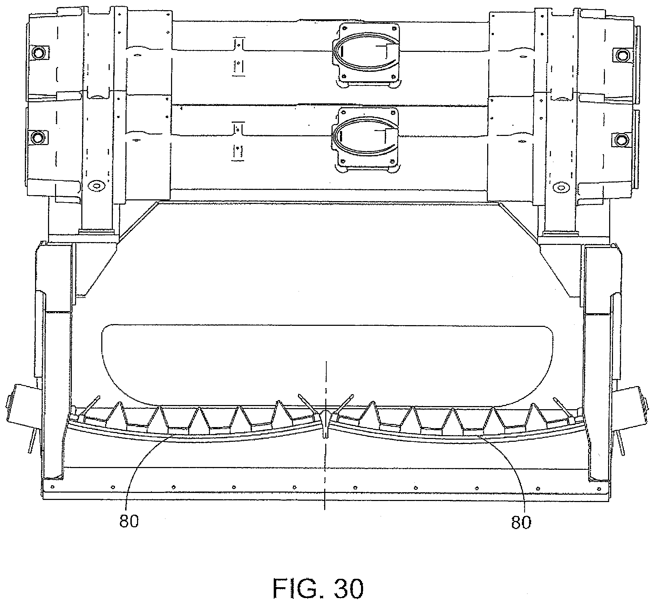

Figure 27 shows installation of screen assemblies **80** upon a vibratory screening machine having two screening surfaces. Figure 30 is a front view of the vibratory machine shown in Figure 27. The vibratory screening machine may have compression assemblies on side members of the vibratory screening machine. The screen assemblies may be placed into the vibratory screening machine as shown. A compression force may be applied to a side member of the screen assembly such that the screen assembly deflects downward into a concave shape. A bottom side of the screen assembly may mate with a screen assembly mating surface of the vibratory screening machine as shown in U.S. Patent No. 7,578,394 and U.S. Patent Application No. 12/460,200 (now U.S. Patent No. 8,443,984). The vibratory screening machine may include a center wall member configured to receive a side member of the screen assembly opposite of the side member of the screen assembly receiving compression. The center wall member may be angled such that a compression force against the screen assembly deflects the screen assembly downward. The screen assembly may be installed in the vibratory screening machine such that it is configured to receive material for screening. The screen assembly may include guide notches configured to mate with guides of the vibratory screening machine such that the screen assembly may be guided into place during installation.

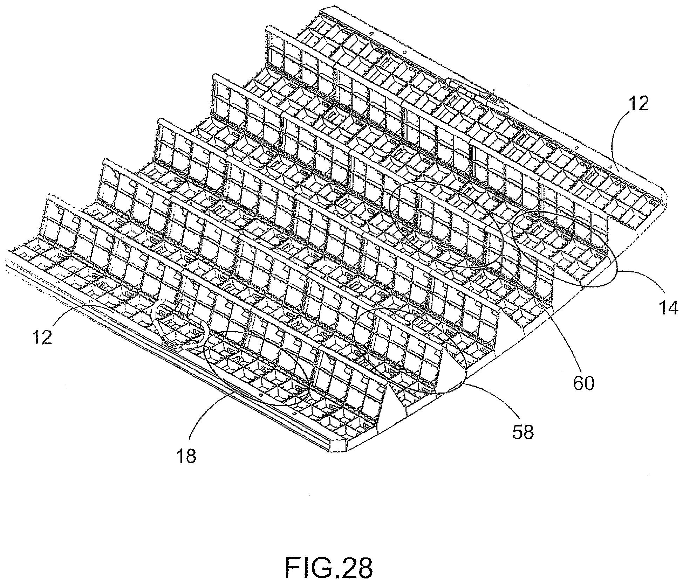

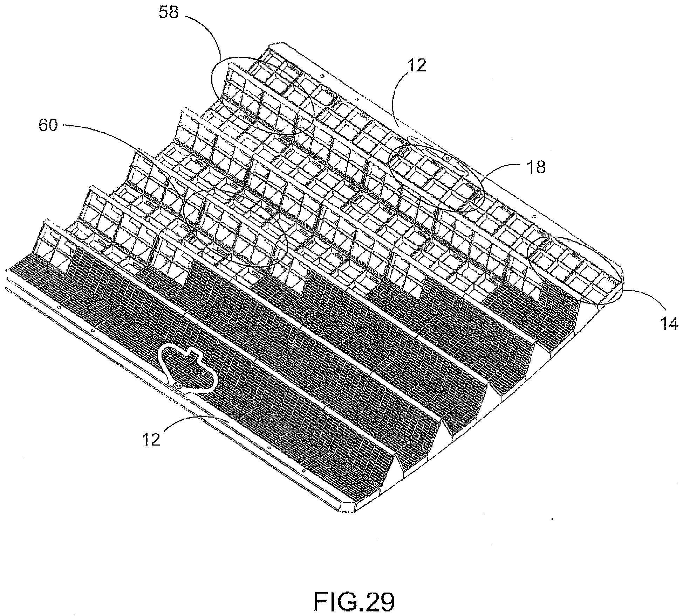

Figure 28 shows an isometric view of a screen assembly having pyramidal shaped subgrids where screen elements have not been attached. The screen assembly shown in Figure 28 is slightly concave, however, the screen assembly may be more concave, convex or flat. The screen assembly may be made from multiple subassemblies, which may be any combination of flat subassemblies and pyramidal shaped subassemblies. As shown, eleven subassemblies are included, however, more or less subassemblies may be included. The screen assembly is shown without screen elements **16** (or **416**). The subgrids may be assembled together before or after attachment of screen elements to subgrids or any combination of subgrids having attached screen elements and subgrids without screen elements may be fastened together. Figure 29 shows the screen assembly of Figure 28 partially covered in screen elements. Pyramidal shaped subassemblies include pyramidal shaped end subgrids **58** and pyramidal shaped center subgrids **60.** Flat subassemblies include flat end subgrids **14** and flat center subgrids **18.** The subgrid units may be secured to each other via clips and clip apertures.

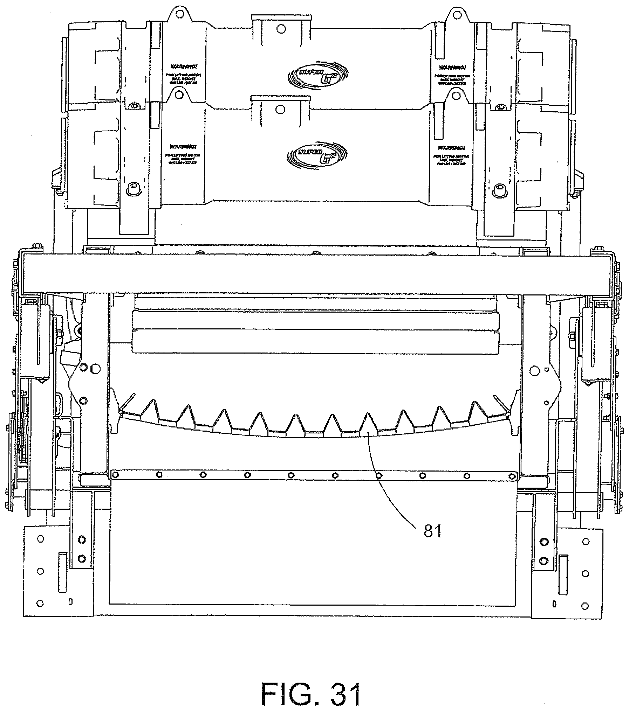

Figure 31 shows installation of screen assembly **81** in a vibratory screening machine having a single screening surface, according to an exemplary embodiment of the present invention. Screen assembly **81** is similar in configuration to screen assembly **80** but includes additional pyramid and flat assemblies. The vibratory screening machine may have a compression assembly on a side member of the vibratory screening machine. Screen assembly **81** may be placed into the vibratory screening machine as shown. A compression force may be applied to a side member of screen assembly **81** such that screen assembly **81** deflects downward into a concave shape. A bottom side of the screen assembly may mate with a screen assembly mating surface of the vibratory screening machine as shown in U.S. Patent No. 7,578,394 and U.S. Patent Application No. 12/460,200 (now U.S. Patent No. 8,443,984). The vibratory screening machine may include a side member wall opposite of the compression assembly configured to receive a side member of the screen assembly. The side member wall may be angled such that a compression force against the screen assembly deflects the screen assembly downward. The screen assembly may be installed in the vibratory screening machine such that it is configured to receive material for screening. The screen assembly may include guide notches configured to mate with guides of the vibratory screening machine such that the screen assembly may be guided into place during installation.

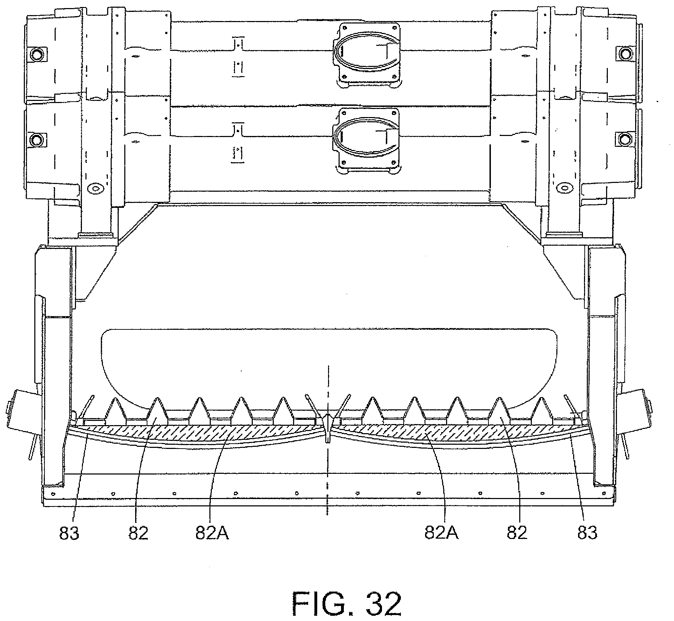

Figure 32 is a front view of screen assemblies **82** installed upon a vibratory screening machine having two screening surfaces, according to an exemplary embodiment of the present invention. Screen assembly **82** is an alternate embodiment where the screen assembly has been preformed to fit into the vibratory screening machine without applying a load to the screen assembly, i.e., screen assembly **82** includes a bottom portion **82A** that is formed such that it mates with a bed **83** of the vibratory screening machine. The bottom portion **82A** may be formed integrally with screen assembly **82** or it may be a separate piece. Screen assembly **82** includes similar features as screen assembly **80,** including subgrids and screen elements but also includes bottom portion **82A** that allows it to fit onto bed **83** without being compressed into a concave shape. A screening surface of screen assembly **82** may be substantially flat, concave or convex. Screen assembly **82** may be held into place by applying a compression force to a side member of screen assembly **82** or may simply be held in place. A bottom portion of screen assembly **82** may be preformed to mate with any type of mating surface of a vibratory screening machine.

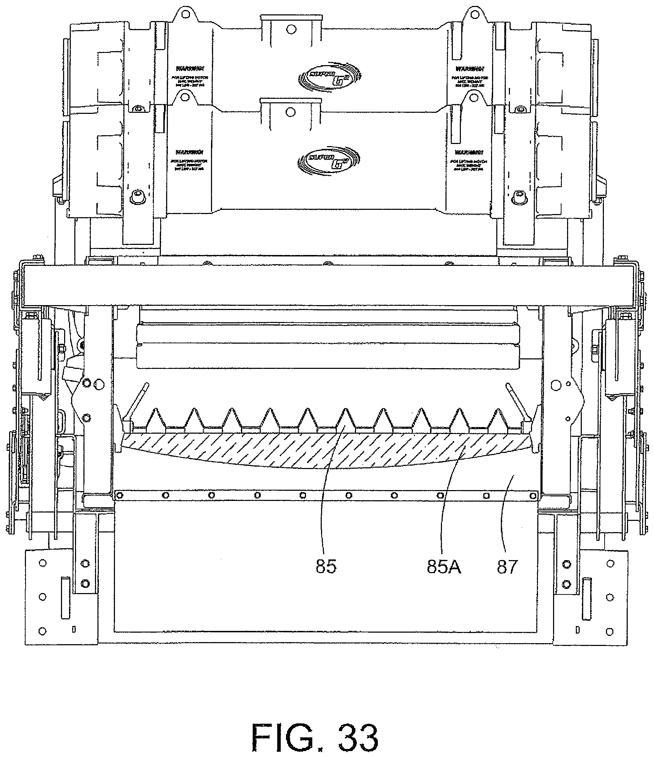

Figure 33 is a front view of screen assembly **85** installed upon a vibratory screening machine having a single screening surface, according to an exemplary embodiment of the present invention. Screen assembly **85** is an alternate embodiment where the screen assembly has been preformed to fit into the vibratory screening machine without applying a load to the screen assembly i.e., screen assembly **85** includes a bottom portion **85A** that is formed such that it mates with a bed **87** of the vibratory screening machine. The bottom portion **85A** may be formed integrally with screen assembly **85** or it may be a separate piece. Screen assembly **85** includes similar features as screen assembly **80,** including subgrids and screen elements but also includes bottom portion **85A** that allows it to fit onto bed **87** without being compressed into a concave shape. A screening surface of screen assembly **85** may be substantially flat, concave or convex. Screen assembly **85** may be held into place by applying a compression force to a side member of screen assembly **85** or may simply be held in place. A bottom portion of screen assembly **85** may be preformed to mate with any type of mating surface of a vibratory screening machine.

Figure 34 is an isometric view of the end subgrid shown in Figure 3 having a single screen element partially attached thereto. Figure 35 is an enlarged view of break out section E of the end subgrid shown in Figure 34. In Figures 34 and 35, screen element **16** is partially attached to end subgrid **38.** Screen element **16** is aligned with subgrid **38** via elongated attachment members **44** and screen element attachment apertures **24** such that the elongated attachment members **44** pass through the screen element attachment apertures **24** and extend slightly beyond the screen element screening surface. As shown along the end edge portion of screen element **16,** the portions of the elongated attachment members **44** extending beyond screen element screening surface are melted to form beads upon the screen element screening surface, securing the screen element 16 to end subgrid unit **38.**

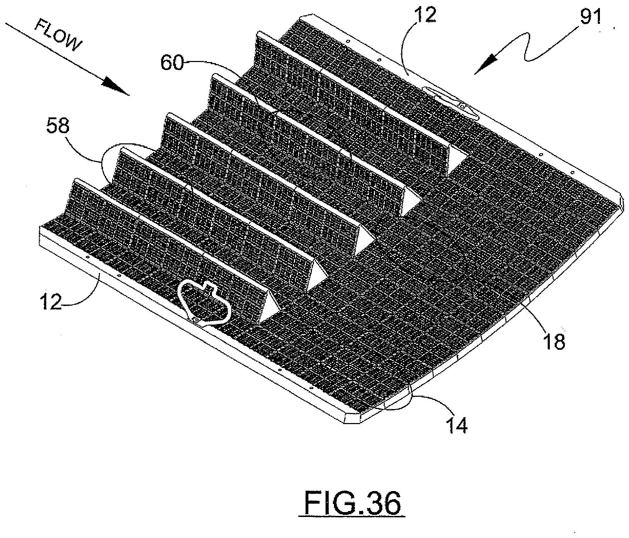

Figure 36 shows a slightly concave screen assembly **91** having pyramidal shaped subgrids incorporated into a portion of screen assembly **91** according to an exemplary embodiment of the present invention. A screening surface of the screen assembly may be substantially flat, concave or convex. The screen assembly **91** may be configured to deflect to a predetermined shape under a compression force. The screen assembly **91,** as shown in Figure 36, incorporates pyramidal shaped subgrids in the portion of the screen assembly installed nearest the inflow of material on the vibratory screening machine. The portion incorporating the pyramidal shaped subgrids allows for increased screening surface area and directed material flow. A portion of the screen assembly installed nearest a discharge end of the vibratory screening machine incorporates flat subgrids. On the flat portion, an area may be provided such that material may be allowed to dry and/or cake on the screen assembly. Various combinations of flat and pyramidal subgrids may be included in the screen assembly depending on the configuration desired and/or the particular screening application. Further, vibratory screening machines that use multiple screen assemblies may have individual screen assemblies with varying configurations designed for use together on specific applications. For example, screen assembly 91 may be used with other screen assemblies such that it is positioned near the discharge end of a vibratory screening machine such that it provides for caking and/or drying of a material.

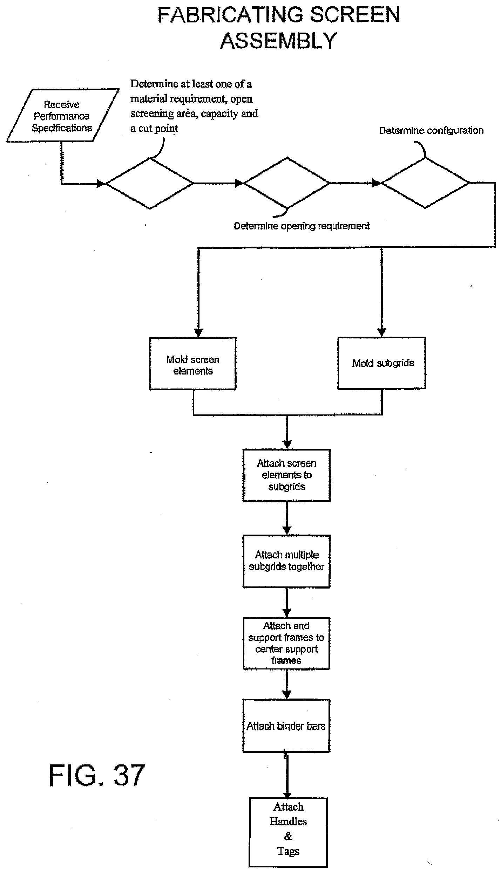

Figure 37 is a flow chart showing steps to fabricate a screen assembly, according to an exemplary embodiment of the present invention. As shown in Figure 37, a screen fabricator may receive screen assembly performance specifications for the screen assembly. The specifications may include at least one of a material requirement, open screening area, capacity and a cut point for a screen assembly. The fabricator may then determine a screening opening requirement (shape and size) for a screen element as described herein. The fabricator may then determine a screen configuration (e.g., size of assembly, shape and configuration of screening surface, etc.). For example, the fabricator may have the screen elements arranged in at least one of a flat configuration and a nonflat configuration. A flat configuration may be constructed from center subgrids (**18** or **418**) and end subgrids (**14** or **414**). A nonflat configuration may include at least a portion of pyramidal shaped center subgrids (**60** or **460**) and/or pyramidal shaped end subgrids (**58** or **458**). Screen elements may be injection molded. Subgrid units may also be injection molded but are not required to be injection molded. Screen elements and subgrids may include a nanomaterial, as described herein, dispersed within. After both screen elements and subgrid units have been created, screen elements may be attached to subgrid units. The screen elements and subgrids may be attached together using connection materials having a nanomaterial dispersed within. Screen elements may be attached to subgrids using laser welding. Multiple subgrid units may be attached together forming support frames. Center support frames are formed from center subgrids and end support frames are formed from end subgrids. Pyramidal shaped support frames may be created from pyramidal shaped subgrid units. Support frames may be attached such that center support frames are in a center portion of the screen assembly and end support frames are on an end portion of the screen assembly. Binder bars may be attached to the screen assembly. Different screening surface areas may be accomplished by altering the number of pyramidal shaped subgrids incorporated into the screen assembly. Alternatively, screen elements may be attached to subgrid units after attachment of multiple subgrids together or after attachment of multiple support frames together. Instead of multiple independent subgrids that are attached together to form a single unit, one subgrid structure may be fabricated that is the desired size of the screen assembly. Individual screen elements may then be attached to the one subgrid structure.

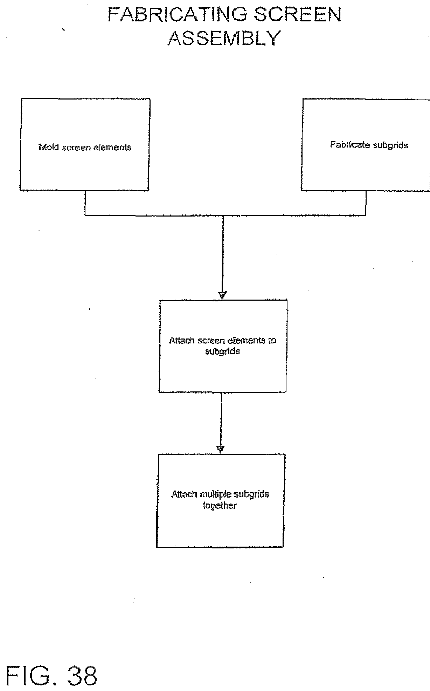

Figure 38 is a flow chart showing steps to fabricate a screen assembly, according to an exemplary embodiment of the present invention. A thermoplastic screen element may be injection molded. Subgrids may be fabricated such that they are configured to receive the screen elements. Screen elements may be attached to subgrids and multiple subgrid assemblies may be attached, forming a screening surface. Alternatively, the subgrids may be attached to each other prior to attachment of screen elements.

In another exemplary embodiment, a method for screening a material is provided, including attaching a screen assembly to a vibratory screening machine and forming a top screening surface of the screen assembly into a concave shape, wherein the screen assembly includes a screen element having a series of screening openings forming a screen element screening surface and a subgrid including multiple elongated structural members forming a grid framework having grid openings. The screen elements span grid openings and are secured to a top surface of the subgrid. Multiple subgrids are secured together to form the screen assembly and the screen assembly has a continuous screen assembly screening surface comprised of multiple screen element screening surfaces. The screen element is a single thermoplastic injection molded piece.

Figure 39 is an isometric view of a vibratory screening machine having a single screen assembly **89** with a flat screening surface installed thereon with a portion of the vibratory machine cut away showing the screen assembly. Screen assembly **89** is a single unit that includes a subgrid structure and screen elements as described herein. The subgrid structure may be one single unit or may be multiple subgrids attached together. While screen assembly **89** is shown as a generally flat type assembly, it may be convex or concave and may be configured to be deformed into a concave shape from a compression assembly or the like. It may also be configured to be tensioned from above or below or may be configured in another manner for attachment to different types of vibratory screening machines. While the embodiment of the screen assembly shown covers the entire screening bed of the vibratory screening machine, screen assembly **89** may also be configured in any shape or size desired and may cover only a portion of the screening bed.

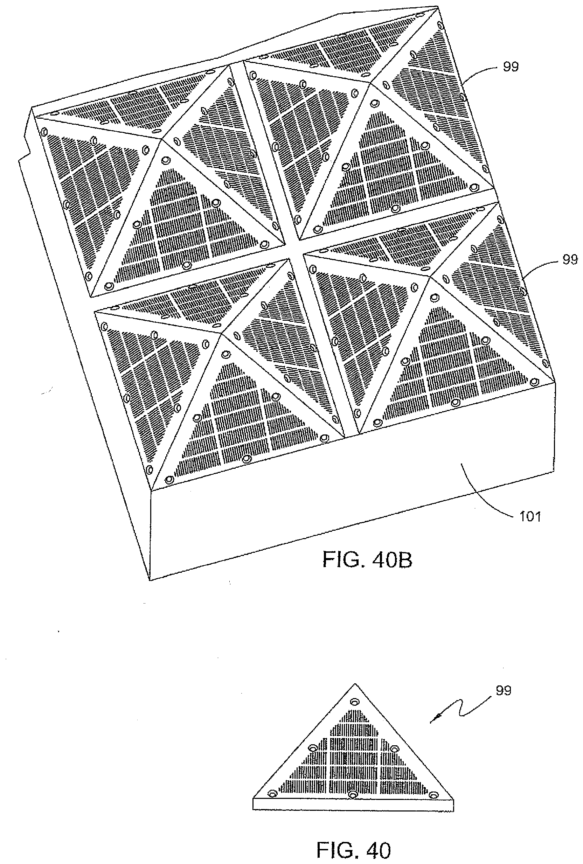

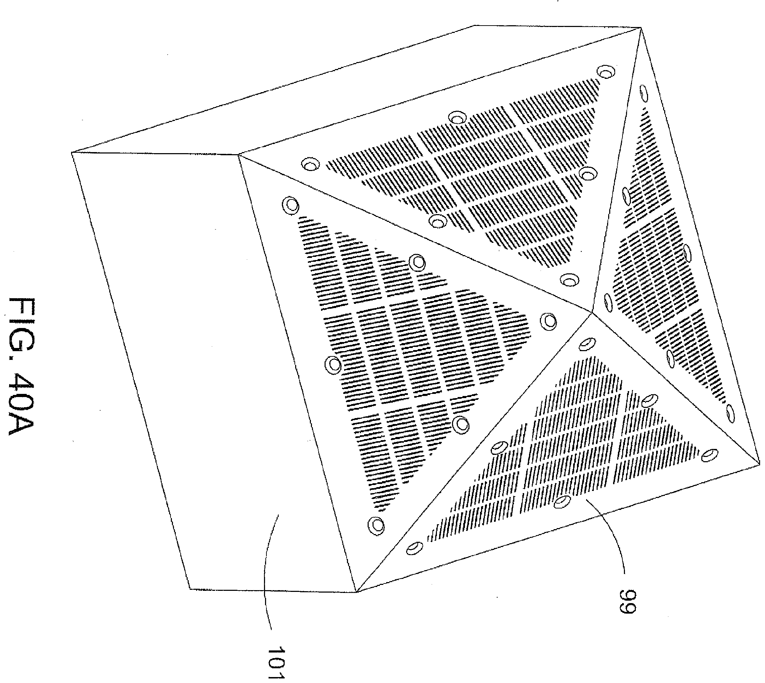

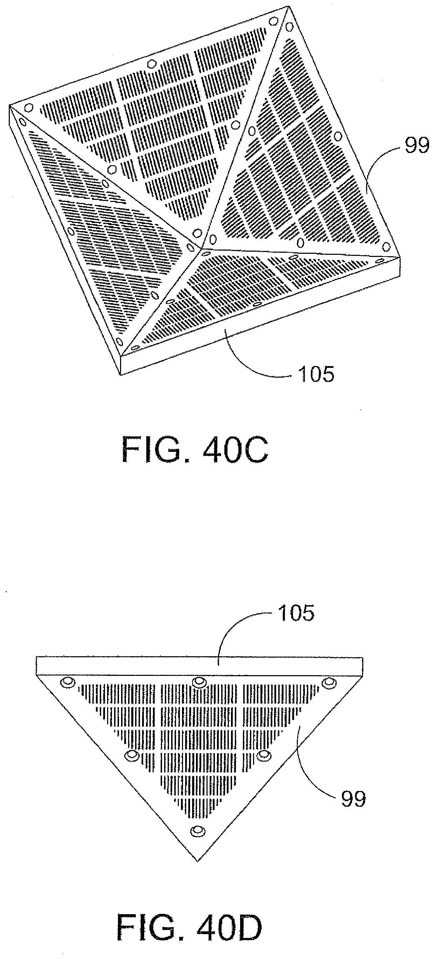

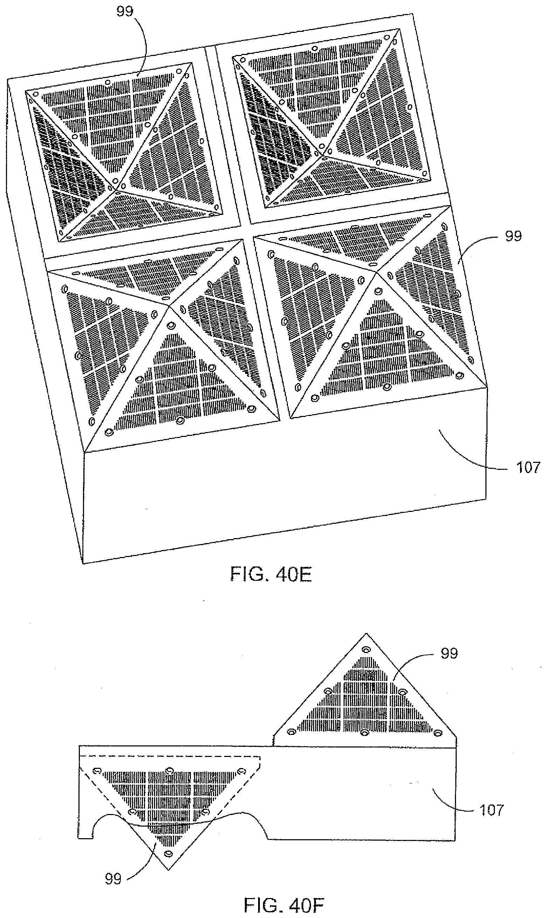

Figure 40 is an isometric view of a screen element **99** according to an exemplary embodiment of the present invention. Screen element **99** is substantially triangular in shape. Screen element **99** is a single thermoplastic injection molded piece and has similar features (including screening opening sizes) as screen elements **16** and **416** as described herein. Alternatively, the screen element may be rectangular, circular, triangular, square, etc. Any shape may be used for the screen element and any shape may be used for the subgrid as long as the subgrid has grid openings that correspond to the shapes of the screen elements.

Figures 40A and 40B show screen element structure **101,** which may be a subgrid type structure, with screen elements **99** attached thereto forming a pyramid shape. In an alternative embodiment the complete pyramid structure of screen element structure **101** may be thermoplastic injection molded as a single screen element having a pyramid shape. In the configuration shown, the screen element structure has four triangular screen element screening surfaces. The bases of two of the triangular screening surfaces begin at the two side members of the screen element and the bases of the other two triangular screening surfaces begin at the two end members of the screen element. The screening surfaces all slope upward to a center point above the screen element end members and side members. The angle of the sloped screening surfaces may be varied. Screen element structure **101** (or alternatively single screen element pyramids) may be attached to a subgrid structure as described herein.

Figures 40C and 40D show a screen element structures **105** with screen elements **99** attached and having a pyramidal shape dropping below side members and edge members of the screen element structure **105.** Alternatively, the entire pyramid may be thermoplastic injection molded as a single pyramid shaped screen element. In the configuration shown, individual screen elements **99** form four triangular screening surfaces. The bases of two of the triangular screening surfaces begin at the two side members of the screen element and the bases of the other two triangular screening surfaces begin at the two end members of the screen element. The screening surfaces all slope downward to a center point below the screen element end members and side members. The angle of the sloped screening surfaces may be varied. Screen element structure **105** (or alternatively single screen element pyramids) may be attached to a subgrid structure as described herein.

Figures 40E and 40F show a screen element structure **107** having multiple pyramidal shapes dropping below and rising above the side members and edge members of screen element structure **107.** Each pyramid includes four individual screen elements **99** but may also be formed as single screen element pyramid. In the configuration shown, each screen element has sixteen triangular screening surfaces forming four separate pyramidal screening surfaces. The pyramidal screening surfaces may slope above or below the screen element end members and side members. Screen element structure **107** (or alternatively single screen element pyramids) may be attached to a subgrid structure as described herein. Figures 40 through 40F are exemplary only as to the variations that may be used for the screen elements and screen element support structures.

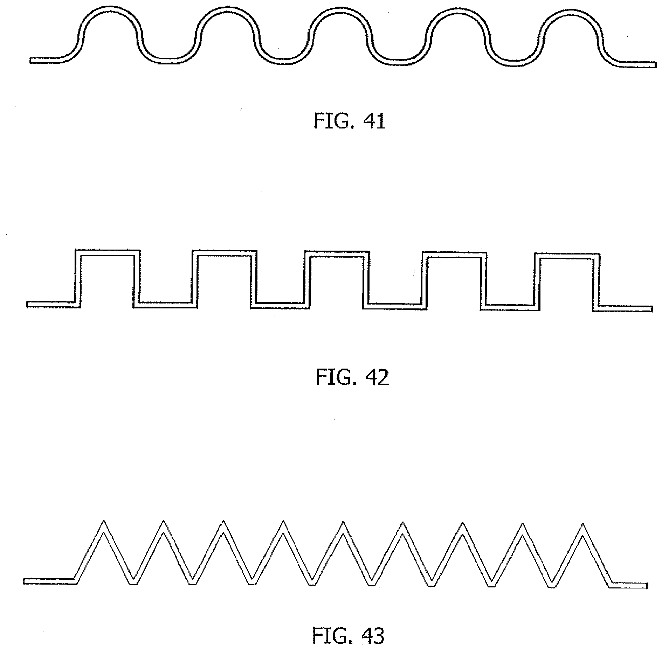

Figures 41 to 43 show cross-sectional profile views of exemplary embodiments of thermoplastic injection molded screen element surface structures that may be incorporated into the various embodiments of the present invention discussed herein. The screen element is not limited to the shapes and configurations identified herein. Because the screen element is thermoplastic injection molded, multiple variations may be easily fabricated and incorporated into the various exemplary embodiments discussed herein.

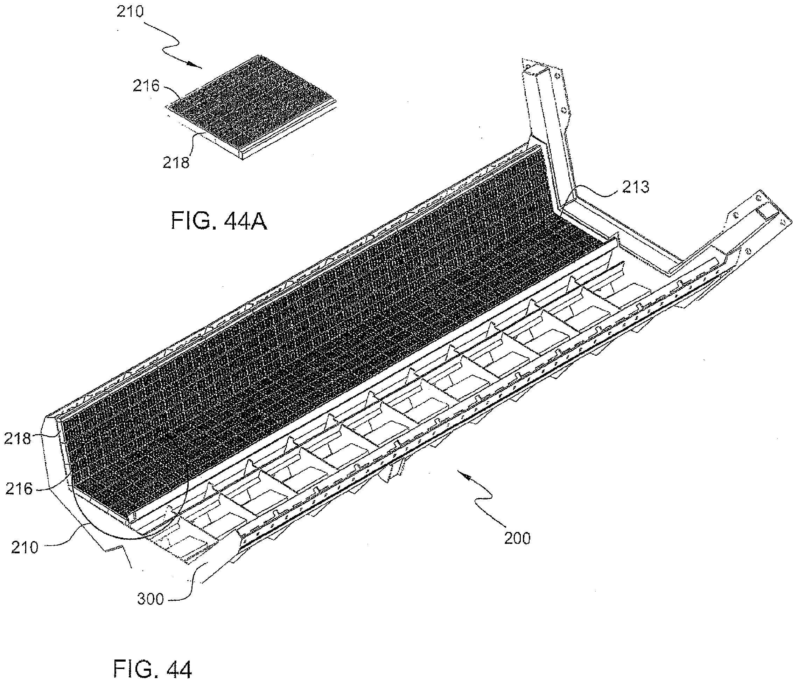

Figure 44 shows a prescreen structure **200** for use with vibratory screening machines. Prescreen structure **200** includes a support frame **300** that is partially covered with individual prescreen assemblies **210.** Prescreen assemblies **210** are shown having multiple prescreen elements **216** mounted on prescreen subgrids **218.** Although, prescreen assemblies **210** are shown including six prescreen subgrids **218** secured together, various numbers and types of subgrids may be secured together to form various shapes and sizes of prescreen assemblies **210.** The prescreen assemblies **210** are fastened to support frame **300** and form a continuous prescreening surface **213.** Prescreen structure **200** may be mounted over a primary screening surface. Prescreen assemblies **210,** prescreen elements **216** and the prescreen subgrids **218** may include any of the features of the various embodiments of screen assemblies, screen elements and subgrid structures described herein and may configured to be mounted on prescreen support frame **300,** which may have various forms and configurations suitable for prescreening applications. Prescreen structure **200,** prescreen assemblies **210,** prescreen elements **216** and the prescreen subgrids **218** may be configured to be incorporated into the prescreening technologies (e.g., compatible with the mounting structures and screen configurations) described in U.S. Patent Application No. 12/051,658 (now U.S. Patent No. 8,439,203).

Figure 44A shows an enlarged view of prescreen assembly **210.**

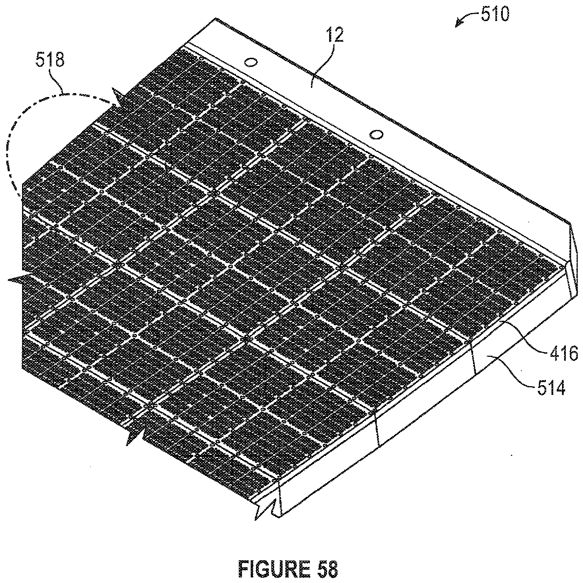

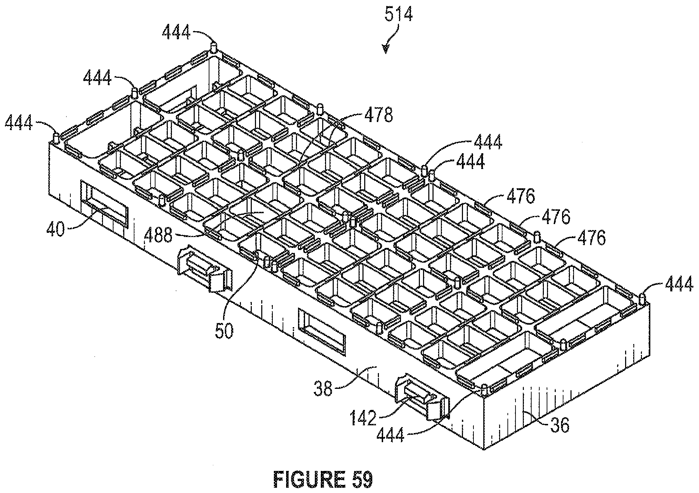

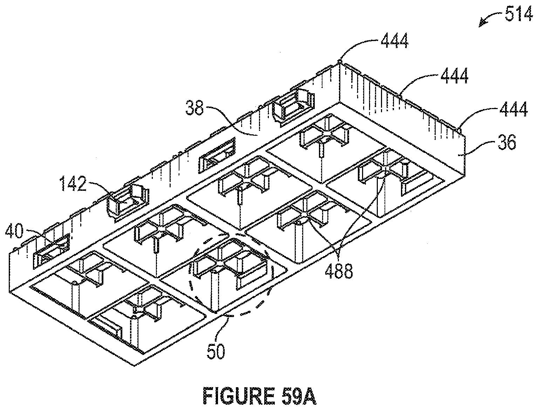

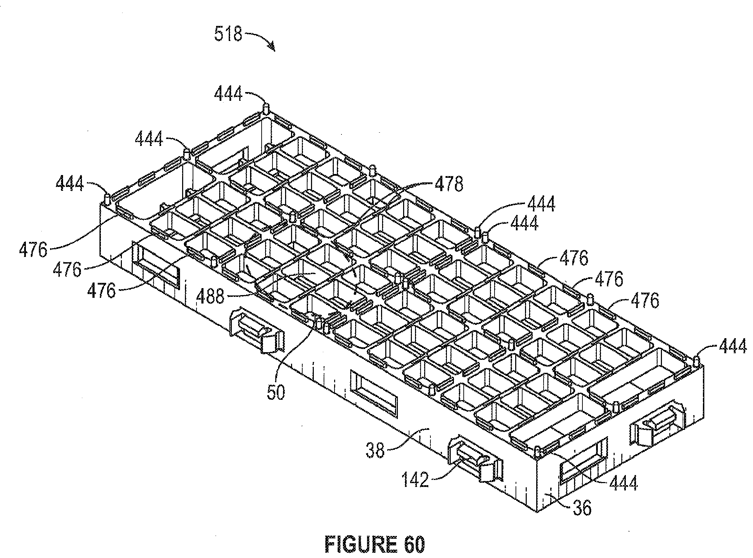

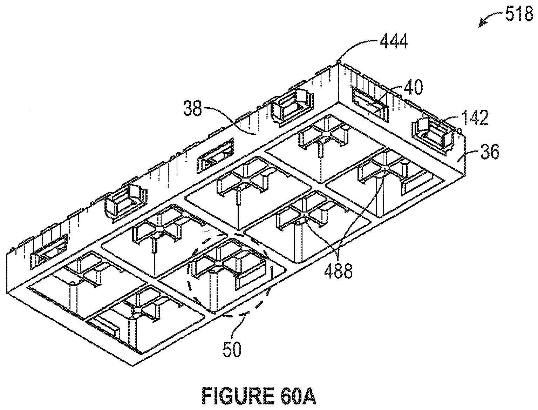

Figure 58 is a top isometric view of a portion of a screen assembly **510.** Screen assembly **510** includes screen elements **416,** center subgrid units **518,** and end subgrid units **514.** Screen elements **416** were described in detail above with reference to Figures 48, 48A, 48B, and 48C. End subgrid units **514** are described in greater detail below with reference to Figures 59 and 59A, and center subgrid units **518** are described in greater detail below with reference to Figures 60 and 60A. Screen assembly **510** is similar to screen element **410** described above with reference to Figure 47. Like screen assembly **410,** screen assembly includes binder bars **12** that are attached to ends of the screen assembly.

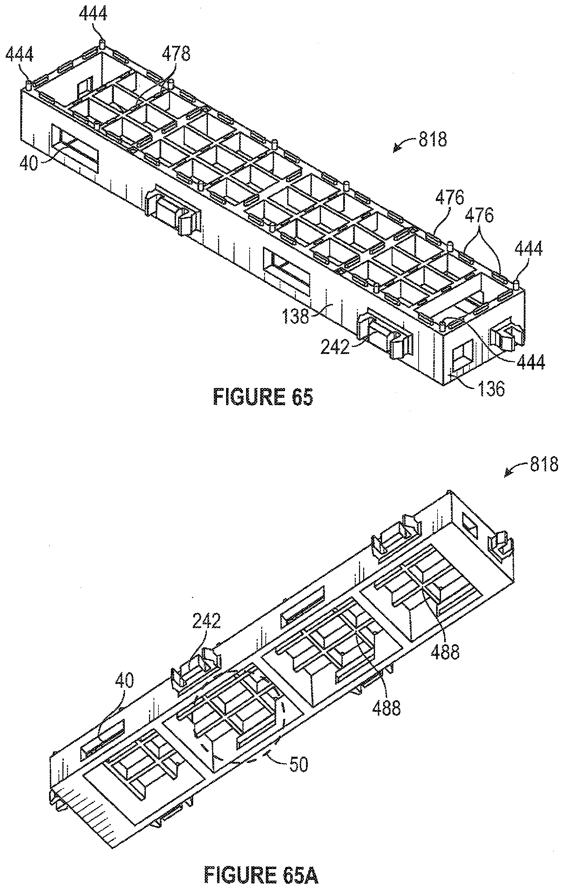

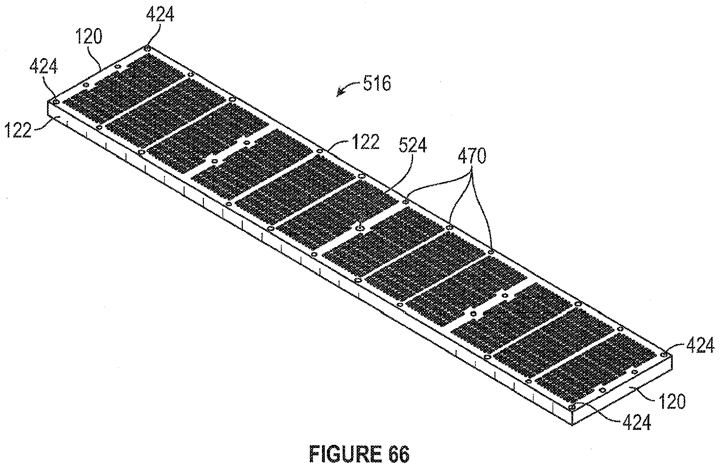

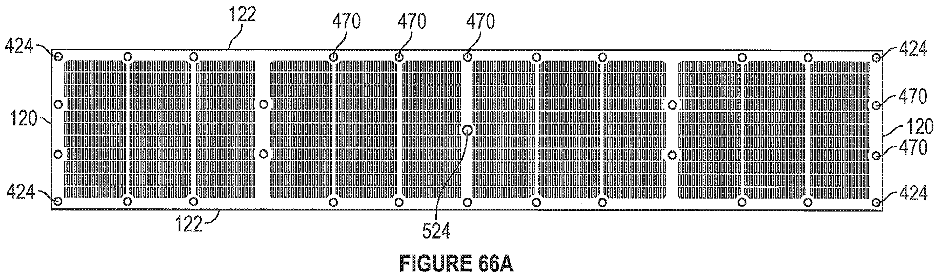

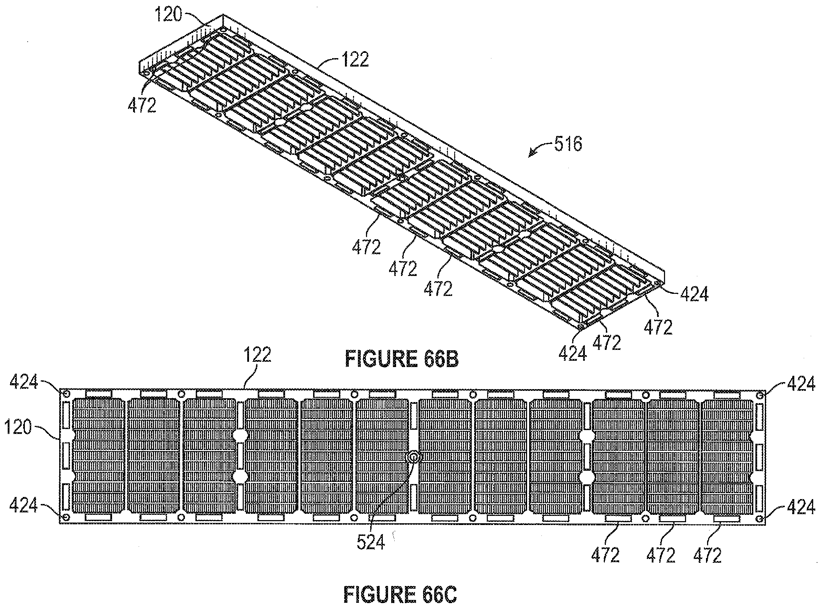

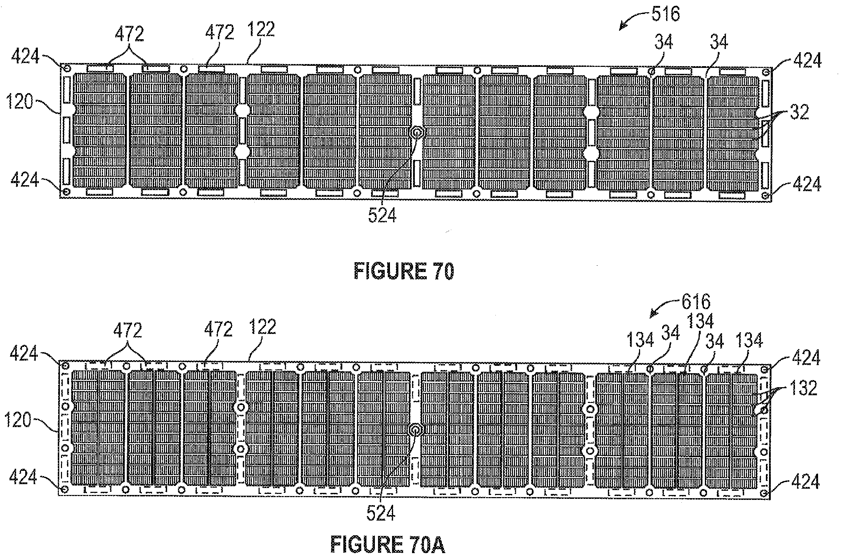

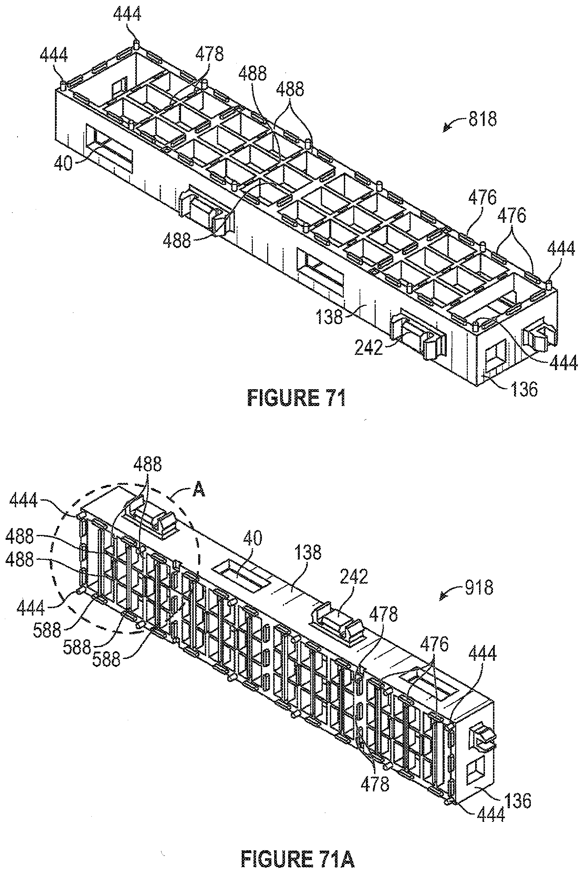

In further embodiments, screen assemblies similar to screen assembly **510** of Figure 58 (or screen assembly 410 of Figure 47) may be formed by mixing and matching various screen elements (e.g., **416** of Figures 48 - 48C, **516** of Figures 66 - 66C, and **616** of Figure 70A) with various subgrid structures (e.g., **14** of Figures 3 and 3A, **514** of Figures 59 and 59A, **818** of Figure 65 and 65A, **918** of Figures 71A - 71D, etc.). As described in greater detail below, screen element **516** has similar features to screen element **416** but screen elements **516** and **416** have different sizes. In an example embodiment, screen element **416** may be a 2" x 3" screen element while screen elements **516** and **616** may be 1" x 6" screen elements. As described in greater detail below, screen element **616** has smaller features than screen element **516.** Further, the smaller width of screen elements **516** and **616,** and associated structures, allows smaller features to be manufactured.

Figure 59 is a top isometric view of an end subgrid **514,** and Figure 59A is a bottom isometric view of end subgrid **514** shown in Figure 59. End subgrid **514** is an alternative embodiment to end subgrid **414** shown in Figures 49 and 49A. End subgrid **514** may be thermoplastic (or other suitably chosen material) injection molded and may include all of the features of end subgrid unit **414** with the exception of clips **42** of end subgrid unit **414.** End subgrid unit **514** includes clips **142** as discussed in greater detail below.

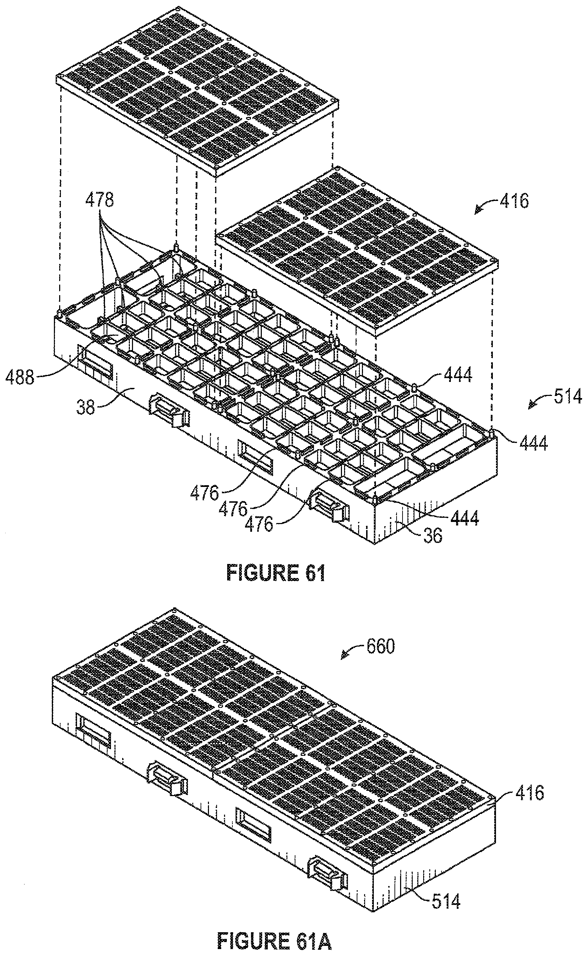

With the exception of clips **142,** end subgrids **514** (e.g., see Figures 59, 59A, 61, and 61A) include structural features similar to those found in end subgrids **414** (e.g., see Figures 49, 49A, 51, and 51A). For example, end subgrid **514** includes a plurality elongated location members **444,** a secondary support framework **488** spanning across grid openings **50,** a plurality of fusion bars **476,** and a plurality of shortened fusion bars **478.** Further, end subgrid **514** includes parallel subgrid end members **36,** and parallel subgrid side members **38** that are substantially perpendicular to the subgrid end members **36.**

Screen elements **416** (e.g., see Figure 61 and 61A) may be attached to end subgrids 514, using methods similar to those described herein, including methods above with reference to Figures 51 and 51A for attaching screen element **416** to end subgrids **414.** For example, as shown in Figure 61, two screen elements **416** may be positioned over an end subgrid unit **514.** Fusion bars **476** and **478** may be melted (e.g., using laser welding, heat staking, etc.) to fuse the two screen elements **416** to end subgrid unit **514** to form the end subassembly **660** shown in Figure 61A. Further details describing this technique of fusing a screen element to a subgrid unit are described above with reference to Figures 51 and 51A. In other embodiments, other methods may be used to fuse a screen element to a subgrid. For example, screen elements may be affixed to the subgrids by at least one of a mechanical arrangement, an adhesive, heat staking, and ultrasonic welding, as described above.

Figure 60 is a top isometric view of a center subgrid **518,** and Figure 60A is a bottom isometric view of center subgrid **518** shown in Figure 60. Center subgrid **518** is an alternative embodiment to center subgrid **418** shown in Figures 50 and 50A. Center subgrid **518** may be thermoplastic (or other suitably chosen material) injection molded and may include all of the features of center subgrid unit **418** with the exception of clips **42** of center subgrid unit **418.** Center subgrid unit **518** includes clips **142** as discussed in greater detail below.

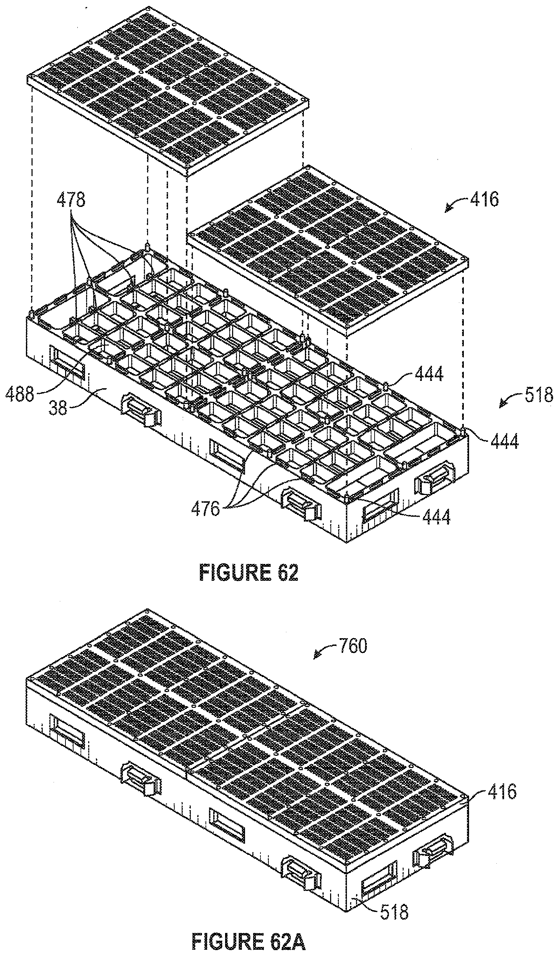

Similarly, with the exception of clips **142,** center subgrids **518** (e.g., see Figures 60, 60A, 62, and 62A) include structural features similar to those found in center subgrids **418** (e.g., see Figures 50, 50A, 52, and 52A). For example, center subgrid **518** includes a plurality elongated location members **444,** a secondary support framework **488** spanning across grid openings **50,** a plurality of fusion bars **476,** and a plurality of shortened fusion bars **478.** Further, center subgrid **518** includes parallel subgrid end members **36,** and parallel subgrid side members **38** that are substantially perpendicular to the subgrid end members **36.**

Screen elements **416** (e.g., see Figure 62 and 62A) may be attached to center subgrids **518,** using methods similar to those discussed above with reference to Figures 52 and 52A for attaching screen element **416** to center subgrids **418.** For example, as shown in Figure 62, two screen elements **416** may be positioned over a center subgrid unit **518.** Fusion bars **476** and **478** may be melted to fuse the two screen elements **416** to center subgrid unit **518** to form the center subassembly **760** shown in Figure 62A, as described in greater detail above with reference to Figures 52 and 52A. Further details describing this technique of fusing a screen element to a subgrid unit are described above with reference to Figures 52 and 52A.

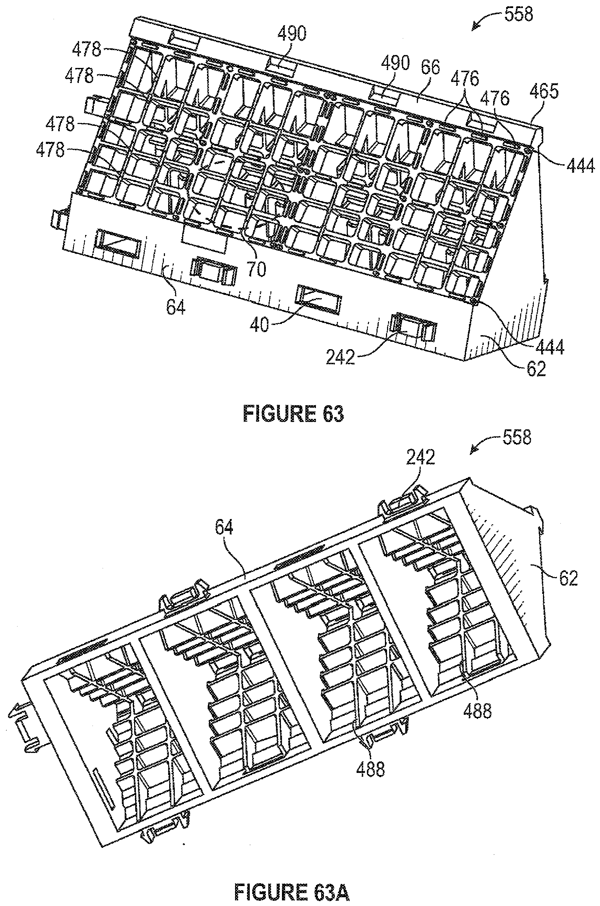

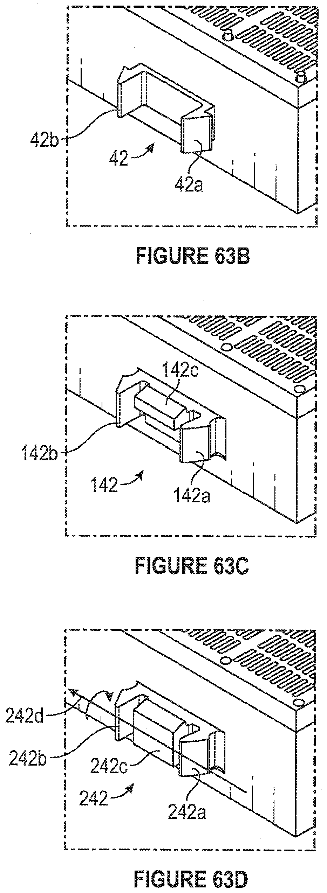

Clips **142** (e.g., see Figures 59, 59A, 60, 60A, and 63C) include similar extended members to those of clips **42.** In addition to the two extended members of clips **42** (e.g. see Figures 3, 3A, 49, 49A, 50 and 50A) clips **142** have an additional extended member for a total of three extended members (e.g., see Figure 63 and related discussion below). The presence of three extended members allows clips **142** to make a stronger and more rugged connection between end subgrid units **514** relative to the connection between end subgrid units **414** (e.g., see Figures 49 and 49A) provided by clips **42.** Similarly, clips **142** provide stronger and more rugged connections between end subgrid units **514** and center subgrids **518,** and between neighboring center subgrid units **518,** relative to connections provided by clips **42.**

The use of clips **142** (e.g., see Figures 59, 59A, 60, 60A, and 63C) is similar to the use of clips **42** (e.g. see Figures 3, 3A, and related discussion). In this regard, subgrid units (e.g., end subgrid units **514** and/or center subgrid units **518**) may be secured together along their respective side members **38** by passing clip **142** into clip aperture 40 until the three extended members of clip **142** extend beyond clip aperture **40** and subgrid side member **38.** As clip **142** is pushed into clip aperture **40,** extended members of clip **142** will be forced together until a clipping portion of each extended member is beyond subgrid side member **38** allowing the clipping portions of clip **142** to engage an interior portion of subgrid side member **38.**

As described above with reference to Figures 3 and 3A, when the clipping portions of clip 142 are engaged into clip aperture **40,** subgrid side members of two independent end subgrids **514** will be side by side and secured together (e.g. see Figures 3, 3A, and related discussion). Similarly, when the clipping portions of clip **142** are engaged into the clip aperture **40,** subgrid side members of two independent center subgrids **518** will be side by side and secured together. An end member **36** of end subgrid **514** may similarly be secured to an end member **36** of a center subgrid **518.** Likewise end members **36** of two neighboring center subgrids **518** may be secured together. The subgrids may be separated by applying a force to the extended members of clip **142** such that the extended members are moved together allowing for the clipping portions to pass out of clip aperture **40.**

In further embodiments, clips **142** may be configured to form a permanent connection between subgrids that once connected cannot be disconnected without breaking the clips **142** or one or more of the subgrids. Such embodiments having clips **142** that may form permanent connections may be advantageous for generating screen assemblies that may be secured into a vibratory screening machine based on compressive forces as described, for example, in U.S. Patent Nos. 7,578,394 and 9,027,760, the disclosure of each of which is incorporated herein by reference. In this regard, screen assemblies may be generated that can withstand compressive forces in a range of 2000 - 3000 1b applied to edges of screen assemblies. Further, such screen assemblies may be configured to operate in a vibratory screening machine with vibrational accelerations in a range of 3 - 9 G.

Figure 63 is a top isometric view of a pyramidal shaped end subgrid **558,** and Figure 63A is a bottom isometric view of the pyramidal shaped end subgrid **558** shown in Figure 63. Pyramidal shaped subgrid **558** of Figures 63 and 63A is an alternative embodiment to pyramidal shaped end subgrid **458** shown in Figures 53 and 53A. Pyramidal shaped subgrid **558** may be thermoplastic (or other suitably chosen material) injection molded and may include all of the features of pyramidal shaped end subgrid **458** with the exception of clips **42** of pyramidal shaped end subgrid unit **458.** Pyramidal shaped subgrid **558** includes clips **242.**

Similarly, with the exception of clips **242,** pyramidal shaped subgrid **558** (e.g., see Figures 63 and 63A) includes structural features similar to those found in pyramidal shaped end subgrid **458** (e.g., see Figures 53 and 53A. For example, pyramidal shaped end subgrid **558** includes a ridge portion **66,** subgrid side members/base members **64,** and angular surfaces **70** that peak at ridge portion **66** and extend downwardly to side member **64.** Pyramidal shaped subgrid **558** also has triangular end members **62.** Pyramidal shaped end subgrid **558** may have a plurality elongated location members **444,** and second adhesion arrangements such as a plurality of fusion bars **476** and shorted fusion bars **478.** Pyramidal shaped end subgrid **558** may may include secondary support framework **488** spanning across grid openings, and may include a flattened ridge portion **465** and may have fixture locators **490** in ridge **66.**

Clips **242** are similar to clips **142** in that they have additional structure that provides for a stronger and more rugged connection between neighboring pyramidal shaped end subgrids **458.** For example, clips **242** have two similar extended members that are structurally similar to the two extended members of clips **42** and **142.** Clips **242** also have an additional central extended member (e.g., see Figure 63D below) that likewise engages an interior portion of subgrid side member **64.**

Clips **142** and **242** provide additional structure to form strong connections between subgrid units and may withstand compression forces in a range from 2000 - 3000 1b compression force on a screening assembly. Further, when screening subassemblies are formed into screening assemblies, the resulting assemblies that utilize clips **142** and **242** provide strong binding forces between subassemblies so that the resulting screening assembly may withstand large vibrational accelerations on the order of 3G to 9G. Disclosed screening assemblies are further designed to support abrasive materials (e.g., fluids having several percent to up to 65 percent abrasive solids) and high load demands (e.g, fluids having specific gravity up to 3 pounds per gallon), as described in greater detail below.

Figures 63B, 63C, and 63D compare structural features of clips **42** (e.g., see Figures 3 and 3A), **142** (e.g. see Figures 59 - 62A), and **242** (e.g., see Figures 63 and 63A), respectively. Figure 63B illustrates an isometric view of clip **42.** As shown in Figure 63B, clip **42** has first **42a** and second **42b** extended members that engage with a clipping aperture **40** (e.g., see Figure 59). Figure 63C illustrates an isometric view of clip **142,** which has first **142a** and second **142b** extended members that are similar to corresponding first **42a** and second **42b** extended members of clip **42** of Figure 63B (see also Figures 3 and 3A). Clip **142,** however, provides third **142c** extended member as shown in Figure 63C. The three extended members, **142a, 142b,** and **142c,** of clip **142** provide a stronger and more rugged connection between subgrids, as described above.

Figure 63D illustrates an isometric view of clip **242.** As shown in Figure 63D, clip **142** has first **242a** and second **242b** extended members that are similar to first **42a** and second **42b** extended members of clip **42** (e.g., see Figures 3, 3A, 63B), and are similar to first **142a** and second **142b** extended members of clip **142** (e.g., see Figure 63C). As mentioned above, however, clip **142** of Figure 63D also has a central extended member **242c** that engages with upper and lower edges of clip aperture **40** (e.g., see Figure 63). Clip **242** provides additional stability for connections between subgrids in that central extended member **242c** hinders rotational motion about an axis **242d** of two subgrids bound by clip **242,** as shown in Figure 63D.

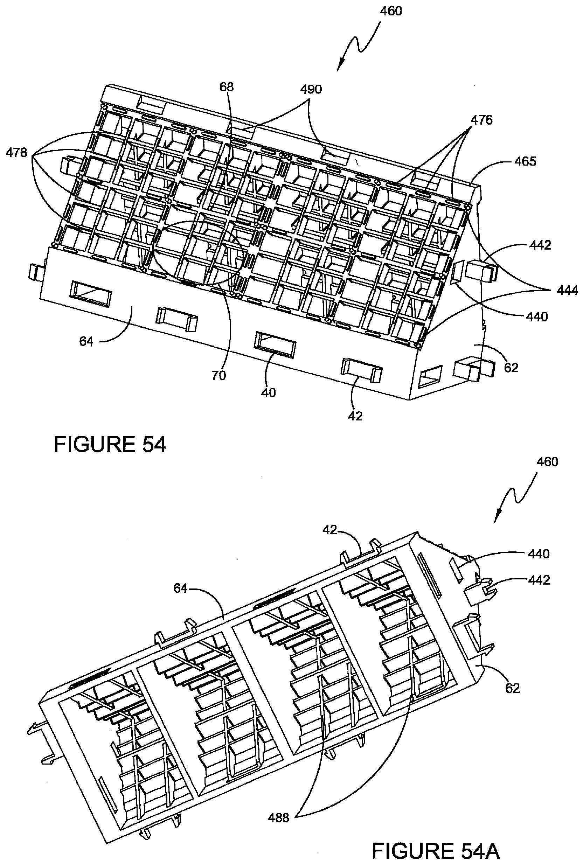

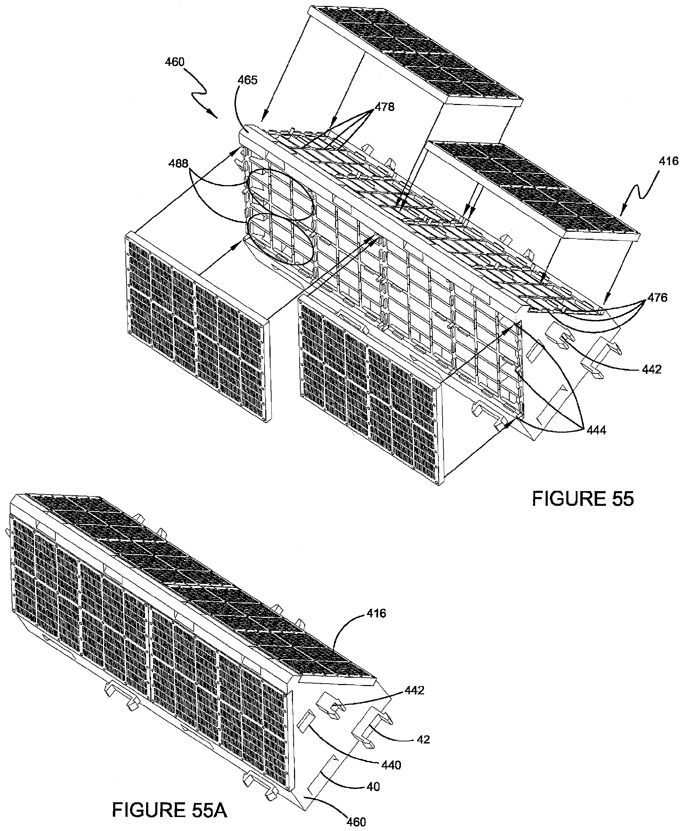

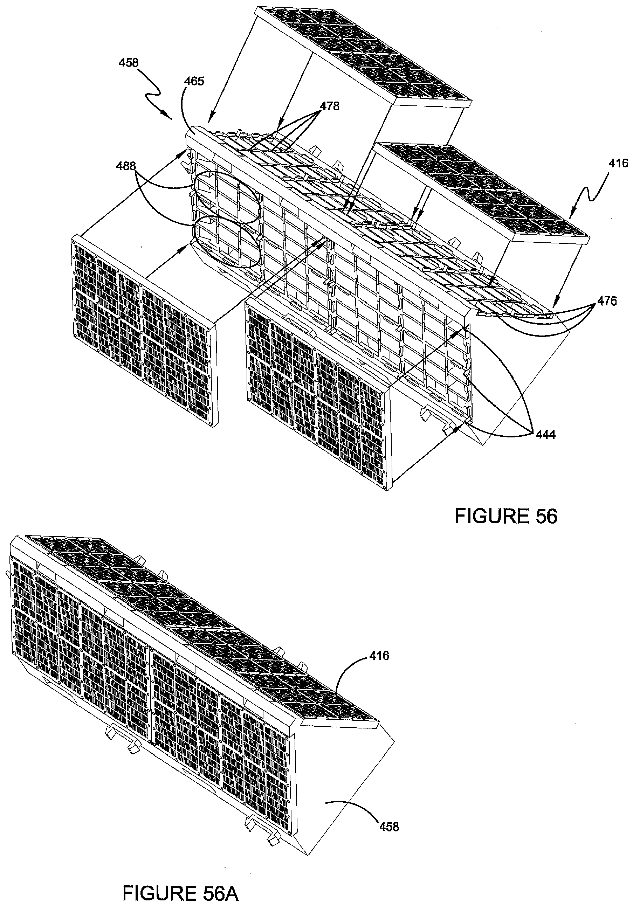

The above discussion may be generalized straightforwardly in that any structure having clips **42** may be generalized to a similar structure having clips **142** or **242** (e.g., see Figures 63C and 63D). For example, pyramidal shaped center subgrid **460** shown in Figures 54 and 54A may similarly be generalized to a pyramidal shaped center subgrid structure having clips **142** or **242** (not shown). Similarly, the methods for attaching screening members **416** to such pyramidal shaped subgrids described above with reference to Figures 55, 55A, 56 and 56A may be employed to attach screening members **416** to the generalized pyramidal shaped center subgrids since clips **42, 142,** and **242** play no role in the process of attaching screening members **416.**

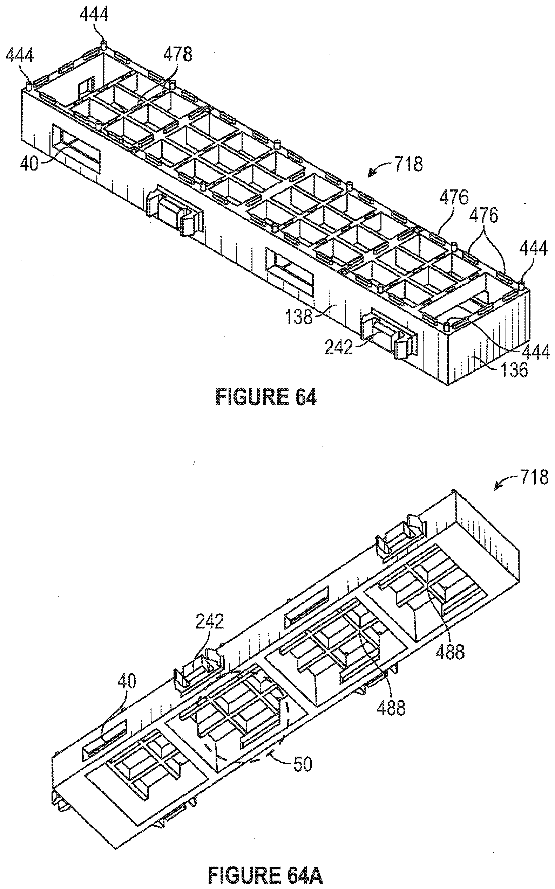

Figure 64 is a top isometric view of an end subgrid **718,** and Figure 64A is a bottom isometric view of end subgrid **718** shown in Figure 64. End subgrid **718** is an alternative embodiment to end subgrid **514** shown in Figures 59 and 59A. End subgrid **718** may be thermoplastic (or other suitably chosen material) injection molded and may include similar features to those found in end subgrid unit **514.** For example, end subgrid **718** includes a plurality elongated location members **444,** a secondary support framework **488** spanning across grid openings **50,** a plurality of fusion bars **476,** and a plurality of shortened fusion bars **478.** Further, end subgrid **718** includes parallel subgrid end members **136,** and parallel subgrid side members **138** that are substantially perpendicular to the subgrid end members **136.** End subgrid **718** may also have clips **242** similar to those of pyramidal shaped end subgrid **558** (e.g., see Figures 63 and 63A). Alternatively, in an embodiment end subgrid **718** may employ other clips such as clips **142** of end subgrid **514** (e.g., see Figures 59 and 59A) or clips **42** of end subgrid **14** (e.g., see Figures 3 and 3A).

In contrast to end subgrid **514,** however, end subgrid **718** has about the same length as end subgrid **514** but about half the width of end subgrid **514.** In other words, a length measured along the parallel subgrid side members **138** for end subgrid **718** is substantially equal to a length measured along the parallel subgrid side members **38** for end subgrid **514,** but the a distance measured along parallel subgrid end member **136** for subgrid **718** is substantially equal to half the distance measured along the subgrid end member **36** of end subgrid **514.** The shorter width of end subgrid **718** provides an advantage in that it may support corresponding screen elements **516** (e.g., see Figures 66, 66A, 66B, and 66C) having half the width of screen elements **416** (e.g., see Figures 48, 48A, 48B, and 48C). Screen elements **516** having a shorter width allows manufacturing of screen elements **516** having smaller features such as smaller screening openings **86,** and smaller surface elements **84** (e.g., see Figure 2D), as described in greater detail below.

Figure 65 is a top isometric view of a center subgrid **818,** and Figure 65A is a bottom isometric view of the center subgrid **818** shown in Figure 65. Center subgrid **818** is an alternative embodiment to center subgrid **518** shown in Figures 60 and 60A. Center subgrid **818** may be thermoplastic (or other suitably chosen material) injection molded and may include similar features to those found in center subgrid unit 518. For example, center subgrid **818** includes a plurality of elongated location members **444,** a secondary support framework **488** spanning across grid openings **50,** a plurality of fusion bars **476,** and a plurality of shortened fusion bars **478.** Further, center subgrid **818** includes parallel subgrid end members **136,** and parallel subgrid side members **138** that are substantially perpendicular to the subgrid end members **136.** Center subgrid **818** may also have clips **242** similar to those of pyramidal shaped center subgrid **558** (e.g., see Figures 63 and 63A). Alternatively, in an embodiment center subgrid **818** may employ other clips such as clips **142** of center subgrid **518** (e.g., see Figures 60 and 60A) or clips **42** of center subgrid **18** (e.g., see Figures 4 and 4A).

In contrast to center subgrid **518,** however, center subgrid **818** has about the same length as center subgrid **518** but about half the width of center subgrid **518** (e.g., compare Figures 65 and 65A with Figures 60 and 60A). In other words, a length measured along parallel subgrid side members **138** for center subgrid **818** is substantially equal to a length measured along parallel subgrid side member **38** for center subgrid **518,** but the a distance measured along parallel subgrid end members **136** for subgrid **818** is substantially equal to half a distance measured along the subgrid end members **36** of center subgrid **518.** The shorter width of center subgrid **818** provides an advantage in that it may support corresponding screen elements **516** (e.g., see Figures 66, 66A, 66B, and 66C) having half the width of screen elements **416** (e.g., see Figures 48, 48A, 48B, and 48C). Screen elements **516** having a shorter width allows manufacturing of screen elements **516** having smaller features such as smaller screening openings **86,** and smaller surface elements **84** (e.g., see Figure 2D), as described in greater detail below.

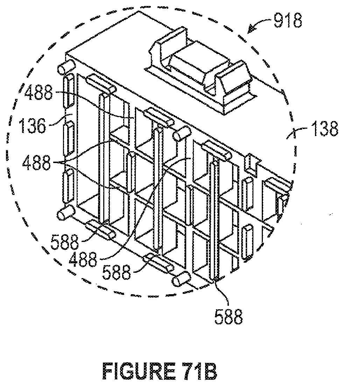

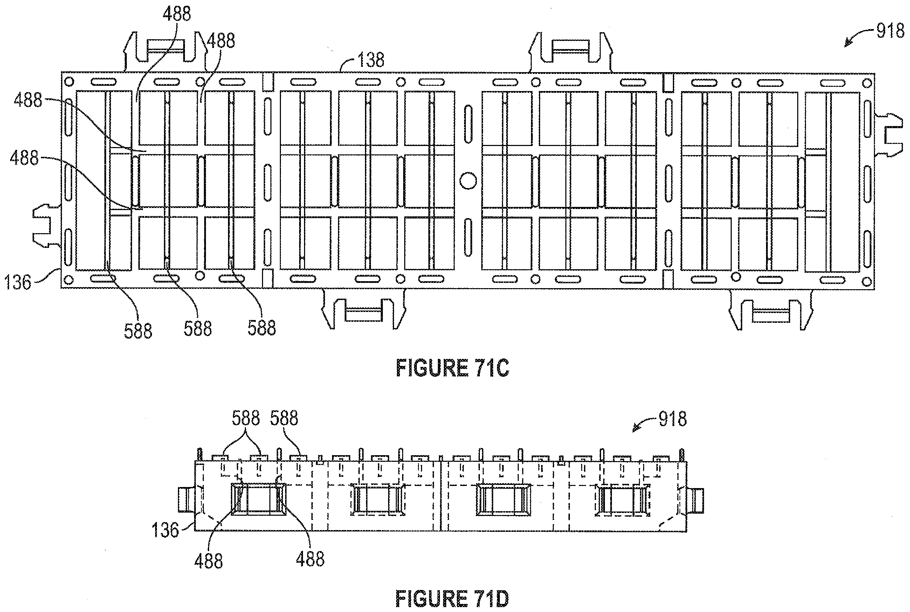

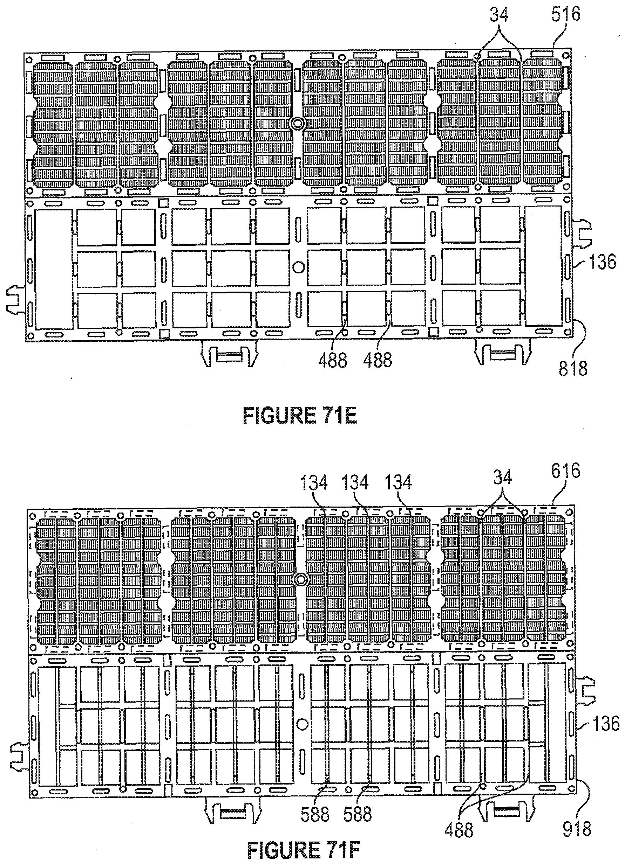

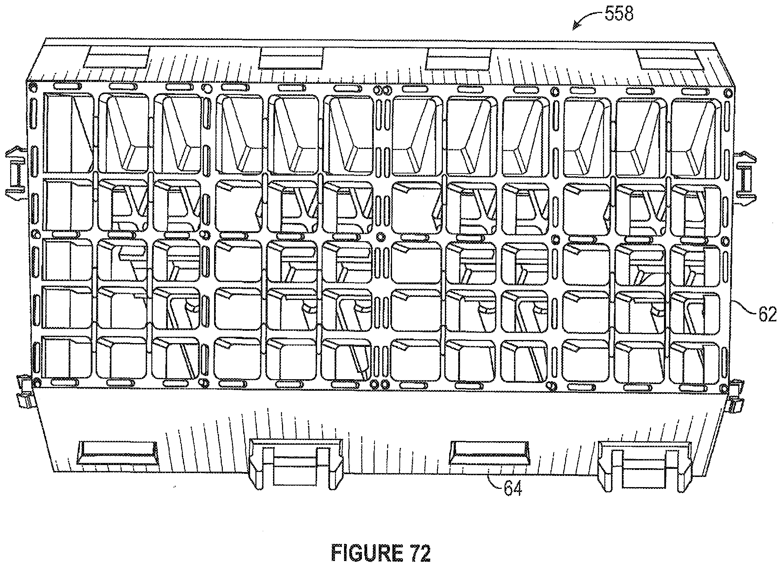

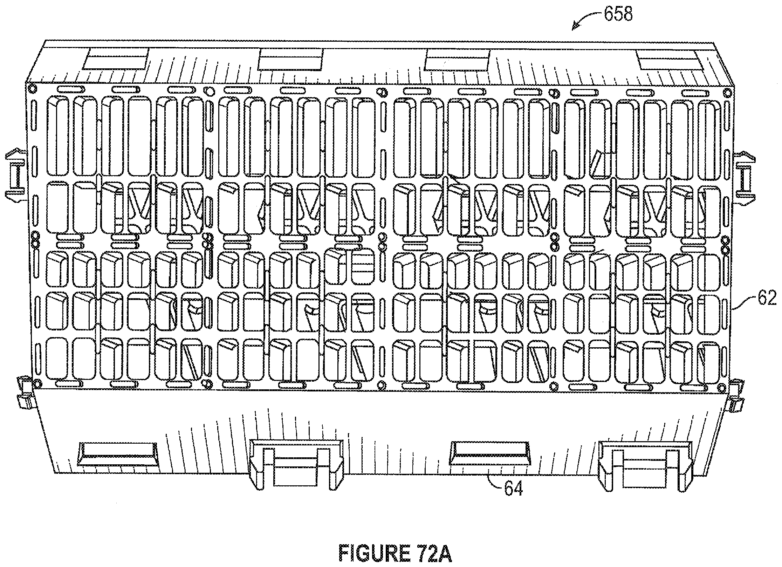

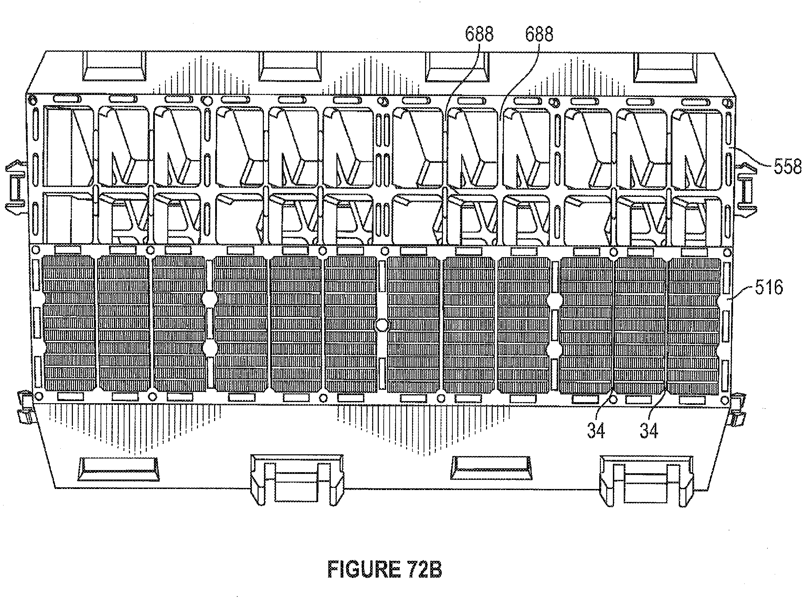

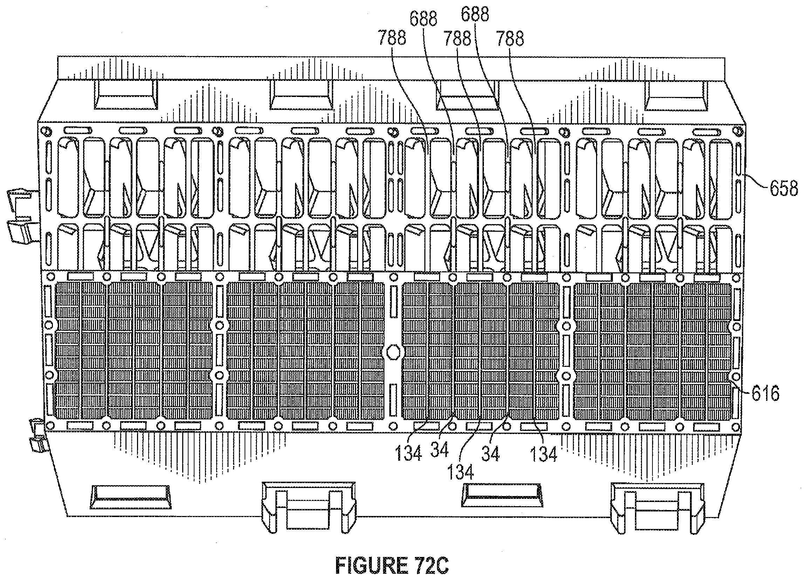

As described in greater detail below (e.g., with reference to Figures 70 - 74D), screen elements (e.g., see Figure 70A) having smaller features such as smaller screening openings **86,** and smaller surface elements **84** (e.g., see Figure 2D, and Tables I. - IV. below), are designed to be supported by corresponding subgrid structures having additional structural features (e.g., see Figures 71 - 71D, 72, and 72A) that support corresponding reinforcement members (e.g., see Figures 71E, 71F, 72B, 72C, 74B, and 74C) of screening elements. The smaller screening features of screen elements that are supported by additional structure of the subgrids may be assembled into screening assemblies having increased open screening area.

In this way, screen elements are provided that: are of an optimal size (large enough for efficient assembly of a complete screen assembly structure yet small enough to injection mold (micromold in certain embodiments) extremely small structures forming screening openings while avoiding freezing (i.e., material hardening in a mold before completely filling the mold)); have optimal open screening area (the structures forming the openings and supporting the openings are of a minimal size to increase the overall open area used for screening while maintaining, in certain embodiments, very small screening openings necessary to properly separate materials to a specified standard); have durability and strength, can operate in a variety of temperature ranges; are chemically resistant; are structurally stable; are highly versatile in screen assembly manufacturing processes; and are configurable in customizable configurations for specific applications.

Further, screening elements, subgrids, and screen assemblies may have different shapes and sizes as long as structural support members of subgrids are provided to support corresponding reinforcement members of screening elements. Screens, subgrids, and screen assemblies are designed to withstand high vibratory forces (e.g., accelerations in a range of 3 - 9G), abrasive materials (e.g., fluids having several percent to up to 65 percent abrasive solids) and high load demands (e.g, fluids having specific gravity up to 3 pounds per gallon). Screen assemblies are also designed to withstand up to 2000 - 3000 1b compressive loading of screen assembly edges as described, for example, in U.S. Patent Nos. 7,578,394 and 9,027,760, the entire disclosure of each of which is hereby incorporated by references. Further, the disclose screening assemblies are designed so that a size of screening openings is maintained under service conditions including the above-mentioned compressive loading, high vibratory forces, and in the presence of heavy fluids.

Figures 66, 66A, 66B, and 66C illustrate a screen element **516** that is similar to screen element **416** (e.g., see Figures 48, 48A, 48B, and 48C). For example, screen element **516** may include location apertures **424,** which may be located at four corners of screen element **516** and at various places along end member **120** and side member **122** of screen element **516** (e.g., see Figures 66 and 66A). Greater or fewer location apertures **424** may be provided on screen element **516** and multiple configurations may be provided. The location apertures **424** may be utilized to locate the screen element **516** on a subgrid (e.g., such as on end subgrid **718** of Figures 64 and 64A or on center subgrid **818** of Figures 65 and 65A). Screen element **516** may further include a center location aperture **524.** Alternatively, in an embodiment screen element **516** may be located without location apertures **424.** Screen element **516** may include a plurality of tapered counter bores **470,** which may facilitate extraction of screen element **516** from a mold, wherein the mold may have injector pins configured to push the screen element out of the mold (e.g., see Figures 66 and 66A).

In this example, screen elements **516** (e.g., see Figures 66 - 66C) have twice the length of screen elements **416** but half the width of screen elements **416** (e.g., see Figures 48 - 48C). For example, a distance measured alongside portion **122** of screen element **516** is substantially equal to twice a distance measured alongside portion **22** of screen element **416** (e.g., see Figure 48). However, a distance measured along end portion **120** of screen element **516** is substantially equal to half of a distance measured along end portion **20** of screen element **416** (e.g., see Figure 48). Choosing screen elements **516** to have a shorter width allows manufacturing of screen elements **516** having smaller features such as smaller screening openings **86,** and smaller surface elements **84** (e.g., see Figure 2D), as described in greater detail below.

Screen element **516** may have similar features to screen element **416** (e.g., see Figures 48B and 48C) on a bottom side of screen element **516,** as illustrated in Figures 66B and 66C. For example, screen element **516** may have a plurality of cavity pockets **472** that may be arranged along end portions **120** and side portions **122** between the location apertures **424.** As with screen element **416,** the cavity pockets **472** (e.g., see Figure 66C) may serve as an adhesion arrangement of screen element **516** that may be configured to mate with a complementary second adhesion arrangement on a top surface of a subgrid unit (e.g., such as on end subgrid **718** of Figures 64 and 64A or on center subgrid **818** of Figures 65 and 65A).

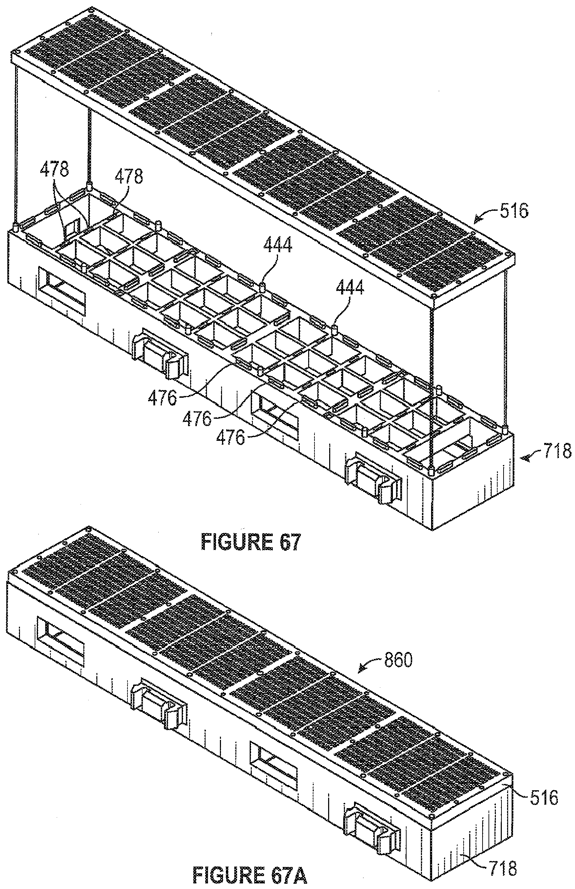

As illustrated, for example, in Figures 67 and 67A, screen elements **516** may be attached to end subgrid **718** to generate end screen subassembly **860,** using methods similar to those described above used to attach screen elements **416** to end subgrid **514** to generate the end subassembly **660** (e.g., see Figures 61 and 61A). For example, location apertures, **424** and **524,** of screen element **516** (e.g., see Figure 66A) may engage with location members **444** of end subgrid **718.** Fusion bars **476** and **478** may then be melted to fuse screen element **516** to end subgrid **718,** as described in greater detail above with reference to Figures 51, 51A, 61, and 61A.

In contrast to the situation illustrated in Figure 61, in which two screen elements **416** span end subgrid **514,** as shown in Figure 67, a single screen element **516** spans end subgrid **718.** This situation occurs because screen element **516** has twice the length and half the width of screen element **416** while end subgrid **718** has the same length but half the width of end subgrid **514.** The shorter width and longer length of screen element **516** allows smaller features, such as screening openings **86,** and smaller surface elements **84** (e.g., see Figure 2D), to be manufactured (e.g., via thermoplastic injection molding), as described in greater detail below.

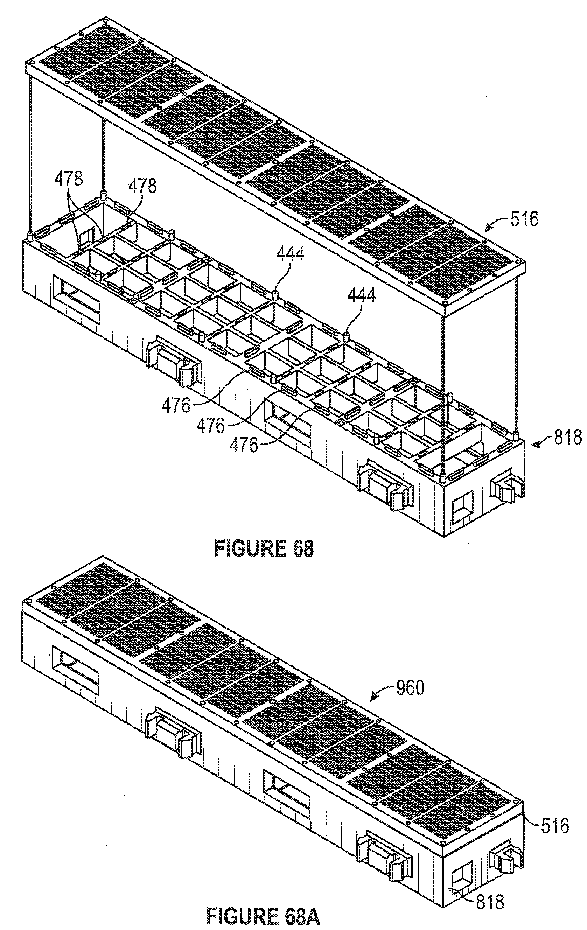

As illustrated, for example, in Figures 68 and 68A, screen elements **516** may be attached to center subgrid **818** to generate center screen subassembly **960,** using methods similar to those described above used to attach screen elements **416** to center subgrid **518** to generate the center subassembly **760** (e.g., see Figures 62 and 62A). For example, fusion bars **476** and **478** may be melted to fuse screen element **516** to center subgrid **818,** as described in greater detail above with reference to Figures 52, 52A, 62, and 62A.

In contrast to the situation illustrated in Figure 62, in which two screen elements 416 span center subgrid **518,** as shown in Figure 68, a single screen element **516** spans center subgrid **818.** This situation occurs because screen element **516** has twice the length and half the width of screen element **416** while center subgrid **818** has the same length but half the width of center subgrid **518.** The shorter width and longer length of screen element **516** allows smaller features, such as screening openings **86,** and smaller surface elements **84** (e.g., see Figure 2D), to be manufactured, as described in greater detail below.

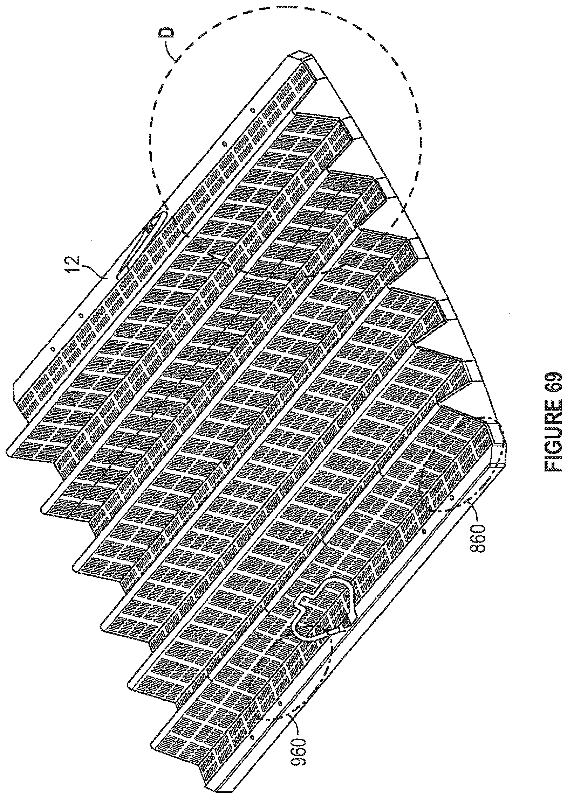

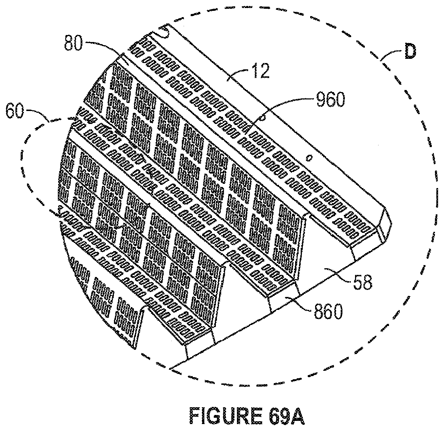

As illustrated, for example, in Figures 69 and 69A, a screen assembly **80** may be formed by combining end screen subassemblies **860,** center screen subassemblies **960,** and screen subassemblies having pyramidal shaped subgrids, such as pyramidal shaped end subassemblies based on pyramidal end subgrids **58** and pyramidal shaped center subassemblies based on pyramidal center subgrids **60,** described above. Pyramidal shaped subassemblies may include screen elements **16** (e.g., see Figures 2 to 2C), **416** (e.g., see Figures 48 to 48C), or **516** (e.g., see Figures 66 to 66C). By using end screen subassemblies **860** and center screen subassemblies **960,** which each have half the width of end subgrids **514** and center subgrids **518,** respectively, the pyramidal shaped subassemblies may be placed closer together than similar assemblies shown in other embodiments, such as the screen assemblies shown, for example, in Figures 21 and 21A.

Figures 70 and 70A compare screen element **516** (see Figure 70) with an alternative embodiment screen element **616** (see Figure 70A) having smaller features than those of screen element **516.** Screen element **616** is designed to support smaller features including smaller screening openings **86** and smaller surface elements **84** (e.g., see Figure 2D), as described in greater detail below.

Screen element **616** may be thermoplastic (or other suitably chosen material) injection molded and have similar features to those of screen element **516.** For example, screen element **616** may include location apertures **424,** which may be located at four corners of screen element **616** and at various places along end member **120** and side member **122** of screen element **616.** Greater or fewer location apertures **424** may be provided on screen element 616 and multiple configurations may be provided. The location apertures **424** may be utilized to locate the screen element **616** on a subgrid (e.g., such as on end subgrid **718** of Figures 67 and 67A or on center subgrid **818** of Figures 68 and 68A). Screen element **616** may further include a center location aperture **524.** Alternatively, in an embodiment, screen element **616** may be located without location apertures **424.** Screen element **616** may include a plurality of tapered counter bores **470,** which may facilitate extraction of screen element **616** from a mold, wherein the mold may have injector pins configured to push the screen element out of the mold.

Screen element **616** may have a plurality of cavity pockets **472** that may be arranged along end portions **120** and side portions **122** between the location apertures **424.** As with screen element **516,** the cavity pockets **472** may serve as an adhesion arrangement of screen element **616** that may be configured to mate with a complementary second adhesion arrangement on a top surface of a subgrid unit. Screen element **616** may thus be attached to a subgrid using similar techniques as those described above for attaching screen element **516** to a subgrid. For example, fusion bars **476** and **478** (e.g., see Figures 67 and 68) may be melted to fuse screen element **516** to a subgrid (e.g., end subgrid **718** of Figure 67 or center subgrid **818** of Figure 68).

Differences between screen element **516** (of Figure 70) and screen **616** (of Figure 70A) relate to support structures, as follows. Screen element **516** has a first series of reinforcement members **32** and screen **616** has a first series of reinforcement members **132.** The linear density of reinforcement members **132** of screen element **616** is higher than the linear density of reinforcement members **32** of screen element **516.** In this example, there are a total of ten reinforcement members **32** spanning a direction parallel to end member **120** for screen element **516,** while there are a total of fourteen reinforcement members **132** spanning a direction parallel to end member **120** for screen element **616.** The greater linear density of reinforcement members **132** of screen element **616** provides greater structural strength to screen element **616** in comparison to screen element **516.** Further, as described in greater detail below, the greater number of reinforcement members **132** allows for a greater number of screen surface elements **84** and screening openings **86,** both of which reside between reinforcement members **132.**

Screen element **516** has a second series of reinforcement members **34.** Screen element **616** also includes the second series of support members **34** along with an additional third series **134** of reinforcement members. Figure 70 illustrates two of the second series of support members **34** in screen element **516.** Figure 71 also illustrates a corresponding two of the second series of support members **34** of screen element **616.** The additional third series of reinforcement members **134** of screen element **616** are shown interposed between neighboring reinforcement members **34** of the second series of reinforcement members **34.** Collectively, the second series of reinforcement members **34** combined with the third series of reinforcement members **134** of screen element **616** represents a larger linear density of reinforcement members, in contrast to the linear density of second reinforcement members **34** of screen member **516.** As described above, regarding the case of the linear density of reinforcement members **132,** the greater linear density of reinforcement members, **34** and **132,** of screen element **616** provides greater structural strength to screen element **616** in comparison to screen element **516.**

Figures 71 and 71A compare center subgrid unit **818** (of Figure 71) with an alternative embodiment center subgrid unit **918** (of Figure 71A) having additional structural support features. The additional structural support features of center subgrid **918** correspond to and provide additional support for the third series of reinforcement members **134** of screen element **616,** as described in greater detail below.

Center subgrid **918** may be thermoplastic (or other suitably chosen material) injection molded and may include similar features to those found in center subgrid unit **818.** For example, center subgrid **918** includes a plurality of elongated location members **444,** a plurality of fusion bars **476,** and a plurality of shortened fusion bars 478. Further, center subgrid **918** includes parallel subgrid end members **136,** and parallel subgrid side members **138** that are substantially perpendicular to the subgrid end members **136.** Center subgrid **918** may also have clips **242** similar to those of center subgrid **818** (e.g., see Figure 65) and to those of pyramidal shaped center subgrid **558** (e.g., see Figures 63 and 63A).

Like center subgrid **818,** center subgrid **918** has a secondary support framework **488** spanning across grid openings **50** (e.g., see grid openings 50 of Figure 65A). In contrast to center subgrid **818,** however, center subgrid **918** has an additional tertiary support framework **588** as shown in greater detail in Figures 71B, 71C, 71D, and 71F.

Figure 71B shows an enlarged view of the region "A" of Figure 71A. The view of Figure 71B illustrates two members of secondary support framework **488** that are parallel to end members **136** and two members of secondary framework **488** that are parallel to side members **138.** The additional tertiary support framework **588** includes members that are parallel to end members **136** and are interspersed between adjacent members of secondary framework **488** that are parallel to end members **136.** The combination of secondary framework **488** and tertiary framework **588** collectively results in a framework that has an increased linear density of support members along a direction parallel to side members **138.** The additional support members of tertiary support framework **588** correspond to, and provide support to the third series of reinforcement members **134** of screen element **616** (e.g., see Figure 70A), as described in greater detail below. Similarly, support members of secondary support framework **488** that are parallel to end members **136** support the corresponding second series of support members **34** of screen element **616.**

Figure 71C illustrates a top-down view of center subgrid **918** and Figure 71D illustrates a side view of center subgrid **918.** Center subgrid **918** includes secondary support framework **488** as does center subgrid **818.** In contrast to center subgrid **818,** however, center subgrid **918** includes tertiary support framework **588,** as described above. Both Figures 71C and 71D show members of tertiary support framework **588** interspersed between adjacent members of secondary support framework **488** that are parallel to end members **136.** As mentioned above, the combination of secondary framework **488** and tertiary framework **588** collectively results in a framework that has an increased linear density of support members along a direction parallel to side members **138.**

Figures 71E and 71F illustrate a correspondence between reinforcement members of screen elements **516** and **616** and corresponding members of support frameworks **488** and **588,** respectively. For clarity of comparison, screen **516** is placed next to center subgrid **818** in Figure 71E, and screen **616** is placed next to center subgrid **918** in Figure 71F. In Figure 71E, two reinforcement members **34** of screen element **516** are shown to spatially align with corresponding members of secondary support network **488** of center subgrid **818.** Similarly, in Figure 71F, two reinforcement members **34** of screen element **616** are shown to spatially align with corresponding members of secondary support network **488** of center subgrid **918.** Further, Figure 71F shows two members of third series of support members **134** that spatially align with corresponding members of tertiary support network **588** of center subgrid **918.** As mentioned above, the additional tertiary support framework **588** includes members that are parallel to end members **136** and are interspersed between adjacent members of secondary framework **488** that are parallel to end members **136.** As such, the combination of secondary framework **488** and tertiary framework **588** collectively results in a framework that has an increased linear density of support members along a direction parallel to side members **138.**

The above discussion regarding end subgrids **818** and **918** may be generalized to other subgrid structures, including end sugrids, as well as pyramidal center, and end subgrids. For example, Figure 72 illustrates pyramidal shaped end subgrid **558** having a grid framework with a first linear density of support members along a direction parallel to side member **64.** The support members in Figures 72 and 72A are parallel to end member **62.** Figure 72A illustrates an alternate embodiment pyramidal shaped end subgrid **658** that includes a grid framework having a higher linear density of support members along a direction parallel to side member **64** in contrast to pyramidal shaped end subgrid **558** of Figure 72. The additional support members of end subgrid **658** provide support for the reinforcement members of screen element **516** as follows.

Figure 72B illustrates support members **688** of support framework of end subgrid **558** that spatially align with corresponding reinforcement members **34** of screen element **516.** This alignment between support members **688** of pyramidal shaped end subgrid **558** and reinforcement members **34** of screen element **516** is similar to the way that support members **488** of center subgrid **818** aligned with reinforcement members **34** of screen element **516** in Figure 71E.

Similarly, pyramidal shaped end subgrid **658,** shown in Figure 71F, has support members **688** that spatially align with corresponding reinforcement members **34** of screen element **616.** In contrast to pyramidal shaped end subgrid **558,** however, pyramidal shaped end subgrid **658** includes additional support members **788.** As shown in Figure 72C, support members **788** of pyramidal shaped end subgrid **658** spatially align with reinforcement members **134** of screen element **616.** In this regard, pyramidal shaped end subgrid **658** provides additional structural support to screen element **516** than pyramidal shaped end subgrid **558** provides to screen element **416.**

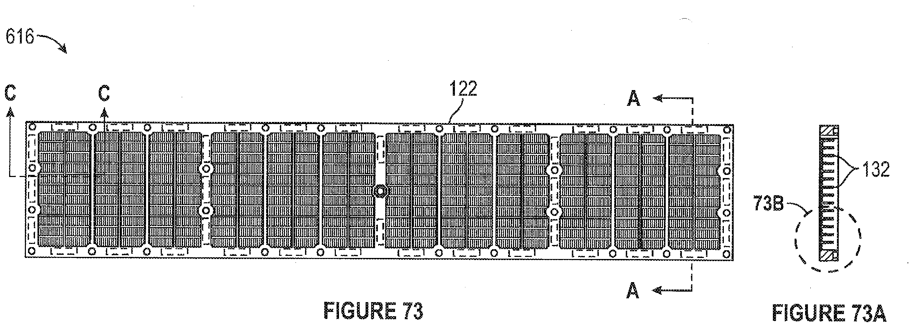

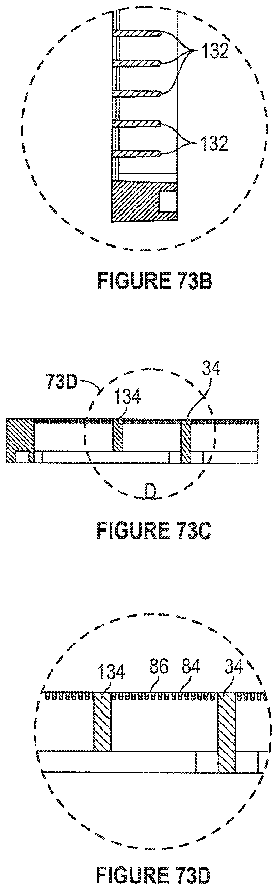

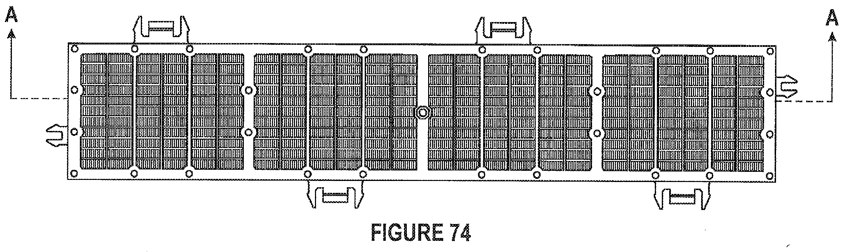

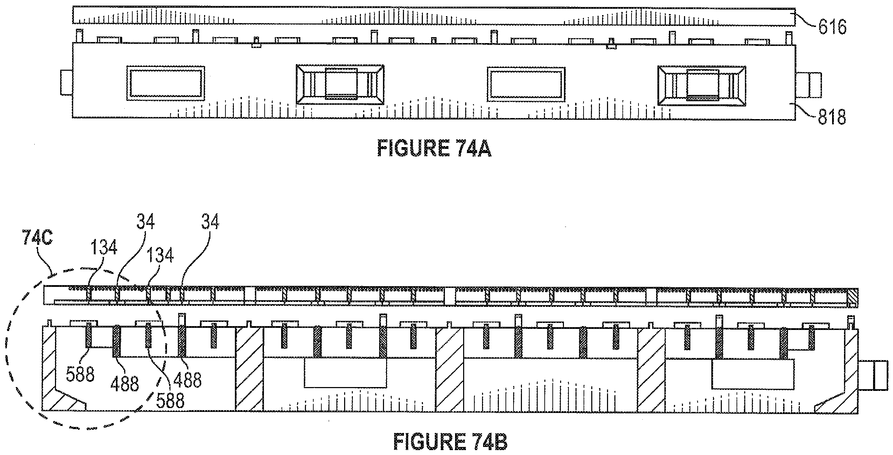

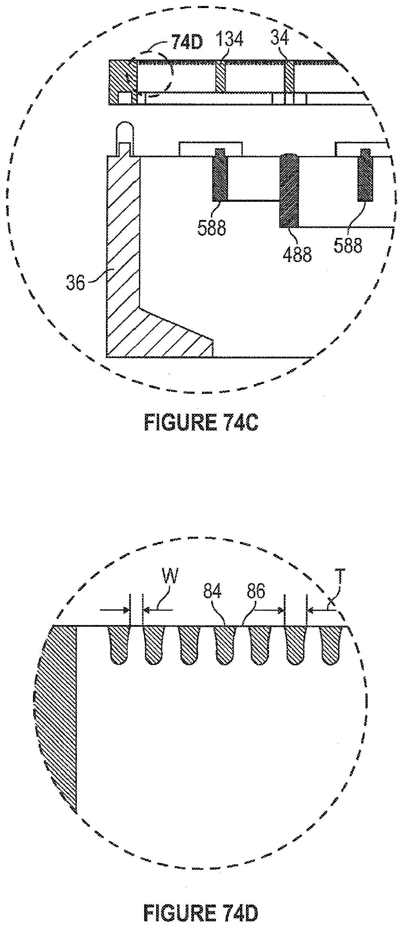

The following discussion provides further details of screen element **616** with reference to Figures 73 to 73D and 74 to 74D. As mentioned above, screen element **616** is similar to screen element **516** in that it is twice as long and half as wide as screen element **416** (e.g., compare relative dimensions of screen elements **416** in Figure 61 to screen element **516** in Figure 67). The smaller width allows manufacturing of screens **616** having smaller features such as smaller screening openings **86** and smaller surface elements **84** (e.g., see Figure 2D).

Figure 73 illustrates a top-down view of a screen element **616,** previously illustrated, for example, in Figures 70A, 71F, and 72C. Figure 73 defines a first cross section direction A to A and a second cross section direction C to C. Figure 73A illustrates a first cross section of the screen element **616** of Figure 73 defined by the first cross section direction A to A of Figure 73. The view of Figure 73A is drawn with a 2:1 scale. Cross section A to A of Figure 73A illustrates a plurality of reinforcement members **132** (e.g., see the discussion related to Figure 70A) that are parallel to side edges **122** of screen element **616.** Figure 73B illustrates an enlarged view of a portion "B" of the first cross section illustrated in Figure 73A. Figure 73B also shows reinforcement members **132.**

Figure 73C illustrates a second cross section of the screen element **616** of Figure 73 defined by the second cross section direction C to C of Figure 73. The view of Figure 73C is drawn with a 2:1 scale and illustrates reinforcement members **34** and **134** (e.g., see the discussion related to Figures 70A, 71F, and 72C) that are parallel to end portions **120** of screen element **616.** Figure 73D illustrates an enlarged view of the second cross section of screen element **616** illustrated in Figure 73C. Figure 73D illustrates a plurality of screening openings **86** and surface elements **84,** in addition to the reinforcement members **34** and **134** shown in Figure 73C. Details of the screening openings **86** and surface elements **84** are described in greater detail below with reference to Figures 74C and 74D.

Figure 74 illustrates a top-down view of the center screen subassembly formed by attaching screen element **616** to an end subgrid unit **818,** similar to screen subassembly **960** shown in Figure 68A. Figure 74 defines a cross sectional direction A to A, which is used to define views in Figures 74B, 74C, and 74D. Figure 74A illustrates a side view of center screen subassembly **960** of Figure 74 showing screen element **616** and end subgrid unit **818.** For the purpose of illustration, screen element **616** is shown positioned slightly above end subgrid unit **818.**

Figure 74B illustrates a cross section of the center screen subassembly of Figure 74 defined by the cross section direction A to A of Figure 74. Figure 74B also illustrates a region of detail "B" that is enlarged in Figures 74C and 74D. Elements of support frameworks **488** and **558** are also shown. As described above, elements of support frameworks **488** and **588** spatially align and provide support for reinforcement members **34** and **134** of screen element **516,** respectively.

Figure 74C illustrates an enlarged view of the portion "B" of the cross section of center screen subassembly of Figure 74B. Figure 74C shows detail similar to that shown in Figure 10C. In this regard, Figure 74C illustrates a subgrid end member **36,** a secondary subgrid support member **488,** and a tertiary subgrid support framework **588** (e.g., see Figures 71, 71A, 71B, 71C, 71D and 71F). Figure 74C also illustrates reinforcement members **34** and **134,** shown above in Figure 73D. The detail region labeled "C" in Figure 74C shown in an enlarged view in Figure 74D.

Figure 74D illustrates a cross sectional view of a plurality of surface elements **84** separated by a series of screening openings **86.** As described above with reference to Figure 2D, surface elements **84** have a thickness **T,** which may vary depending on the screening application and configuration of the screening openings **86. T** may be chosen depending on the open screening area desired and the width **W** of screening openings **86.** The screening openings **86** are elongated slots having a length **L** and a width **W** (e.g., see Figure 2D), which may be varied for a chosen configuration. The slots, having length **L** (e.g., see Figure 2D for definition of **L,** not shown in Figure 74D), extend substantially into the plane of Figure 74D and are shown horizontally in Figure 2D.

Table 1. (below) illustrates the percent open area of example embodiments of screen assemblies including screen element **616,** as a function of parameters **W, T,** and **L,** describing the width of screen openings **86,** the width of surface elements **84,** and the length of screen openings **86,** respectively. As described above, the percent open area shown below is achieved by generating example screen assemblies that include elements **616** and example subgrid structures (e.g., subgrids **818** and **918**) having corresponding structural elements to support screen elements **616.** In this way, appropriately designed screen elements **616** and subgrid structures (e.g., subgrids **818** and **918)** work together to maximize open screening area.

In this example, surface elements **84** have a fixed thickness **T** = 0.014 in. Screening openings **86** have a fixed length **L** = 0.076 in and variable width **W.** As may be expected, for a fixed number of screen openings **86,** the percent open area decreases with the width **W** of each screen opening **86.** In this example, the percent open area varies from a minimum of 6.2% open area, for the smallest width **W** = 0.0017 in, to a maximum of 23.3% open area for the largest width **W =** 0.0071.

| mesh | **W** (in) | **T** (in) | **L** (in) | % open area |
|---|---|---|---|---|
| 80 | 0.0071 | 0.014 | 0.076 | 23.3 |
| 100 | 0.0059 | 0.014 | 0.076 | 20.3 |
| 120 | 0.0049 | 0.014 | 0.076 | 17.6 |
| 140 | 0.0041 | 0.014 | 0.076 | 13.4 |
| 170 | 0.0035 | 0.014 | 0.076 | 12.2 |
| 200 | 0.0029 | 0.014 | 0.076 | 10.3 |
| 230 | 0.0025 | 0.014 | 0.076 | 9.1 |
| 270 | 0.0021 | 0.014 | 0.076 | 7.9 |
| 325 | 0.0017 | 0.014 | 0.076 | 6.2 |
| **Table 1.** | | | | |

Table 2. (below) illustrates the percent open area of further example embodiments of screen assemblies including screen element **616,** as a function of parameters **W, T,** and **L.** As described above, the percent open area shown below is achieved by generating example screen assemblies that include elements **616** and example subgrid structures (e.g., subgrids **818** and **918)** having corresponding structural elements to support screen elements **616.**

Table 2 illustrates the effect of reducing the length **L** of screening openings **86** and reducing the width **T** of surface elements **84** so that screen element **616** may include more screen elements. In this example, surface elements **84** have a fixed thickness **T** = 0.007 in. Screening openings **86** have a fixed length **L** = 0.046 in and variable width **W.** The resulting percent open area varies from a minimum of 10.1% open area, for the smallest width **W** = 0.0017 in, to a maximum of 27.3% open area for the largest width **W** = 0.0071. Thus, the maximum percent open area is increased from 23.3% to 27.3% by reducing **T** from 0.014 in to 0.007 in, and by reducing **L** from 0.076 in to 0.046 in, as seen by comparing the results of Table 2 with those of Table 1. As mentioned above, the increase in maximum percent open area occurs because when the screening openings **86** and surface features are reduced in size, more screening openings may be included on screen element **516.**

| mesh | **W** (in) | **T** (in) | **L** (in) | % open area |
|---|---|---|---|---|
| 80 | 0.0071 | 0.007 | 0.046 | 27.3 |
| 100 | 0.0059 | 0.007 | 0.046 | 25.2 |
| 120 | 0.0049 | 0.007 | 0.046 | 23.1 |
| 140 | 0.0041 | 0.007 | 0.046 | 20.5 |
| 170 | 0.0035 | 0.007 | 0.046 | 18.5 |
| 200 | 0.0029 | 0.007 | 0.046 | 16.5 |
| 230 | 0.0025 | 0.007 | 0.046 | 14.9 |
| 270 | 0.0021 | 0.007 | 0.046 | 12.8 |
| 325 | 0.0017 | 0.007 | 0.046 | 10.1 |
| **Table 2.** | | | | |

Table 3. (below) illustrates the percent open area of further example embodiments of screen assemblies including screen element **616,** as a function of parameters **W, T,** and **L.** As described above, the percent open area shown below is achieved by generating example screen assemblies that include elements **616** and example subgrid structures (e.g., subgrids **818** and **918)** having corresponding structural elements to support screen elements **616.**

Table 3 shows that the trend may be continued. In this example, surface elements **84** have a fixed thickness **T** = 0.005 in. Screening openings **86** have a fixed length **L** = 0.032 in and variable width **W.** The resulting percent open area varies from a minimum of 12.1% open area, for the smallest width **W** = 0.0017 in, to a maximum of 31.4% open area for the largest width **W** = 0.0071. Thus, by reducing **T** from 0.007 in to 0.005 in, and by reducing L from 0.046 in to 0.032 in, the maximum percent open area is increased from 27.3% to 31.4%, as seen by comparing the results of Table 3 with those of Table 2.

| mesh | **W** (in) | **T** (in) | **L** (in) | % open area |
|---|---|---|---|---|
| 80 | 0.0071 | 0.005 | 0.032 | 31.4 |
| 100 | 0.0059 | 0.005 | 0.032 | 29.3 |
| 120 | 0.0049 | 0.005 | 0.032 | 27.0 |
| 140 | 0.0041 | 0.005 | 0.032 | 24.1 |
| 170 | 0.0035 | 0.005 | 0.032 | 22.0 |
| 200 | 0.0029 | 0.005 | 0.032 | 19.7 |
| 230 | 0.0025 | 0.005 | 0.032 | 16.4 |
| 270 | 0.0021 | 0.005 | 0.032 | 14.7 |
| 325 | 0.0017 | 0.005 | 0.032 | 12.1 |
| **Table 3.** | | | | |

Table 4. (below) illustrates the percent open area of further example embodiments of screen assemblies including screen element **616,** as a function of parameters **W, T,** and **L.** As described above, the percent open area shown below is achieved by generating example screen assemblies that include elements **616** and example subgrid structures (e.g., subgrids **818** and **918)** having corresponding structural elements to support screen elements **616.**

Table 4 shows further increase in percent open area as **T** and **L** are reduced. In this example, surface elements **84** have a fixed thickness **T** = 0.003 in. Screening openings **86** have a fixed length **L** = 0.028 in and variable width **W.** The resulting percent open area varies from a minimum of 13.2% open area, for the smallest width **W** = 0.0017 in, to a maximum of 32.2% open area for the largest width **W** = 0.0071. Thus, by reducing **T** from 0.005 in to 0.003 in, and by reducing **L** from 0.032 in to 0.028 in, the maximum percent open area is increased from 31.4% to 32.2%, as seen by comparing the results of Table 4 with those of Table 3.

| mesh | **W** (in) | **T** (in) | **L** (in) | % open area |
|---|---|---|---|---|
| 80 | 0.0071 | 0.003 | 0.028 | 32.2 |
| 100 | 0.0059 | 0.003 | 0.028 | 30.1 |
| 120 | 0.0049 | 0.003 | 0.028 | 27.8 |
| 140 | 0.0041 | 0.003 | 0.028 | 25.2 |
| 170 | 0.0035 | 0.003 | 0.028 | 23.1 |
| 200 | 0.0029 | 0.003 | 0.028 | 20.1 |
| 230 | 0.0025 | 0.003 | 0.028 | 17.2 |
| 270 | 0.0021 | 0.003 | 0.028 | 15.3 |
| 325 | 0.0017 | 0.003 | 0.028 | 13.2 |
| **Table 4.** | | | | |

According to embodiments, multiple subassemblies may be secured together to form screen assemblies having a desired total screening area. For example, multiple subgrids secured together to form the screen assembly having a screening surface that has a total screening area in a range of approximately 0.4 m² to 6.0 m². In various embodiments, screen assemblies may be constructed having total screening areas of: 0.41 m², 0.68 m², 0.94 m², 3.75 m², 4.08 m², 4.89 m², and 5.44 m². In further example embodiments, screen assemblies may be constructed having virtually any total screening area by appropriate choice of a size of screening subassemblies and a total number of screening subassemblies.

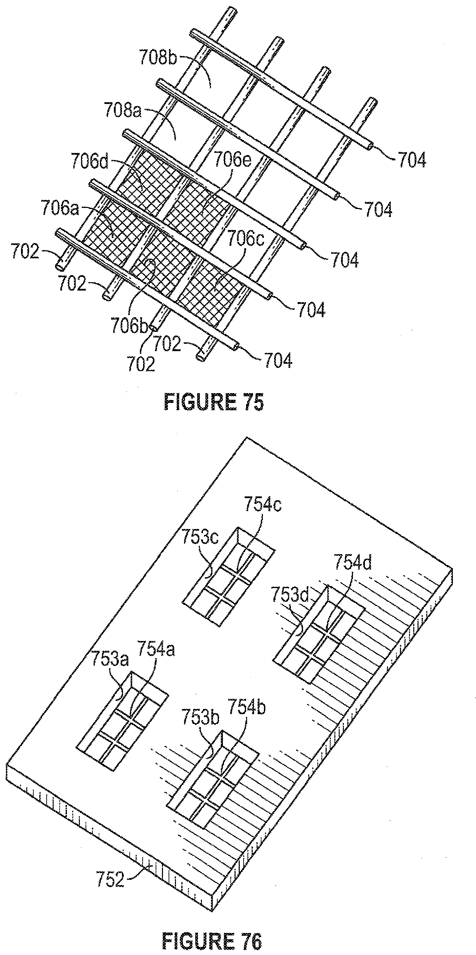

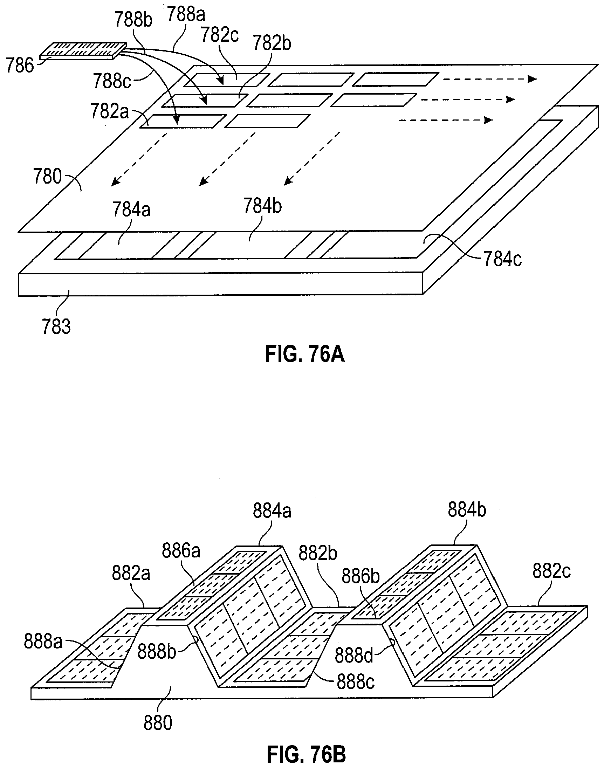

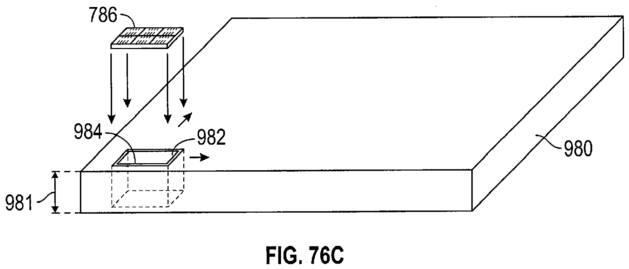

Figures 75 and 76 illustrate different embodiments in which alternate strategies may be employed for combining screen elements to form screening assemblies. Figure 75, for example, illustrates as system including a first **702** and a second **704** plurality of rails. The first plurality **702** of rails may be configured to be substantially parallel to one another. Likewise, the second **704** plurality of rails may be configured to be substantially parallel to one another. Further, the first plurality of rails may be configured to be substantially perpendicular to the second plurality **704** of rails. In this way, the first **702** and second **704** plurality of rails forms a rectangular grid framework.

Rather than binding screen subassemblies (e.g., subassembly 760 of Figure 62A, subassembly **860** of Figure 67A, etc) together using clips (e.g., clips **42** of Figure 3, clips **142** of Figure 60, clips **242** of Figure 63, etc.), to form screen assemblies (e.g., screen assembly **10** of Figure 1, screen assembly **410** of Figure 47, screen assembly **510** of Figure 58, etc.), screen seemblies may be formed by attaching screen subassemblies to rails **702** and **704.** In this example, Figure 75 illustrates screen subassemblies **706a, 706b, 706c, 706d,** and **706e** that have been attached to rectangular regions formed by the grid framework formed by the first **702** and second **704** pluralities of rails. Additional screen subassemblies may further be attached to additional open areas, such as open areas **708a, 708b,** etc., of the grid framework of Figure 75.

Figure 76 illustrates a further embodiment in which screen elements may be attached directly to a plate structure **752** without the need to first attach the screen elements to subgrids. In this example, a plate **752** may be provided that has a plurality of window apertures **753a, 753b, 753c,** and **753d.** The window apertures **753a** to **753d** may be formed into the plate structure **752** by removing portions of the plate **752** material so that window apertures **753a** to **753d** include respective grid frameworks **754a, 754b, 754c,** and **754d.** The grid frameworks **754a, 754b, 754c,** and **754d** may serve as structures that may provide support for screen elements that may be attached thereto. In this way, the grid frameworks **754a, 754b, 754c,** and **754d** may act in the same way as the above-described subgrids of other embodiments. The window apertures **753a** to **753d** are shown as an exemplary embodiment of the concept. In other embodiments, plate structure **752** may have many more window apertures that may be closely spaced so that a screen assembly may be formed having large open area as described above with reference to other embodiments.

Figure 76A illustrates screen elements **786** configured to be directly attached to a punched plate **780,** according to an embodiment. In this embodiment, plate **780** may be a metal plate that has been mechanically punched to remove material to create apertures **782a, 782b, 782c,** etc. In this example, apertures **782a, 782b,** and **782c,** etc., are rectangular apertures. In other embodiments, different shaped apertures may be provided. Plate **780** may be configured to be attached to a support structure **783.** Support structure **783** may be a metal or plastic frame having a plurality of openings **784a, 784b, 784c,** etc. Apertures **782a, 782b,** and **782c,** may be configured to accommodate a plurality of similarly sized screen elements **786.**

In this example, screen element **786** may be a 1 x 6 screen element that may be similar to screen elements **516** and **616.** A screen assembly may be generated by attaching a plurality of screening elements **786** to plate **780.** In this regard, a plurality of screen elements **786** may attached to apertures **782a, 782b,** and **782c,** as indicated by arrows **788a, 788b,** and **788c.** Screen elements **786** may be attached to plate **780** by gluing edges of screen elements **786** to corresponding edges of apertures **782a, 782b,** and **782c.** Alternatively, screen elements **786** may molded into plate 780 by placing them into apertures **782a, 782b, 782c,** etc., and pouring a thermoset material around their perimeters. In an alternative embodiment, screen elements **786** may have a size specifically designed so that screen elements **786** may be snapped into place into apertures **782a, 782b,** and **782c** and held in place by compressive forces exerted by edges of apertures **782a, 782b, 782c,** etc.

Figure 76B illustrates screen elements configured to be directly attached to a corrugated punched plate, according to an embodiment. In this example, plate **880** may have a corrugated shape. Plate **880** may be configured to be attached to a support structure **783** (e.g., see Figure 76A). In this regard, plate **880** may have a plurality of flat surfaces **882a, 882b, 882c,** etc. Flat surfaces **882a, 882b, 882c,** etc., may be separated by raised features **884a, 884b,** etc. Raised features **884a, 884b,** etc., may include respective flat surfaces **886a, 886b,** etc., as well as respective angled surfaces **888a, 888b, 888c, 888d,** etc. Each of the flat surfaces **882a, 882b, 882c,** etc., may include punched apertures, as described above with reference to Figure 76A. Similarly, raised features **884a, 884b,** etc., may include punched apertures on respective flat surfaces **886a, 886b,** etc. Likewise, raised features **884a, 884b,** etc., may include punched apertures on respective angled surfaces **888a, 888b, 888c, 888d,** etc.

Each of the apertures on flat surfaces **882a, 882b, 882c,** etc., on flat surfaces **886a, 886b,** etc., and on angled surfaces **888a, 888b, 888c, 888d,** etc., may be configured to accommodate screen elements, such as screen element **786** illustrated, for example, in Figure 76A. As described above, screen elements **786** may be attached to apertures of corrugated plate **880** by gluing. Similarly, screen elements **786** may be molded into corrugated plate **880** by placing them into apertures and pouring a thermoset material around their perimeters. Similarly, screen elements **786** may be snapped into apertures and held in place by compressive forces.

Figure 76C illustrates a frame **980** having pockets to accommodate screen elements, according to an embodiment. In this example, support structure **980** may be a thermoplastic molded frame. Support structure may be a single injection molded piece having a thickness **981** and may be configured to contain a plurality of apertures or pockets **982.** In other embodiments, support structure **980** may be a metal frame. Thickness **981** may be about 0.125 inches to about 2 inches thick. In this example, pockets **982** are rectangular openings. In other embodiments, other shaped pockets may be provided. Pockets **982** may include edges **984** that may be configured to accommodate edges of a screen element **786.** As shown in Figure 76C, screen element may be placed over pockets **982** and may be attached to edges **984** by gluing. Similarly, as described above with reference to Figures 76A and 76B, screen element **786** may be molded into support structure **980** by placing screen elements **786** into pockets **982** and pouring a thermoset material around a perimeter of screen element **786** to thereby form a bond between edges of screen element **786** and edges **984** of pockets **982.** Similarly, screen elements **786** may be snapped into apertures and held in place by compressive forces.

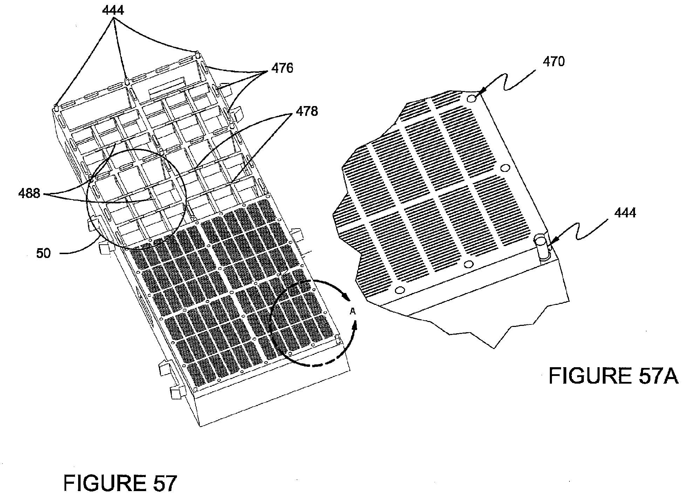

The embodiments of Figures 75 and 76 to 76C demonstrate that many different support structures may be provided for screen elements, in addition to the subgrid structures described above with reference to Figures 3 to 4A, 10, 10A, 11, 11A, 22, 22A, 23 to 24D, 34, 35, 49 to 57A, 59 to 63A, 64 to 65A, 67 to 68A, and 71 to 72C. A support structure need only provide sufficient mechanical and thermal stability to screening elements. The embodiments of Figures 75 and 76A to 76C may also allow a wider selection of materials to be used in generating screening members. In some embodiments, it may be advantageous to attach screen elements to subgrid structures using laser welding, as described in greater detail above. In this regard, certain subgrid structures (e.g., some of embodiments illustrated in Figures 3 to 4A, 10, 10A, 11, 11A, 22, 22A, 23 to 24D, 34, 35, 49 to 57A, 59 to 63A, 64 to 65A, 67 to 68A, and 71 to 72C) may have material properties that are complementary to the material properties of a screening element.

For embodiments in which screen elements are to be joined to subgrid structures using laser welding, screen elements should be optically transparent while subgrid structures should have optical properties that absorb electromagnetic radiation. In this way, laser light may pass through a screen element and may be absorbed by the optically absorbing material of the subgrid structure. Electromagnetic radiation absorbed by the subgrid structure generates heat that locally melts material of the subgrid structure. Upon cooling, a bond is formed between the screen element and the subgrid structure. The need to have an optically transparent screen element places constraints on material compositions used to generate screen elements. In this regard, glass fibers that are transparent may be used as reinforcing filler material. However, other filler materials such as carbon fibers should not be used as they are not transparent.

The embodiments of Figures 75 to 76C may use joining methods other than laser welding, such as gluing, as described above. Thus, using joining techniques that do not rely on laser welding removes the restriction that the screening elements should be optically transparent. In this regard, a wider selection of materials may be used to generate screening elements, such as carbon fibers mentioned above. Filler materials are generally used to strengthen material properties of screen elements, however, the presence of filler materials and other additives tends to degrade cut, abrasion, and tear resistance, properties of the material. Thus, depending on the support structure, the screening element may need more or less filler material. Therefore, certain material properties, such as cut, abrasion, and tear resistance, may be improved in situations requiring less filler material. For example, higher temperatures (e.g., > 54° C for mining operations, > 90° C for oil and gas operations) generally require more filler material to improve material strength. For situations involving lower temperatures and stronger support structures, however, less filler material may needed. For such situations, material properties such as cut, abrasion, and tear resistance, may be improved.

There are many ways to generate screening assemblies using support structures in embodiments illustrated in Figures 75 to 76C. For example, screen elements **786** may be attached to support structures illustrated in Figures 75 to 76C using automated processes, such as using robotic devices to generate screening assemblies. Further, although screening assemblies generated using subgrid structures (e.g., such as illustrated in Figures 3 to 4A, 10, 10A, 11, 11A, 22, 22A, 23 to 24D, 34, 35, 49 to 57A, 59 to 63A, 64 to 65A, 67 to 68A, and 71 to 72C) may be replaceable and removable, some screening assemblies may be permanently or semi-permanently attached to screening machines. For example, screening assemblies constructed using support structures illustrated, for example, in Figures 75 to 76C may be bolted or welded into a screening machine as a semi-permanent or permanent structure. Alternatively, embodiments illustrated in Figures 75 to 76C may also be configured to be removable and replaceable components of screening machines.

Many of the above-described embodiment subgrids have location members **444** and fusion bars **476** and **478** (e.g., see Figures 49, 59, 51, 52 - 55, 57, 59 - 65, 68, and 71 - 71B). Similarly, many of the above-described screen elements have location apertures, **424** and **524,** and cavity pockets **472** (e.g, see Figures 45A - 45E, 46, 48B, 48C, 66B, 66C, and 70A). According to the above-described embodiments, screen elements are aligned with subgrids by inserting location members **444** (of subgrids) into location apertures, **424** and **524** (of screen elements), so that fusion bars, **476** and **478** (of subgrids) reside within cavity pockets **472** (of screen elements). Screen elements may then attached to subgrids by melting (e.g., using laser welding, heat staking, etc.) fusion bars, **476** and **478,** to fuse with cavity pockets **472** to form a bond.

The presence of location apertures, **424** and **525,** in screen elements, however, may present problems when manufacturing screen elements using techniques involving thermoplastic injection molding. In this regard, the presence of location apertures, **424** and **524,** may reduce the flow of thermoplastic material during the injection molding process.

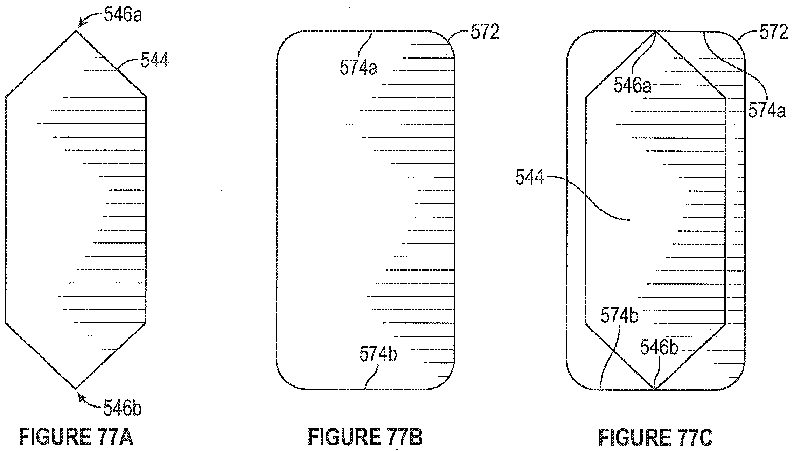

Figures 77A, 77B, and 77C illustrate new embodiments in which location apertures (e.g., **424** and **525** of Figures 45A - 45E, 46, 48B, 48C, 66B, 66C, and 70A) are eliminated from screen elements. According to new embodiments illustrated, for example, in Figures 77A, 77B, and 77C, cavity pockets and fusion bars may be re-designed to play a role formerly played by location apertures and location members, respectively, thus eliminating the need for separate location apertures in screen elements and location members in subgrids. Figure 77A illustrates an embodiment fusion bar **544** having sharp corners **546a** and **546b.** Figure 77B illustrates an embodiment cavity pocket having first **574a** and second **574b** approximately flat internal surfaces. Cavity pocket **572** is designed to be slightly larger than fusion bar **544** so that fusion bar **544** may fit within the shape of cavity pocket **572** when a screen element having cavity pocket **572** is place over a subgrid having fusion bar **544,** as illustrated in Figure 77C.

Figure 77C illustrates an embodiment in which cavity pocket **572** acts as a location aperture and fusion bar **544** acts as a location member. In this regard, sharp points, **546a** and **546b,** of fusion bar **572** make contact with respective approximately flat internal surfaces **574a** and **574b** of cavity pocket **572.** The size and shape of fusion bar **544** allows fusion bar **544** to make close contact with internal surfaces, **546a** and **546b,** of cavity pocket **572.** According to this design, there is little freedom for relative motion between cavity pocket **572** and fusion bar **544.** Thus, as shown in Figure 77C, screen element may be properly aligned on a subgrid through the close tolerance of the alignment between fusion bar **544** and cavity pocket **572.** In this regard, the need for separate location members and location apertures is eliminated.

The embodiments of the present invention described herein, including screening members and screening assemblies, may be configured for use with various different vibratory screening machines and parts thereof, including machines designed for wet and dry applications, machines having multi-tiered decks and/or multiple screening baskets, and machines having various screen attachment arrangements such as tensioning mechanisms (under and overmount), compression mechanisms, clamping mechanisms, magnetic mechanisms, etc. For example, the screen assemblies described in the present disclosure may be configured to be mounted on the vibratory screening machines described in U.S. Patent Nos. 7,578,394; 5,332,101; 6,669,027; 6,431,366; and 6,820,748. Indeed, the screen assemblies described herein may include: side portions or binder bars including U-shaped members configured to receive overmount type tensioning members, e.g., as described in U.S. Patent No. 5,332,101; side portions or binder bars including finger receiving apertures configured to receive undermount type tensioning, e.g., as described in U.S. Patent No. 6,669,027; side members or binder bars for compression loading, e.g., as described in U.S. Patent No. 7,578,394; or may be configured for attachment and loading on multi-tiered machines, e.g., such as the machines described in U.S. Patent No. 6,431,366. The screen assemblies and/or screening elements may also be configured to include features described in U.S. Patent Application Nos. 12/460,200 (now U.S. Patent No. 8,443,984), including the guide assembly technologies described therein and preformed panel technologies described therein. Still further, the screen assemblies and screening elements may be configured to be incorporated into the prescreening technologies (e.g., compatible with the mounting structures and screen configurations) described in U.S. Patent Application No. 12/051,658 (now U.S. Patent No. 8,439,203). U.S. Patent Nos. 7,578,394; 5,332,101; 4,882,054; 4,857,176; 6,669,027; 7,228,971; 6,431,366; and 6,820,748 and U.S. Patent Application Nos. 12/460,200 (now U.S. Patent No. 8,443,984) and 12/051,658 (now U.S. Patent No. 8,439,203), which, along with their related patent families and applications, and the patents and patent applications referenced in these documents, are expressly incorporated herein by reference hereto.

In the foregoing, example embodiments are described. It will, however, be evident that various modifications and changes may be made thereunto without departing from the broader spirit and scope hereof. The specification and drawings are accordingly to be regarded in an illustrative rather than a restrictive sense.

Further embodiments of the invention are set out in the following clauses:
Clause 1. A screen assembly, comprising:
   a subgrid; and
   a screen element attached to the subgrid, the screen element having a screening surface comprising:
      screening openings that are elongated slots having substantially uniform width W and substantially uniform length L, wherein the width W of the screening openings is approximately 40 µm ≤ W ≤ 200 µm and the length L of the screening openings is approximately 0.7 mm ≤ L ≤ 2 mm; and
      surface elements separating the screening openings, the surface elements having a thickness T that is approximately 70 µm ≤ T ≤ 400 µm;
   wherein the screen assembly has an open screening area of approximately 5% to approximately 35% of a total area of the screening surface.
Clause 2. The screen assembly of clause 1, wherein:
   the surface element thickness is T ≈ 356 µm;
   the length of the screening openings is L ≈ 1.9 mm; and
   the open screening area varies approximately from 6% to 24% as the width W of the screening openings varies approximately from 45 µm to 180 µm.
Clause 3. The screen assembly of clause 1, wherein:
   the surface element thickness is T ≈ 178 µm;
   the length of the screening openings is L ≈ 1.2 mm; and
   the open screening area varies approximately from 10% to 28% as the width W of the screening openings varies approximately from 45 µm to 180 µm.
Clause 4. The screen assembly of clause 1, wherein:
   the surface element thickness is T ≈ 127 µm;
   the length of the screening openings is L ≈ 0.8 mm; and
   the open screening area varies approximately from 12% to 32% as the width of the screening openings varies approximately from 45 µm to 180 µm.
Clause 5. The screen assembly of clause 1, wherein:
   the surface element thickness is T ≈ 76 µm;
   the length of the screening openings is L ≈ 0.7 mm; and
   the open screening area varies approximately from 13% to 33% as the width of the screening openings varies approximately from 45 µm to 180 µm.
Clause 6. The screen assembly of clause 1, wherein the screen element is a single thermoplastic injection molded piece.
Clause 7. The screen assembly of clause 1, further comprising:
   multiple subgrids secured together to form the screen assembly having a screening surface that has a total screening area in a range of approximately 0.4 m² to 6.0 m².
Clause 8. The screen assembly of clause 7, wherein subgrids include at least one base member having fasteners that mate with fasteners of other base members of other subgrids and thereby secure the subgrids together.
Clause 9. The screen assembly of clause 8, wherein the fasteners comprise clips and clip apertures that snap into place and thereby securely attach the subgrids together.
Clause 10. The screen assembly of clause 9, wherein the clips comprise at least three extended members that engage with clip apertures to securely attach subgrids together.
Clause 11. The screen assembly of clause 9, wherein the clips comprise a central extended member that engages with clip apertures to securely attach subgrids together.
Clause 12. A screen assembly, comprising:
   multiple screen elements; and
   multiple subgrids, wherein each of the multiple subgrids has at least one base member having clips that mate with clip apertures of other base members of other subgrids and thereby secure the subgrids together,
   wherein at least one screen element is secured to each subgrid, and
   wherein the clips comprise at least three extended members that engage with clip apertures.
Clause 13. The screen assembly of clause 12, wherein the screen assembly has a total screening area in a range of approximately 0.4 m² to 6.0 m².
Clause 14. The screen assembly of clause 12, wherein the screen assembly has an open screening area of approximately 5% to approximately 35% of a total screening area of the screening surface.
Clause 15. A method of fabricating a screen assembly, the method comprising:
   fabricating a subgrid having a grid framework with grid openings and at least one base member having clips that mate with clip apertures of other base members of other subgrids and thereby secure the subgrids together, the clips having at least three extended members that engage with clip apertures;
   injection molding a screen element having a screening surface comprising:
      screening openings that are elongated slots having substantially uniform width W and length L, wherein width W is approximately 40 µm ≤ W ≤ 200 µm and length L is approximately 0.7 mm ≤ L ≤ 2 mm; and
      surface elements separating the screening openings, the surface elements having a thickness T, wherein thickness T is approximately 70 µm ≤ T ≤ 400 µm;
   attaching screen elements to subgrids; and
   securing multiple subgrids together by engaging clips with clip apertures to form the screen assembly having an open screening area of approximately 5% to approximately 35% of a total area of the screening surface.

## Claims

1. A screen assembly, comprising:
one or more subgrid(s); and
one or more thermoplastic screen element(s) attached to the subgrid, the screen element having a screening surface comprising: screening openings; and
surface elements separating the screening openings, the surface elements having a thickness T that is approximately 70 microns < T < 400 microns.

2. The screen assembly of claim 1, wherein the screen assembly has an open screening area of approximately 5% to approximately 35% of a total area of the screening surface.

3. The screen assembly of any preceding claim, wherein one subgrid forms the entire screen assembly support structure for supporting the screen elements.

4. The screen assembly of claim 1 or claim 2, comprising more than one subgrid, wherein the subgrids are fastened together to form the screen assembly support structure for supporting the screen elements.

5. The screen assembly of claim 4, wherein the subgrids are permanently fastened together.

6. The screen assembly of any preceding claim, comprising a plurality of the screen elements.

7. The screen assembly of any preceding claim, wherein each screen element is a single injection molded piece.

8. The screen assembly of any preceding claim, wherein the screen openings have a distance of approximately 70 microns to approximately 180 microns between inner surfaces of adjacent screen surface elements.

9. The screen assembly of any preceding claim, wherein the screen element(s) are affixed to the one or more subgrids by ultrasonic welding.

10. The screen assembly of any preceding claim, wherein the one or more subgrids comprise grid openings and the screen element(s) spans at least one of the grid openings and is attached to a surface of the subgrid.

11. The screen assembly of any preceding claim, wherein the one or more subgrids include multiple elongated structural members forming a grid framework defining grid openings.

12. A method of fabricating the screen assembly of any preceding claim, wherein each screen element is injection molded.

13. The method of claim 12, comprising the step of forming a continuous screen assembly screening surface from multiple screen element screening surfaces.

14. The method of claim 13, further comprising: laser welding the one or more screen elements to the one or more subgrids.

15. The method of claims 12 to 15, further comprising: attaching multiple subgrids together to form the screen assembly.

16. A method for screening a material comprising the steps of:
providing the screen assembly of any one of claims 1 to 11 or a screen assembly fabricated using the method of any one of claims 12 to 15;
attaching the screen assembly to a vibratory screening machine; and
screening material using the screen assembly.

17. The method of claim 16, comprising forming a top screening surface of the screen assembly into a concave shape.
